# EUROPEAN PATENT APPLICATION

(11) **EP 4 836 412 A1**
(43) Date of publication of application: **04.11.2026**
(21) Application number: 23962658.3
(22) Date of filing: 27.12.2023
(51) Int. Cl.: H04N 19/593, H04N 19/159

(54) **ENCODING METHOD, DECODING METHOD, ENCODER, DECODER, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HUO, Junyan, Dongguan, Guangdong 523860 (CN); MA, Yanzhuo, Dongguan, Guangdong 523860 (CN); YANG, Fuzheng, Dongguan, Guangdong 523860 (CN); FAN, Jiawei, Dongguan, Guangdong 523860 (CN); LI, Ming, Dongguan, Guangdong 523860 (CN)
(74) Representative: Taor, Simon Edward William
(86) International application number: PCT/CN2023/142541
(87) International publication number: WO 2025/137976

(57) **Abstract**

An encoding method, a decoding method, an encoder, a decoder, and a storage medium are provided in embodiments of the disclosure. The decoding method includes the following. A prediction parameter of a current block is determined, where the prediction parameter of the current block includes a first indication parameter. If the first indication parameter indicates that a decoder-side intra mode derivation (DIMD) merge mode is to be used for decoding the current block, a direction parameter to be merged is determined according to one or more candidate positions, where the one or more candidate positions are located in a reconstructed region of a picture where the current block is located. A prediction value of the current block is determined according to the direction parameter to be merged.

## Description

### TECHNICAL FIELD

This disclosure relates to the field of video coding technology, in particular to an encoding method, a decoding method, an encoder, a decoder, and a storage medium.

### BACKGROUND

A decoder-side intra mode derivation (DIMD) merge mode is an efficient intra prediction mode (IPM). In the DIMD merge mode, a dominant IPM (or prediction direction) is derived based on a direction parameter of a neighbouring coding block of a current block, and a prediction value is generated according to the dominant IPM. However, in the related art, the IPM derived in the DIMD merge mode is not accurate enough, which reduces the accuracy of prediction.

### SUMMARY

An encoding method, a decoding method, an encoder, a decoder, and a storage medium are provided in embodiments of the disclosure, so as to improve the accuracy of prediction. Various aspects involved in this disclosure will be introduced below.

In a first aspect, a decoding method is provided. The method is applied to a decoder and includes the following. A prediction parameter of a current block is determined, where the prediction parameter of the current block includes a first indication parameter. If the first indication parameter indicates that a decoder-side intra mode derivation (DIMD) merge mode is to be used for decoding the current block, a direction parameter to be merged is determined according to one or more candidate positions, where the one or more candidate positions are located in a reconstructed region of a picture where the current block is located. A prediction value of the current block is determined according to the direction parameter to be merged.

In a second aspect, an encoding method is provided. The method is applied to an encoder and includes the following. Whether a DIMD merge mode is to be used for encoding a current block is determined. If the DIMD merge mode is to be used for encoding the current block, a direction parameter to be merged is determined according to one or more candidate positions, where the one or more candidate positions are located in a reconstructed region of a picture where the current block is located. A prediction value of the current block is determined according to the direction parameter to be merged.

In a third aspect, a decoder is provided. The decoder includes a first determining unit, a second determining unit, and a third determining unit. The first determining unit is configured to determine a prediction parameter of a current block, where the prediction parameter of the current block includes a first indication parameter. The second determining unit is configured to determine, according to one or more candidate positions, a direction parameter to be merged, if the first indication parameter indicates that a DIMD merge mode is to be used for decoding the current block, where the one or more candidate positions are located in a reconstructed region of a picture where the current block is located. The third determining unit is configured to determine a prediction value of the current block according to the direction parameter to be merged.

In a fourth aspect, a decoder is provided. The decoder includes a memory and a processor. The memory is configured to store a computer program. The processor is configured to perform the method in the first aspect when executing the computer program.

In a fifth aspect, an encoder is provided. The encoder includes a first determining unit, a second determining unit, and a third determining unit. The first determining unit is configured to determine whether a DIMD merge mode is to be used for encoding a current block. The second determining unit is configured to determine, according to one or more candidate positions, a direction parameter to be merged, if the DIMD merge mode is to be used for encoding the current block, where the one or more candidate positions are located in a reconstructed region of a picture where the current block is located. The third determining unit is configured to determine a prediction value of the current block according to the direction parameter to be merged.

In a sixth aspect, an encoder is provided. The encoder includes a memory and a processor. The memory is configured to store a computer program. The processor is configured to perform the method in the second aspect when executing the computer program.

In a seventh aspect, a computer-readable storage medium is provided. The computer-readable storage medium is configured to store a computer program which, when executed, is operable to implement the method in the first aspect or the method in the second aspect.

In an eighth aspect, a computer program product is provided. The computer program product includes a computer program which, when executed, is operable to implement the method in the first aspect or the method in the second aspect.

In a ninth aspect, a non-volatile computer-readable storage medium storing a bitstream is provided. The bitstream is generated according to an encoding method for an encoder or decoded according to a decoding method for a decoder. The decoding method is the method in the first aspect, and the encoding method is the method in the second aspect.

In embodiments of the disclosure, a direction parameter to be merged is searched for at more candidate positions or in a larger search region, which contributes to improving the accuracy of an intra prediction mode (IPM) derived in a DIMD merge mode, thereby improving the accuracy of prediction.

### BRIEF DESCRIPTION OF THE DRAWINGS

FIG. 1 is a schematic structural diagram of a video encoder to which embodiments of the disclosure are applicable.
FIG. 2 is a schematic structural diagram of a video decoder to which embodiments of the disclosure are applicable.
FIG. 3 is a schematic diagram illustrating a prediction process in a decoder-side intra mode derivation (DIMD)-related mode.
FIG. 4 is a diagram of an example manner of determining a prediction value in a DIMD-related mode.
FIG. 5 is a diagram of an example manner of deriving a histogram of gradients for a current block in a DIMD merge mode.
FIG. 6 is a diagram of example candidate positions in a DIMD merge mode.
FIG. 7A is another diagram of example candidate positions in a DIMD merge mode.
FIG. 7B is yet another diagram of example candidate positions in a DIMD merge mode.
FIG. 8 is a schematic flowchart of a decoding method provided in embodiments of the disclosure.
FIG. 9A is a diagram of example candidate positions in a DIMD merge mode provided in embodiments of the disclosure.
FIG. 9B is another diagram of example candidate positions in a DIMD merge mode provided in embodiments of the disclosure.
FIG. 10 is a schematic flowchart of an encoding method provided in embodiments of the disclosure.
FIG. 11 is a schematic structural diagram of a decoder provided in an embodiment of the disclosure.
FIG. 12 is a schematic structural diagram of a decoder provided in another embodiment of the disclosure.
FIG. 13 is a schematic structural diagram of an encoder provided in an embodiment of the disclosure.
FIG. 14 is a schematic structural diagram of an encoder provided in another embodiment of the disclosure.

### DETAILED DESCRIPTION

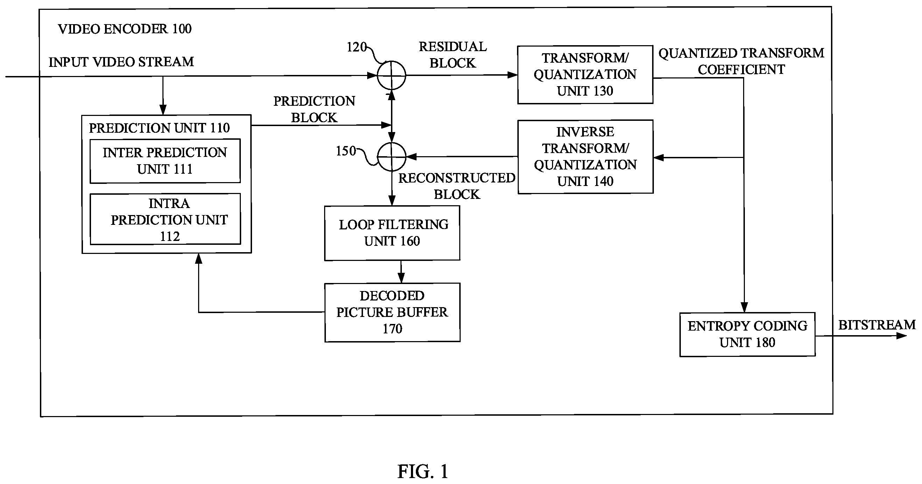

FIG. 1 is a schematic block diagram of a video encoder involved in embodiments of the disclosure.

It may be understood that, the video encoder 100 can be used for performing lossy compression or lossless compression on a picture. The lossless compression may be visually lossless compression or mathematically lossless compression.

The video encoder 100 may be applied to picture data in luma-chroma (YCbCr, YUV) format. For example, a YUV ratio may be 4:2:0, 4:2:2, or 4:4:4, where Y represents luminance (Luma), Cb (U) represents blue chrominance, and Cr (V) represents red chrominance. U and V represent chrominance (Chroma) for describing colour and saturation. For example, in terms of colour format, 4:2:0 represents that every 4 pixels have 4 luma components and 2 chroma components (YYYYCbCr), 4:2:2 represents that every 4 pixels have 4 luma components and 4 chroma components (YYYYCbCrCbCr), and 4:4:4 represents full pixel display (YYYYCbCrCbCrCbCrCbCr).

For example, the video encoder 100 reads video data, and for each picture in the video data, partitions the picture into several coding tree units (CTUs). In some examples, the CTU may be called "tree block", "largest coding unit" (LCU), or "coding tree block" (CTB). Each CTU may be associated with a sample block of the same size as the CTU within the picture. Each pixel may correspond to one luminance (luma) sample and two chrominance (chroma) samples. Thus, each CTU may be associated with one luma sample block and two chroma sample blocks. The CTU may have a size of 128×128, 64×64, 32×32, and so on. The CTU may be further partitioned into several coding units (CUs) for coding. The CU may be a rectangular block or a square block. The CU may be further partitioned into a prediction unit (PU) and a transform unit (TU), so that coding, prediction, and transformation are separated, and thus processing is more flexible. In an example, the CTU is partitioned into CUs in a quadtree manner, and the CU is partitioned into TUs and PUs in a quadtree manner.

The video encoder and video decoder can support various PU sizes. Assuming that a size of a specific CU is 2N×2N, the video encoder and video decoder can support PUs of 2N×2N or N×N for intra prediction, and support symmetric PUs of 2N×2N, 2N×N, N×2N, N×N, or similar size for inter prediction. The video encoder and video decoder can also support asymmetric PUs of 2N×nU, 2N×nD, nL×2N, or nR×2N for inter prediction.

In some embodiments, as illustrated in FIG. 1, the video encoder 100 may include a prediction unit 110, a residual unit 120, a transform/quantization unit 130, an inverse transform/quantization unit 140, a reconstruction unit 150, a loop filtering unit 160, a decoded picture buffer 170, and an entropy coding unit 180. It may be noted that, the video encoder 100 may include more, less, or different functional components.

Optionally, in the disclosure, a current block may be referred to as a current CU or a current PU, etc. A prediction block may be referred to as a prediction picture block or a picture prediction block, and a reconstructed picture block may be referred to as a reconstructed block or a picture reconstructed block.

In some embodiments, the prediction unit 110 includes an inter prediction unit 111 and an intra prediction unit 112. Since there is a strong correlation between neighbouring samples in a video picture, intra prediction is used in the video coding technology to eliminate spatial redundancy between neighbouring samples. Since there is a strong similarity between neighbouring pictures in video, inter prediction is used in the video coding technology to eliminate temporal redundancy between neighbouring pictures, thereby improving coding efficiency.

The inter prediction unit 111 can be used for inter prediction. The inter prediction may include motion estimation and motion compensation, and reference can be made to picture information of different pictures. In inter prediction, motion information is used to find a reference block from a reference picture, and a prediction block is generated according to the reference block to eliminate temporal redundancy. In inter prediction, motion information is used to find the reference block from the reference picture, and the prediction block is generated according to the reference block. The motion information includes a reference picture list containing the reference picture, a reference picture index, and a motion vector. The motion vector may be an integer-sample motion vector or a fractional-sample motion vector. If the motion vector is the fractional-sample motion vector, interpolation filtering on the reference picture is required to generate a required fractional-sample block. Herein, an integer-sample block or fractional-sample block found in the reference picture according to the motion vector is called the reference block. In some technologies, the reference block may be called a prediction block, and in some technologies, the prediction block will be generated based on the reference block. Generating the prediction block based on the reference block can also be understood as taking the reference block as a prediction block and then processing to generate a new prediction block based on the prediction block.

The intra prediction unit 112 is configured to predict sample information of the current block only with reference to information of the same picture, so as to eliminate spatial redundancy.

There are multiple prediction modes for intra prediction. Taking international digital video coding standard *H* series as an example, H.264/AVC standard includes eight angular prediction modes and one non-angular prediction mode, and H.265/HEVC is extended to include 33 angular prediction modes and two non-angular prediction modes. Intra prediction modes (IPMs) used in HEVC include a planar mode, a direct current (DC) mode, and 33 angular modes, with a total of 35 prediction modes. Intra modes used in VVC include a planar mode, a DC mode, and 65 angular modes, with a total of 67 prediction modes.

It may be noted that with an increase in the number (quantity) of angular modes, intra prediction will be more accurate, which will be more in line with the demand for the development of high-definition and ultra-high-definition digital video.

The residual unit 120 may generate a residual block of the CU based on a sample block of the CU and a prediction block of a PU of the CU. For example, the residual unit 120 may generate the residual block of the CU such that each sample in the residual block has a value equal to a difference between a sample in the sample block of the CU and a corresponding sample in the prediction block of the PU of the CU.

The transform/quantization unit 130 may quantize a transform coefficient. The transform/quantization unit 130 may quantize a transform coefficient associated with a TU of a CU based on a quantization parameter (QP) value associated with the CU. The video encoder 100 may adjust the degree of quantization applied to a transform coefficient associated with the CU by adjusting the QP value associated with the CU.

The inverse transform/quantization unit 140 may perform inverse quantization and inverse transform respectively on the quantized transform coefficient, to reconstruct a residual block from the quantized transform coefficient.

The reconstruction unit 150 may add samples in the reconstructed residual block to corresponding samples in one or more prediction blocks generated by the prediction unit 110, to generate a reconstructed picture block associated with the TU. By reconstructing sample blocks of each TU of the CU in this way, the video encoder 100 can reconstruct the sample block of the CU.

The loop filtering unit 160 is configured to process an inverse-transformed and inverse-quantized sample, compensate distorted information, and provide a better reference for subsequent sample encoding. For example, the loop filtering unit 160 can perform deblocking filtering operations to reduce blocking artifacts of the sample block associated with the CU.

In some embodiments, the loop filtering unit 160 includes a deblocking filtering unit a sample adaptive offset (SAO) unit, and an adaptive loop filter (ALF) unit. The deblocking filtering unit is configured for deblocking, the SAO unit is configured to remove a ringing effect, and the ALF is configured to reduce a reconstruction error.

The decoded picture buffer 170 may store reconstructed sample blocks. The inter prediction unit 111 may use reference pictures containing reconstructed sample blocks to perform inter prediction on PUs of other pictures. In addition, the intra prediction unit 112 may use the reconstructed sample blocks in the decoded picture buffer 170 to perform intra prediction on other PUs in the same picture as the CU.

The entropy coding unit 180 may receive the quantized transform coefficient from the transform/quantization unit 130. The entropy coding unit 180 may perform one or more entropy coding operations on the quantized transform coefficient to generate entropy-coded data.

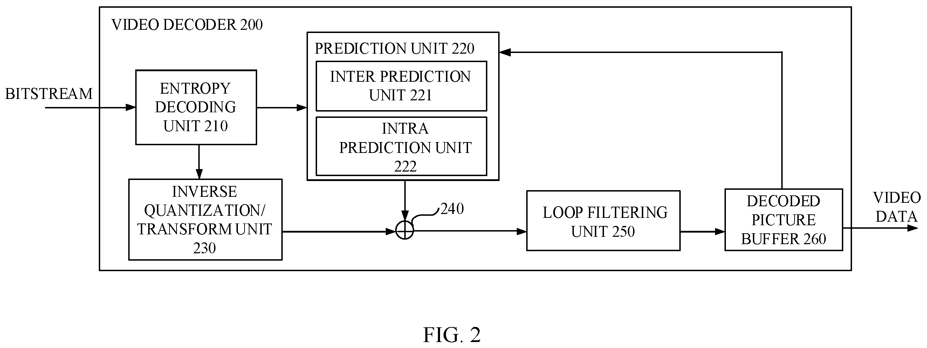

FIG. 2 is a schematic block diagram of a video decoder involved in embodiments of the disclosure.

As illustrated in FIG. 2, the video decoder 200 includes an entropy decoding unit 210, a prediction unit 220, an inverse quantization/transform unit 230, a reconstruction unit 240, a loop filtering unit 250, and a decoded picture buffer 260. It may be noted that, the video decoder 200 may include more, less, or different functional components.

The video decoder 200 may receive a bitstream. The entropy decoding unit 210 may parse the bitstream to extract syntax elements from the bitstream. As part of parsing the bitstream, the entropy decoding unit 210 may parse entropy-coded syntax elements in the bitstream. The prediction unit 220, the inverse quantization/transform unit 230, the reconstruction unit 240, and the loop filtering unit 250 may decode video data according to the syntax elements extracted from the bitstream, that is, generate decoded video data.

In some embodiments, the prediction unit 220 includes an intra prediction unit 222 and an inter prediction unit 221.

The intra prediction unit 222 may perform intra prediction to generate a prediction block of a PU. The intra prediction unit 222 may use an IPM to generate a prediction block of the PU based on a sample block of spatially neighbouring PUs. The intra prediction unit 222 may also determine an IPM for the PU according to one or more syntax elements parsed from the bitstream.

The inter prediction unit 221 can construct a first reference picture list (list 0) and a second reference picture list (list 1) according to the syntax elements parsed from the bitstream. In addition, the entropy decoding unit 210 may parse motion information of the PU if the PU is encoded using inter prediction. The inter prediction unit 221 may determine one or more reference blocks of the PU according to the motion information of the PU. The inter prediction unit 221 may generate a prediction block of the PU based on one or more reference blocks of the PU.

The inverse quantization/transform unit 230 may perform inverse quantization on (i.e., dequantize) a transform coefficient associated with a TU. The inverse quantization/transform unit 230 may use a QP value associated with a CU of the TU to determine the degree of quantization.

After inverse quantization of the transform coefficient, the inverse quantization/transform unit 230 may perform one or more inverse transformations on the inverse-quantized transform coefficients, to generate a residual block associated with the TU.

The reconstruction unit 240 uses the residual block associated with the TU of the CU and the prediction block of the PU of the CU to reconstruct a sample block of the CU. For example, the reconstruction unit 240 may add samples in the residual block to corresponding samples in the prediction block to reconstruct the sample block of the CU to obtain the reconstructed picture block.

The loop filtering unit 250 may perform deblocking filtering to reduce blocking artifacts of the sample block associated with the CU.

The video decoder 200 may store the reconstructed picture of the CU in the decoded picture buffer 260. The video decoder 200 may use the reconstructed picture in the decoded picture buffer 260 as a reference picture for subsequent prediction, or transmit the reconstructed picture to a display apparatus for display.

A basic process of video coding is as follows. At the encoding end, a picture is partitioned into blocks, and for a current block, the prediction unit 110 performs intra prediction or inter prediction to generate a prediction block of the current block. Based on the prediction block and an original block of the current block, the residual unit 120 may calculate a residual block, i.e., a difference between the prediction block and the original block of the current block. The residual block may also be referred to as residual information. The residual block can be transformed and quantized by the transform/quantization unit 130 to remove information that is not sensitive to human eyes, so as to eliminate visual redundancy. Optionally, the residual block before being transformed and quantized by the transform/quantization unit 130 may be called a time-domain residual block, and the time-domain residual block after being transformed and quantized by the transform/quantization unit 130 may be called a frequency residual block or a frequency-domain residual block. The entropy coding unit 180 receives a quantized transform coefficient output by the transform/quantization unit 130, and may perform entropy coding on the quantized transform coefficient to output a bitstream. For example, the entropy coding unit 180 can eliminate character redundancy according to a target context model and probability information of a binary bitstream.

At the decoding end, the entropy decoding unit 210 may parse the bitstream to obtain prediction information, a quantization coefficient matrix, etc., of a current block, and the prediction unit 220 performs intra prediction or inter prediction on the current block based on the prediction information to generate a prediction block of the current block. The inverse quantization/transform unit 230 uses the quantization coefficient matrix obtained from the bitstream to perform inverse quantization and inverse transform on the quantization coefficient matrix to obtain a residual block. The reconstruction unit 240 adds the prediction block and the residual block to obtain a reconstructed block. The reconstructed blocks form a reconstructed picture. The loop filtering unit 250 performs loop filtering on the reconstructed picture on a picture basis or on a block basis to obtain a decoded picture. Similar operations for obtaining the decoded picture at the decoding end are also needed at the encoding end. The decoded picture may also be referred to as a reconstructed picture, and the reconstructed picture may be a reference picture of a subsequent picture for inter prediction.

It may be noted that, block partition information determined at the encoding end, as well as mode information or parameter information for prediction, transformation, quantization, entropy coding, loop filtering, etc., are carried in the bitstream when necessary. The decoding end parses the bitstream and analyzes existing information to determine the block partition information, as well as the mode information or the parameter information for prediction, transformation, quantization, entropy coding, loop filtering, etc. the same as such information at the encoding end, so as to ensure that the decoded picture obtained by the encoding end is the same as the decoded picture obtained by the decoding end.

The above is the basic process of the video codec under a block-based hybrid coding framework. With the development of technology, some modules or operations of the framework or process may be optimized. This disclosure is applicable to the basic process of the video codec under the block-based hybrid coding framework, but is not limited to the framework and process.

The coding framework provided in embodiments of the disclosure is described in detail above. Embodiments of the disclosure mainly relate to a prediction process based on a decoder-side intra mode derivation (DIMD)-related mode. The prediction process may be implemented in the intra prediction unit in the coding framework mentioned above. The DIMD-based prediction process will be introduced in detail below from the perspective of the decoding end.

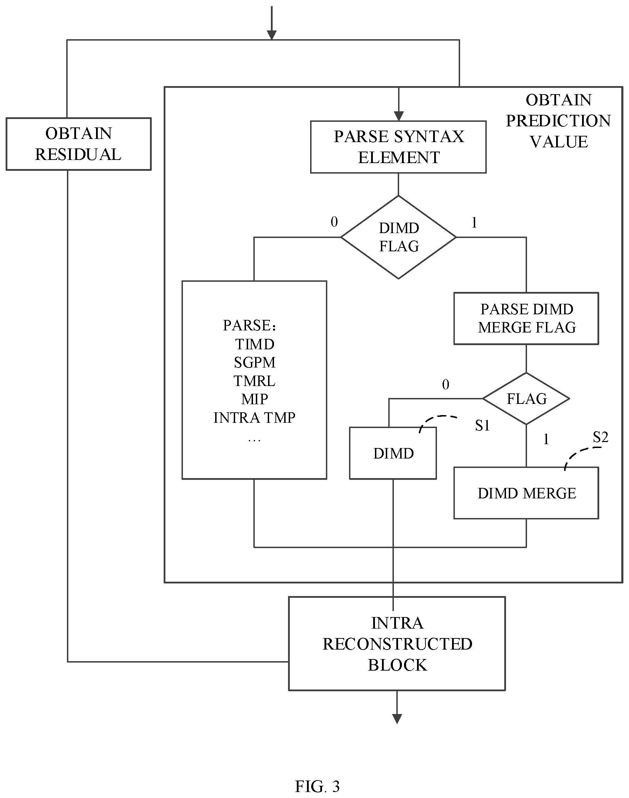

At the decoding end, a basic decoding process for obtaining an intra reconstructed block includes: obtaining a prediction residual by parsing a bitstream, obtaining a prediction value, and determining a reconstructed value. FIG. 3 illustrates an example of an intra prediction process.

As illustrated in FIG. 3, before a reconstructed block of a current block is determined, a prediction value of the current block needs to be first obtained. During obtaining of the prediction value, a DIMD flag is first parsed. The DIMD flag may indicate whether a DIMD-related mode is to be used for the current block. Whether the DIMD-related mode is to be used for the current block to generate the prediction value may be determined according to the DIMD flag.

If an IPM for the current block is the DIMD-related mode (for example, a value of the DIMD flag is 1), a DIMD merge flag may be further parsed to determine whether a DIMD merge mode is to be used for the current block to generate the prediction value. If the IPM for the current block is the DIMD merge mode (for example, a value of the DIMD merge flag is 1), a direction parameter of the current block may be derived based on a direction parameter of a neighbouring block. If the IPM for the current block is a DIMD mode (for example, the value of the DIMD merge flag is 0), a direction parameter may be calculated based on a neighbouring sample. After the direction parameter is obtained, a prediction mode for the current block may be derived according to the direction parameter, to generate the prediction value.

If the DIMD-related mode is not to be used for the current block to generate the prediction value (for example, the value of the DIMD flag is 0), another IPM may be further parsed to generate the prediction value.

### S1: DIMD mode

The DIMD mode is a method in which a dominant IPM (or prediction direction) is derived based on a direction parameter of a neighbouring sample of the current block, and then a prediction value is obtained according to the derived IPM.

### S1.1: Intra mode derivation using DIMD

As a possible implementation, a horizontal gradient and a vertical gradient of a neighbouring reconstructed sample may be calculated using a Sobel operator. A formula of the Sobel operator is illustrated below, where *Gₓ* is used for calculating the horizontal gradient, and *G_{y}* is used for calculating the vertical gradient. ${G}_{x} = \left[\begin{matrix}- 1 & 0 & 1 \\ - 2 & 0 & 2 \\ - 1 & 0 & 1\end{matrix}\right] and {G}_{y} = \left[\begin{matrix}- 1 & - 2 & - 1 \\ 0 & 0 & 0 \\ 1 & 2 & 1\end{matrix}\right]$

The derivation of the IPM through gradient analysis on the neighbouring sample using the Sobel operator will be introduced in detail below.

An input in this process is a reconstructed value p[ x ][ y ] of the neighbouring sample, where x = 0..nTbW - 1, and y = 0..nTbH - 1. nTbW represents a width of the current block, and nTbH represents a height of the current block.

An output in this process has different contents in different scenarios. In a scenario of obtaining an intra prediction value using DIMD, the output in this process is information of a histogram. In another application scenario, the output in this process may be a conventional IPM IntraPredModeD, where a value of IntraPredModeD is between [0,66].

It is set that mapHgV = {{2,1}, {1,2}} and mapVgH = {{3,4}, {4,3}}.

It is set that angTable = { 0, 2048, 4096, 6144, 8192, 12288, 16384, 20480, 24576, 28672, 32768, 36864, 40960, 47104, 53248, 59392, 65536 }.

It is set that angOffset = {18, 18, 50, 50}.

It is set that HoG[67] is an array containing magnitudes of gradients of each conventional IPM. At the beginning of this process, all values in all histograms of oriented gradients (HoG) arrays are initialized to 0.

For each reconstructed sample p[ x ][ y ], with x = 1...nTbW-2 and y = 1...nTbH-2, the calculation process is as follows.

A horizontal gradient is calculated: gHor[ x ][ y ] = p[x-1][y-1] + 2p[x-1][y] + p[x-1][y+1] - p[x+1][y-1] - 2p[x+1][y] - p[x+1][y+1].

A vertical gradient is calculated: gVer[ x ][ y ] = p[x-1][y-1] + 2p[x][y-1] + p[x+1][y-1] - p[x-1][y+1] - 2p[x][y+1] - p[x+1][y+1].

iAmp[x][y] = abs(gHor[ x ][ y ]) + abs(gVer[ x ][ y ]) is calculated.

signH[ x ][ y ] = gHor[ x ][ y ] < 0 ? 1 : 0 is calculated.

signV[ x ][ y ] = gVer[ x ][ y ] < 0 ? 1 : 0 is calculated.

HgV[ x ][ y ] = (abs(gHor[ x ][ y ]) > abs(gVer[ x ][ y ]) ? 1 : 0) is calculated.$region \left[x\right] \left[y\right] = \left(HgV\left[x\right]\left[y\right]==1?\right.$ mapHgV[ signH[ x ][ y ] ][ signV[ x ][ y ] ] :mapVgH[ signH[ x ][ y ] ][ signV[ x ][ y ] ]) is calculated.

grad[ x][ y ] = (HgV[ x ][ y ] = = 1 ? abs(gVer[ x ][ y ]) / abs(gHor[ x ][ y ]) : abs(gVer[ x ][ y ]) / abs(gHor[ x ][ y ])) is calculated.

grad[ x ][ y ] = round( grad[ x ][ y ] * (1 << 16) ) is calculated.

An index is calculated: angIdx[ x ][ y ] = argminᵢ (abs( angTable[ i ] - grad[ x ][ y ])).

An IPM is calculated: ipm[ x ][ y ] = angOffset[ region[ x ][ y ] ] + angIdx[ x ][ y ].

It is set that HoG[ipm[ x ][ y ]] = HoG[ipm[ x ][ y ]] + iAmp[x][y].

In a scenario of DIMD prediction, all or part of the information of the histogram of gradients will be stored for subsequent operations. For details, reference can be made to S1.2 below.

In another application scenario, a direction mode IntraPredModeD may be further derived according to the information of the histogram of gradients. For example, if there is no non-zero amplitude in the HoG, IntraPredModeD is set to PLANAR. Otherwise,

IntraPredModeD is set to argmax*ᵢ* (HoG[i]), where *i* = 0,...,*N*, and argmax*ᵢ*(L[i]) returns an index between 0 and *N* that maximizes L. If there are multiple indexes maximizing L, an index with a smaller value may be returned. Finally, predModeIntra is mapped to IntraPredModeD. It may be understood that, in a scenario of obtaining a prediction value based on DIMD, this part is not necessary.

### S1.2: Obtaining a prediction value using DIMD

Before the prediction value is obtained, whether to perform weighted blending is first determined. If the histogram of gradients is not in a single direction, weighted blending may be performed, and otherwise, the intra prediction value may be obtained using the only non-zero IPM in the histogram of gradients. In an implementation process, information of the HoG may be analyzed. If two direction modes with the highest amplitudes, maxMode[0] (corresponding to the highest amplitude in the histogram of gradients) and maxMode[1] (corresponding to the second highest amplitude in the histogram of gradients), both have amplitudes greater than 0, then weighted blending may be performed, and otherwise, weighted blending may be skipped.

If weighted blending is skipped, one IPM with the highest amplitude may be obtained according to the information of the histogram of gradients. Then, the prediction value may be directly generated according to a prediction mode represented by this IPM.

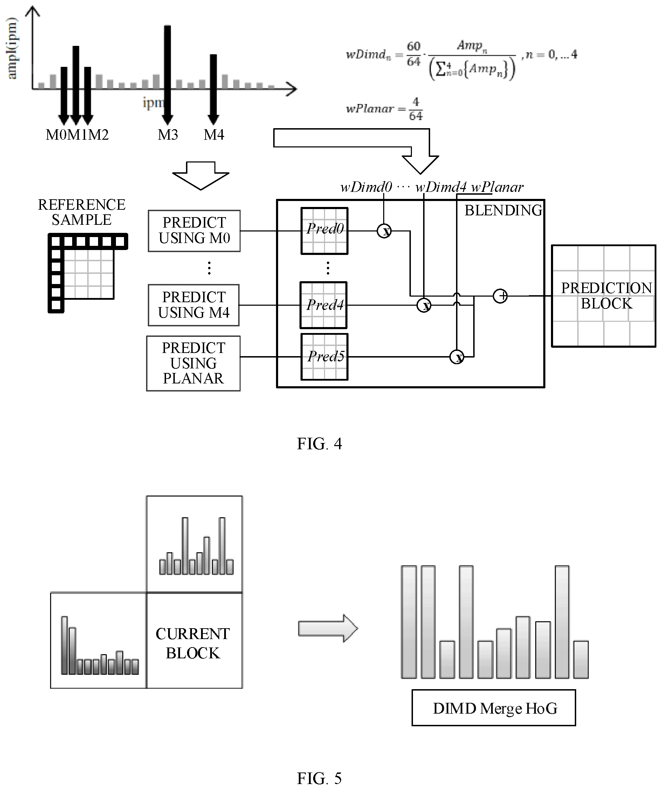

If weighted blending is performed, *N* (for example, *N* = 5) IPMs with the highest amplitudes may be obtained according to the information of the histogram of gradients, denoted as *Mₙ*, *n* = 0..4, and prediction values corresponding to the *N* IPMs are denoted as *dimdPredₙ*, *n* = 0..4. Then, weighted blending may be performed on the prediction values corresponding to the *N* IPMs and a prediction value *dimdPlanar* corresponding to a planar mode to obtain a final prediction value. The specific process is illustrated in FIG. 4. A weight *wPlanar* of the planar mode may be fixed at 4/64. Then, a remaining weight 60/64 may be assigned to five IPMs with the highest amplitudes. Weights *wDimdₙ*, *n* = 0..4 of the five IPMs are correlated with amplitudes in a histogram of gradients corresponding to the five IPMs.

A prediction value at (*x*, *y*) of the current block may be as follows: $fusionPred \left(x, y\right) = \left({Σ}_{n = 0}^{4}\left\{{wDimd}_{n}*{dimdPred}_{n}\left(x, y\right)\right\}+wPlanar*dimdPlanar\left(x, y\right)+32\right) ≫ 6 ;$ where *dimdPredₙ*(*x*, *y*) represents a prediction value generated at position (*x*, *y*) of the current block according to a mode *Mₙ*, and *dimdPlanar*(*x*, *y*) represents a prediction value generated at position (*x*, *y*) of the current block according to the planar mode.

The weights *wDimdₙ* of the five IPMs may be calculated as follows. ${wDimd}_{n} = \frac{60}{64} ⋅ \frac{{Amp}_{n}}{\left({\sum }_{n = 0}^{4} \left\{{Amp}_{n}\right\}\right)} , n = 0 ,… 4$

### S1.3: Storing information of a histogram of gradients

Information of a histogram of gradients corresponding to the DIMD mode is stored in units of a coding block. The information of the histogram of gradients may be directly stored, or only five IPMs with the highest amplitudes in the histogram of gradients and amplitudes corresponding to the five IPMs may be stored.

### S2: DIMD merge mode

The DIMD merge mode is a sub-mode of the DIMD-related mode. The DIMD merge mode is a method in which a dominant IPM (or prediction direction) is derived based on a direction parameter of a neighbouring coding block of the current block, and a prediction value is generated according to the dominant IPM. FIG. 5 illustrates an example of derivation of a direction parameter of the current block.

### S2.1: Intra mode derivation using DIMD merge

An input in step S2.1 may include the following information:
- a top-left corner position (xTL, yTL) of the current block, a bottom-left corner position (xLB, yLB) of the current block, and a top-right corner position (xRT, yRT) of the current block;
- a width uiWidth of the current block and a height uiHeigth of the current block;
- a neighbouring position (xNb[idx], yNb[idx]) of the current block, where idx = 1,...,13;
- a coding block corresponding to the neighbouring position (xNb[idx], yNb[idx]), denoted as cuNeibor[idx], where idx = 1,...,13.

An output in step S2.1 has different contents in different scenarios. In a scenario of obtaining an intra prediction value using DIMD, the output in step S2.1 is information of a histogram. In another application scenario, the output in step S2.1 may be a conventional IPM IntraPredModeD. For example, a value of IntraPredModeD may be between [0,66].

The derivation of the conventional IPM through gradient analysis using DIMD merge will be introduced in detail below.

### Implementation 1

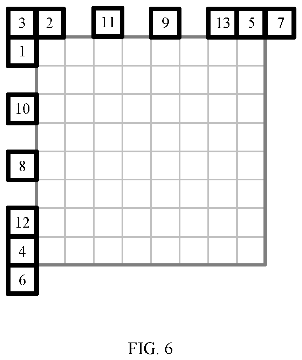

Step a: Search for neighbouring coding blocks corresponding to 13 neighbouring positions of the current block, denoted as cuNeibor[idx], and add cuNeibor[idx] to a candidate list in a search order. Whether each cuNeibor[idx] in the candidate list is present, is duplicate, and is in the DIMD mode or DIMD merge mode is checked. The neighbouring positions of the current block searched in step a are illustrated in Table 1, and the search order and positions of the neighbouring positions are illustrated in FIG. 6. If there are duplicate candidate blocks in the candidate list, only one candidate block is retained.

**Table 1: Candidates in the candidate list**

| idx | (xNb[idx], yNb[idx]) |
|---|---|
| 1 | (xTL - 1, yTL) |
| 2 | (xTL, yTL - 1) |
| 3 | (xTL - 1, yTL - 1) |
| 4 | (xTL - 1, yTL) |
| 5 | (xTL, yTL - 1) |
| 6 | (xLB - 1, yLB + 1) |
| 7 | (xTL + 1, yTL - 1) |
| 8 | (xTL + uiWidth >> 1, yTL - 1) |
| 9 | (xTL - 1, yTL + uiHeigth >> 1) |
| 10 | (xTL + uiWidth >> 2, yTL - 1) |
| 11 | (xTL - 1, yTL + uiHeigth >> 2) |
| 12 | (xTL + 3*(uiWidth >> 2), yTL - 1) |
| 13 | (xTL - 1, yTL+ 3*(uiHeigth >> 2)) |

Step b: Rank available candidate blocks in the candidate list according to positional distances between the current block and each of the available candidate blocks in the candidate list. For example, if a top-left position of an available candidate block in the candidate list is denoted as (xNeiTL, yNeiTL), then a distance dists[idx] between the current block and the candidate block may be determined according to (abs(xTL - xNeiTL) + abs(yTL - yNeiTL)). Then, the available candidate blocks in the candidate list may be ranked in an ascending order of values of dists[idx]. In case of equal dists[idx], the available candidate blocks in the candidate list may be ranked in the search order.

Step c: Read a histogram of gradients for the first three candidate blocks ranked, denoted as HoGN[nei], where nei = 0..2. When the number of available candidate blocks is less than 3, HoGN[nei] corresponding to the available candidate blocks may be obtained as many as possible.

Step d: Calculate a histogram of gradients HoGM by performing arithmetic averaging on the obtained histogram of gradients HoGN[nei].

Step e: Store the histogram of gradients HoGM in units of a coding block.

Step f: Obtain an IPM for the current block according to the histogram of gradients HoGM.

In a scenario of DIMD merge, all or part of the information of the histogram of gradients will be stored for subsequent operations. For details, reference can be made to S2.2 below.

In another application scenario, a direction mode IntraPredModeD may be further derived according to the information of the histogram of gradients. For example, if there is no non-zero amplitude in the HoG, IntraPredModeD is set to PLANAR. Otherwise, IntraPredModeD is set to argmax*ᵢ* (HoG[i]), where *i* = 0,...,*N*, and argmax*ᵢ*(L[i]) returns an index between 0 and *N* that maximizes L. If there are multiple indexes maximizing L, an index with a smaller value may be returned. Finally, predModeIntra is mapped to IntraPredModeD. It may be understood that, in a scenario of obtaining a prediction value based on DIMD, this part is not necessary.

### Implementation 2

Compared with implementation 1, there are three obvious differences in implementation 2.
① In implementation 2, for 13 positions searched, instead of using fixed positions, candidate positions are adaptively determined based on block sizes of the current block and a candidate block.
② In implementation 2, the number of available candidates cuNeibor in a candidate list is up to 5.
③ In implementation 2, for the candidate block, instead of reading information of a histogram of gradients HoG for the candidate block, only five IPMs with the highest amplitudes for the candidate block and amplitudes corresponding to the five IPMs are read. For a histogram of gradients corresponding to the current block, instead of storing the histogram of gradients HoGM corresponding to the current block, only five IPMs with the highest amplitudes in the histogram of gradients and amplitudes corresponding to the five IPMs are stored.

The remaining operations of implementation 2 are the same as those of implementation 1.

An implementation process of implementation 2 will be described in more detail below.

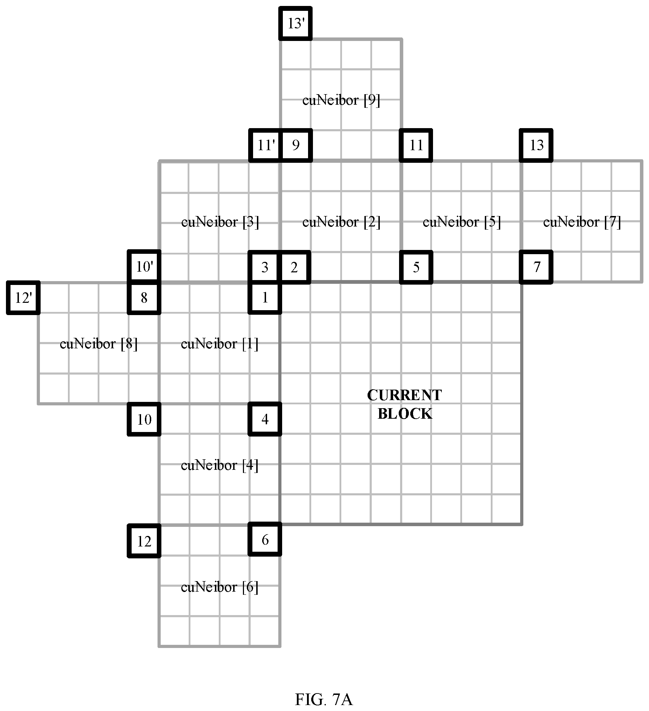

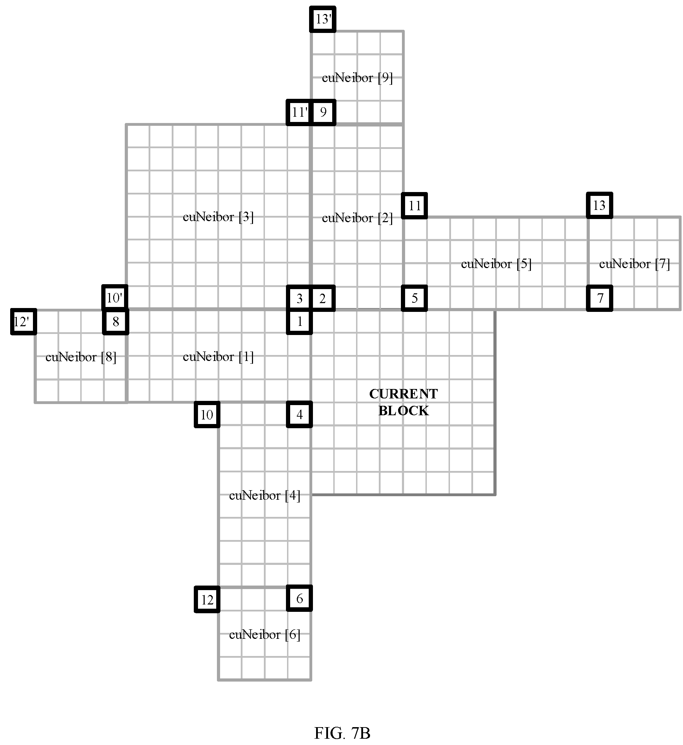

Step a: Search for cuNeibor[idx] corresponding to 13 neighbouring positions of the current block. The neighbouring positions searched in implementation 2 are illustrated in Table 2, and examples of the search order and positions of the neighbouring positions are illustrated in FIGs. 7A and 7B. Corresponding coding blocks are added to a candidate list in the search order of the 13 neighbouring positions, and whether cuNeibor[idx] in the list is present and is in the DIMD mode or DIMD merge mode is checked. Due to a change in a search manner, the duplication check for the candidate block is omitted in implementation 2.

**Table 2: Candidates in the candidate list**

| idx | cuNeibor | (xNb[idx], yNb[idx]) |
|---|---|---|
| 1 | cuNeibor [1] | (xTL - 1, yTL) |
| 2 | cuNeibor [2] | (xTL, yTL - 1) |
| 3 | cuNeibor [3] | (xTL - 1, yTL - 1) |
| 4 | cuNeibor [4] | (xNb[1], yNb[1] + cuNeibor [1].height) |
| 5 | cuNeibor [5] | (xNb[2] + cuNeibor [2].width, yNb[1]) |
| 6 | cuNeibor [6] | (xNb[4], y Nb[4] + cuNeibor [4].height) |
| 7 | cuNeibor [7] | (xNb[5] + cuNeibor [5].width, yNb[5]) |
| 8 | cuNeibor [8] | (xNb[1] - cuNeibor [1].width, yNb[1]) |
| 9 | cuNeibor [9] | (xNb[2], yNb[2] - cuNeibor [2].height) |
| 10 | cuNeibor [10] | (xNb[4] - cuNeibor [4].width, yNb[4]) |
| 11 | cuNeibor [11] | (xNb[5], yNb[5] - cuNeibor [5].height) |
| 12 | cuNeibor [12] | (xNb[6] - cuNeibor [6].width, yNb[6]) |
| 13 | cuNeibor [13] | (xNb[7], yNb[7] - cuNeibor [7].height) |

During search, a position is updated according to a check result for a coding block corresponding to the candidate position.

Position 1 and position 2: Taking position 1/position 2 as a start point, the height/width of the current block as an end point, and four samples as a step length, search for a coding block at a corresponding position. If cuNeibor [1] and cuNeibor [2] currently found are present and are in the DIMD mode, position 1/position 2 is updated to a current position.

Position 10 and position 11: If cuNeighbour[10]/cuNeighbour[11] is absent or is not in the DIMD mode, and cuNeighbours[3] is present, then position 10/position 11 is updated to the bottom left and the top right of cuNeighbours[3], i.e., position 10'/position 11' in FIG. 7A or FIG. 7B.

Position 12 and position 13: If cuNeighbour[12]/cuNeighbour[13] is absent or is not in the DIMD mode, and cuNeighbour[1], cuNeighbour[8]/cuNeighbour[2], and cuNeighbour[9] are present, then position 12/position 13 is updated to the left of cuNeighbour[8]/the top of cuNeighbour[9], i.e., position 12'/position 13' in FIG. 7A or FIG. 7B.

Step b: Rank candidate blocks in the candidate list according to distances between each of the candidate blocks in the candidate list and the current block.

If a top-left position of an available candidate block in the candidate list is denoted as (xNeiTL, yNeiTL), then a distance dists[idx] between the current block and the candidate block is (abs(xTL - xNeiTL) + abs(yTL - yNeiTL)). The available candidate blocks in the candidate list may be ranked in an ascending order of values of dists[idx]. In case of equal dists[idx], the available candidate blocks in the candidate list may be ranked in the search order.

Step c: Read five IPMs with the highest amplitudes corresponding to the first five available candidate blocks ranked and amplitudes corresponding to the five IPMs, denoted as HoGTemp[nei], where nei = 0..4. When the number of available candidate blocks is less than 5, the available candidate blocks may be obtained as many as possible.

Step d: Calculate a histogram of gradients HoGMTemp by performing arithmetic averaging on obtained HoGTemp[nei].

Step e: Store five IPMs with the highest amplitudes in HoGMTemp and amplitudes corresponding to the five IPMs in units of a coding block.

Step f: Obtain an IPM for the current block according to the histogram of gradients HoGMTemp.

In a scenario of DMD prediction, all or part of the information of the histogram of gradients will be stored for subsequent operations. For details, reference can be made to S2.2 below.

In another application scenario, a direction mode IntraPredModeD may be further derived according to the information of the histogram of gradients. For example, if there is no non-zero amplitude in the HoG, IntraPredModeD is set to PLANAR. Otherwise, IntraPredModeD is set to argmax*ᵢ* (HoG[i]), where *i* = 0,...,*N*, and argmax*ᵢ*(L[i]) returns an index between 0 and *N* that maximizes L. If there are multiple indexes maximizing L, an index with a smaller value may be returned. Finally, predModeIntra is mapped to IntraPredModeD. It may be understood that, in a scenario of obtaining a prediction value based on DIMD, this part is not necessary.

### S2.2: Obtaining a prediction value using DIMD merge

The process in S2.2 is substantially the same as the process of obtaining the prediction value using DIMD illustrated in S1.2. If weighted blending is skipped, one IPM with the highest amplitude may be obtained according to the information of HoGM, and the prediction value may be directly generated according to this IPM. Otherwise, five IPMs with the highest amplitudes may be obtained according to the information of HoGM, and weighted blending may be performed on prediction values corresponding to the five IPMs and a prediction value corresponding to a planar mode to obtain a final prediction value. The calculation of weights is the same as that in S1.2.

In the DIMD merge mode provided in the related art, only 13 pre-defined or adaptively-selected candidate positions around the current block are searched to determine candidate blocks. Then, in the related art, for the candidate blocks at the 13 candidate positions, availability check, duplication check, and check of whether to be in the DIMD-related mode are performed.

However, after the above check for the 13 candidate positions, the number of candidate blocks satisfying a condition is generally small, which results in an inaccurate IPM (or prediction direction) derived based on the direction parameter of the neighbouring block, thereby reducing the accuracy of prediction.

For the above problem, the following will provide detailed illustrative examples of a decoding method provided in embodiments of the disclosure.

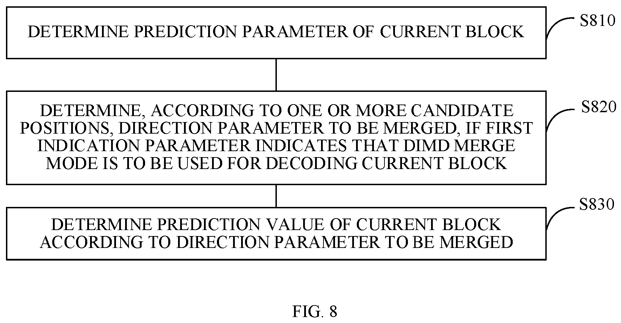

FIG. 8 is a schematic flowchart of a decoding method provided in embodiments of the disclosure. The method in FIG. 8 may also be referred to as an intra prediction method or a prediction method based on a DIMD merge mode. The method in FIG. 8 may be applied to a decoder, for example, an intra prediction unit in the decoder.

As illustrated in FIG. 8, in operations at S810, a prediction parameter of a current block is determined.

The current block may also be referred to as a current coding block, a current decoding block, or a current CU. For example, the current block may be a luma block.

The prediction parameter may include a first indication parameter. The first indication parameter may indicate whether the DIMD merge mode is to be used for decoding the current block.

It may be understood that, a value of the first indication parameter may be a parameter explicitly carried in a bitstream or a parameter derived based on another parameter of the current block.

In some implementations, the prediction parameter of the current block may be determined as follows. A bitstream is parsed to determine the first indication parameter. The first indication parameter (for example, a DIMD merge flag) indicates that the DIMD merge mode is to be used for the current block. For example, the first indication parameter may have a first value and a second value. The first value may be 1 or true. The first value may indicate that the DIMD merge mode is to be used for the current block. The second value may be 0 or false. The second value may indicate that the DIMD merge mode is not to be used for the current block. If the DIMD merge mode is not to be used for the current block, the current block may be predicted based on a DIMD mode.

In some implementations, the prediction parameter of the current block may be determined as follows. If one or more candidate positions have no corresponding candidate block and/or candidate blocks corresponding to the one or more candidate positions are unavailable, it is determined that the first indication parameter indicates that the DIMD merge mode is not to be used for decoding the current block; and/or, if the one or more candidate positions have a corresponding candidate block and/or candidate blocks corresponding to the one or more candidate positions are available, it is determined that the first indication parameter indicates that the DIMD merge mode is to be used for decoding the current block. A usage condition of the DIMD merge mode is limited in embodiments of the disclosure, thereby significantly reducing the coding complexity. The candidate blocks corresponding to the one or more candidate positions being unavailable may mean that the candidate blocks corresponding to the one or more candidate positions are not in a DIMD-related mode (for example, the DIMD mode or DIMD merge mode).

Further, in some implementations, the one or more candidate positions may include a spatial non-neighbouring position. In this case, if each spatial non-neighbouring position has no corresponding candidate block and/or a candidate block corresponding to the spatial non-neighbouring position is unavailable, it is determined that the first indication parameter indicates that the DIMD merge mode is not to be used for decoding the current block; and/or, if the spatial non-neighbouring position has a corresponding candidate block and/or the candidate block corresponding to the spatial non-neighbouring position is available, it is determined that the first indication parameter indicates that the DIMD merge mode is to be used for decoding the current block.

In some implementations, the prediction parameter of the current block may be determined as follows. The first indication parameter is determined according to whether a size of the current block satisfies a first condition. For example, if a target size is less than or equal to a first threshold, it is determined that the first indication parameter indicates that the DIMD merge mode is to be used for decoding the current block; and/or, if the target size is greater than the first threshold, it is determined that the first indication parameter indicates that the DIMD merge mode is not to be used for decoding the current block. The target size is determined based on the size of the current block. The target size may be determined based on at least one of: a width of the current block; a height of the current block; a product of the width and the height of the current block; a maximum value of the width and the height of the current block; or a minimum value of the width and the height of the current block. For example, the target size is the width of the current block. For another example, the target size is the height of the current block. For another example, the target size is the width of the current block × the height of the current block. For another example, the target size is the maximum value of the width and the height of the current block. For another example, the target size is the minimum value of the width and the height of the current block. A usage condition of the DIMD merge mode is limited in embodiments of the disclosure, thereby significantly reducing the coding complexity.

The first threshold may be determined based on first information parsed from a bitstream. The first information may be a high-level syntax element that is carried in the bitstream and is used for determining the first threshold. For example, the first information may be represented by sps_dimd_merge_cand_max_size. The first information may have multiple candidate values, each of the multiple candidate values corresponds to one of multiple thresholds, and the first threshold corresponds to a current value of the first information. For example, the candidate value of the first information includes at least one of a first value (for example, 0), a second value (for example, 1), or a third value (for example, 2). A threshold corresponding to the first value is 32 × 32, a threshold corresponding to the second value is 16 × 32, and a threshold corresponding to the third value is 16 × 16. If the current value of the first information is the first value, the first threshold is 32 × 32, i.e., 1024. If the current value of the first information is the second value, the first threshold is 16 × 32, i.e., 512. If the current value of the first information is the third value, the first threshold is 16 × 16, i.e., 256.

An example that the first information is sps_dimd_merge_cand_max_size and the first value, the second value, and the third value are 0, 1, and 2 respectively will be taken below for more detailed illustration of a manner of determining the first condition.

### Example 1

In this example, if a value of sps_dimd_merge_cand_max_size is 0, *threshold* is set to 32*32 (i.e., 1024). If the value of sps_dimd_merge_cand_max_size is 1, *threshold* is set to 16*32 (i.e., 512). If the value of sps_dimd_merge_cand_max_size is 2, *threshold* is set to 16*16 (i.e., 256). In an actual decoding process, an enable/disable state of DIMD merge may be set according to a syntax element sps_dimd_merge_cand_max_size and a threshold *threshold*.

For example, if the value of sps_dimd_merge_cand_max_size is 0 and the width (uiWidth) of the current block * the height (uiHeight) of the current block is less than or equal to *threshold*, DIMD merge is enabled, and otherwise, DIMD merge is disabled.

For another example, if the value of sps_dimd_merge_cand_max_size is 1 and the width (uiWidth) of the current block * the height (uiHeight) of the current block is less than *threshold*, DIMD merge is enabled, and otherwise, DIMD merge is disabled.

For another example, if the value of sps_dimd_merge_cand_max_size is 2 and the width (uiWidth) of the current block * the height (uiHeight) of the current block is less than *threshold*, DIMD merge is enabled, and otherwise, DIMD merge is disabled.

In addition to determining the first threshold based on the first information parsed from the bitstream, the first threshold may be set to a pre-defined fixed value. For example, the fixed value may be 32 × 32, i.e., 1024. For another example, the fixed value may be 16 × 32, i.e., 512. For another example, the fixed value may be 16 × 16, i.e., 256.

### Example 2

In this example, if a value of sps_dimd_merge_cand_max_size is 0, *threshold* is set to 32. If the value of sps_dimd_merge_cand_max_size is 1, *threshold* is set to 16. If the value of sps_dimd_merge_cand_max_size is 2, *threshold* is set to 8. In an actual decoding process, an enable/disable state of DIMD merge may be set according to a syntax element sps_dimd_merge_cand_max_size and a threshold *threshold*.

For example, if the value of sps_dimd_merge_cand_max_size is 0 and the maximum value (or minimum value) of the width (uiWidth) and the height (uiHeight) of the current block is less than or equal to *threshold*, DIMD merge is enabled, and otherwise, DIMD merge is disabled.

For another example, if the value of sps_dimd_merge_cand_max_size is 1 and the maximum value (or minimum value) of the width (uiWidth) and the height (uiHeight) of the current block is less than *threshold*, DIMD merge is enabled, and otherwise, DIMD merge is disabled.

For another example, if the value of sps_dimd_merge_cand_max_size is 2 and the maximum value (or minimum value) of the width (uiWidth) and the height (uiHeight) of the current block is less than *threshold*, DIMD merge is enabled, and otherwise, DIMD merge is disabled.

In addition to determining the first threshold based on the first information parsed from the bitstream, the first threshold may be set to a pre-defined fixed value. For example, the fixed value may be 32 × 32, i.e., 1024. For another example, the fixed value may be 16 × 32, i.e., 512. For another example, the fixed value may be 16 × 16, i.e., 256.

In operations at S820, if the first indication parameter indicates that the DIMD merge mode is to be used for decoding the current block, a direction parameter to be merged is determined according to one or more candidate positions. The one or more candidate positions are located in a reconstructed region of a picture where the current block is located.

In some implementations, the number of candidate positions in the reconstructed region of the picture where the current block is located may be greater than 13. For example, the number of candidate positions in the reconstructed region of the picture where the current block is located may be greater than or equal to 16, 18, 21, 26, or 31. The number of candidate positions provided in embodiments of the disclosure is greater than the number of candidate positions provided in the related art (where 13 candidate positions are provided in the related art). Therefore, in other words, in embodiments of the disclosure, candidate blocks are searched for in a larger search region or at more candidate positions, thereby contributing to improving the accuracy of prediction.

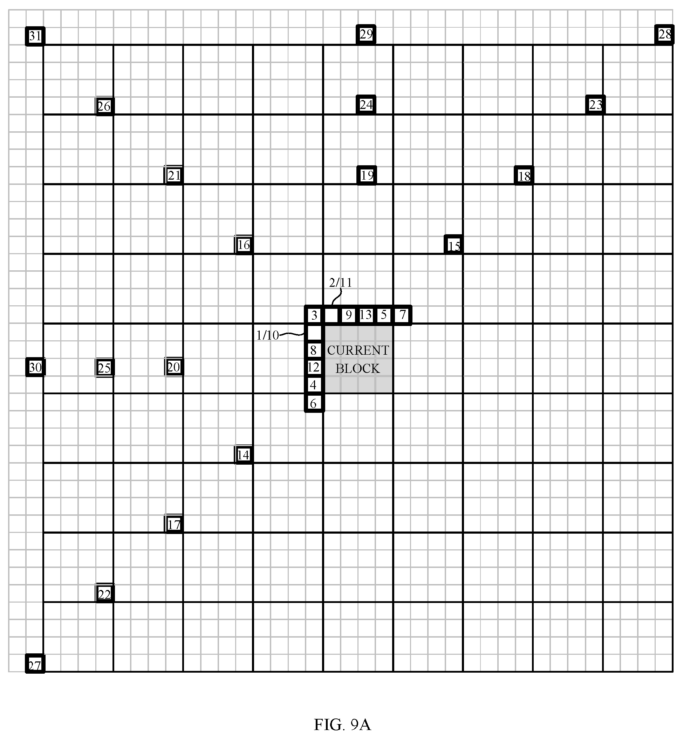

In some implementations, the one or more candidate positions may include a spatial neighbouring position (also referred to as a neighbouring reference sample) and/or a spatial non-neighbouring position (also referred to as a non-neighbouring reference sample). For example, search may be performed at X1 spatial neighbouring positions and X2 spatial non-neighbouring positions in the reconstructed region of the picture where the current block is located. For example, a value of X1 may be less than or equal to 13. For example, a value of X2 may be 3, 5, 8, 13, or 18. In embodiments of the disclosure, the search region is expanded, which contributes to obtaining more available candidate blocks and thus improving the accuracy of prediction. Taking FIG. 9A as an example, there are 13 spatial neighbouring positions and 18 spatial non-neighbouring positions in the reconstructed region of the picture where the current block is located. By comparing FIG. 6 and FIG. 9A, it is clear that the embodiments of the disclosure provide more candidate positions than the related art.

In some implementations, the candidate positions in the reconstructed region of the picture where the current block is located include a spatial non-neighbouring position. The spatial non-neighbouring position is determined based on a pre-defined position and/or a pre-defined size. For example, the pre-defined size may include a pre-defined horizontal size (or horizontal step length) and/or a pre-defined vertical size (or vertical step length).

In some implementations, the above pre-defined position or spatial non-neighbouring position may be determined based on one or more of: a position of the current block (for example, a top-left corner position of the current block); a size of the current block (for example, a width and/or a height of the current block); a size of a neighbouring block of the current block (for example, a width and/or a height of the neighbouring block); or the pre-defined size.

In some implementations, the above pre-defined size (which may include, for example, the pre-defined horizontal size and/or the pre-defined vertical size) may be determined based on the size of the current block. For example, the pre-defined horizontal size is determined based on the width of the current block. For another example, the pre-defined vertical size is determined based on the height of the current block. As a more specific example, the pre-defined horizontal size is *N* times the width of the current block, and the pre-defined vertical size is *N* times the height of the current block, where *N* is a positive integer greater than or equal to 1.

In some implementations, the above pre-defined size (which may include, for example, the pre-defined horizontal size and/or the pre-defined vertical size) may be independent of the size of the current block. For example, the pre-defined horizontal size and/or the pre-defined vertical size each may be a fixed value, which may include, for example, one or more of 4, 8, 16, 32, or 64.

For example, a spatial non-neighbouring position among the one or more candidate positions may satisfy at least one of: an absolute value of a horizontal offset of the spatial non-neighbouring position from a top-left corner position of the current block being equal to iDistHor + 1 (hereinafter referred to as condition 1); or, an absolute value of a vertical offset of the spatial non-neighbouring position from the top-left corner position of the current block being equal to iDistVer + 1 (hereinafter referred to as condition 2). iDistHor is equal to a pre-defined horizontal size, and iDistVer is equal to a pre-defined vertical size.

In some implementations, iDistHor may be a fixed value (which may include, for example, one or more of 4, 8, 16, 32, or 64) or may be determined based on the size of the current block (for example, the width of the current block). For example, iDistHor may be *N* times the width of the current block, where *N* is a positive integer greater than or equal to 1.

In some implementations, iDistVer may be a fixed value (which may include, for example, one or more of 4, 8, 16, 32, or 64) or may be determined based on the size of the current block (for example, the height of the current block). For example, iDistVer may be *N* times the height of the current block, where *N* is a positive integer greater than or equal to 1.

iDistHor and iDistVer may represent a search distance. By determining iDistHor and/or iDistVer based on the size of the current block, the search distance can be adaptively adjusted based on the size of the current block, and thus direction parameters found are more accurate.

Taking FIG. 9A as an example, the spatial non-neighbouring position among the one or more candidate positions includes candidate positions 14 to 16. As can be seen from FIG. 9A, candidate position 14 satisfies condition 1, candidate position 15 satisfies condition 2, and candidate position 16 satisfies both condition 1 and condition 2. In addition, a value of *N* corresponding to candidate positions 14 to 16 is 1, i.e., iDistHor is equal to the width of the current block, and iDistVer is equal to the height of the current block. That is to say, with a position of the current block as a start position and a step length equal to once the size of the current block as a search step length, spatial non-neighbouring positions 14 to 16 may be found near a search region defined by that step length.

Still taking FIG. 9A as an example, the spatial non-neighbouring position of the current block includes candidate positions 17 to 21. As can be seen from FIG. 9A, candidate position 17 satisfies condition 1, candidate position 18 satisfies condition 2, candidate position 19 satisfies condition 2, candidate position 20 satisfies condition 1, and candidate position 21 satisfies both condition 1 and condition 2. In addition, a value of *N* corresponding to candidate positions 17 to 21 is 2, i.e., iDistHor is two times the width of the current block, and iDistVer is two times the height of the current block. That is to say, with a position of the current block as a start position and a step length equal to two times the size of the current block as a search step length, spatial non-neighbouring positions 17 to 21 may be found near a search region defined by that step length.

Still taking FIG. 9A as an example, the spatial non-neighbouring position of the current block includes candidate positions 22 to 26. As can be seen from FIG. 9A, candidate position 22 satisfies condition 1, candidate position 23 satisfies condition 2, candidate position 24 satisfies condition 2, candidate position 25 satisfies condition 1, and candidate position 26 satisfies both condition 1 and condition 2. In addition, a value of *N* corresponding to candidate positions 22 to 26 is 3, i.e., iDistHor is three times the width of the current block, and iDistVer is three times the height of the current block. That is to say, with a position of the current block as a start position and a step length equal to three times the size of the current block as a search step length, spatial non-neighbouring positions 22 to 26 may be found near a search region defined by that step length.

Still taking FIG. 9A as an example, the spatial non-neighbouring position of the current block includes candidate positions 27 to 31. As can be seen from FIG. 9A, candidate position 27 satisfies condition 1, candidate position 28 satisfies condition 2, candidate position 29 satisfies condition 2, candidate position 30 satisfies condition 1, and candidate position 31 satisfies both condition 1 and condition 2. In addition, a value of *N* corresponding to candidate positions 27 to 31 is 4, i.e., iDistHor is four times the width of the current block, and iDistVer is four times the height of the current block. That is to say, with a position of the current block as a start position and a step length equal to four times the size of the current block as a search step length, spatial non-neighbouring positions 27 to 31 may be found near a search region defined by that step length.

As mentioned above, iDistHor is *N* times the width of the current block, and iDistVer is *N* times the height of the current block. Alternatively, iDistHor is *N* times a width of a left neighbouring block of the current block, and iDistVer is *N* times a height of a top neighbouring block of the current block.

In some implementations, the value of *N* mentioned above may be less than or equal to 4. For example, the value of *N* includes 1, 2, 3, and 4. Certainly, the value of *N* may also be greater than 4. For example, *N* is 5, 6, or 7. By setting the value of *N* to be less than or equal to 4, the implementation complexity of the search process can be minimized while obtaining sufficient direction parameters.

In some implementations, the spatial non-neighbouring position among the one or more candidate positions satisfies: xNb = xTL + offsetX and yNb = yTL + offsetY. offsetX and offsetY satisfy at least one of: offsetX = uiWidth + iDistHor - 1 and offsetY = -iDistVer - 1; offsetX = uiWidth >> 1 and offsetY = -iDistVer - 1; offsetX = -iDistHor - 1 and offsetY = - iDistVer - 1; offsetX = -iDistHor - 1 and offsetY = uiHeigth >> 1; or offsetX = -iDistHor - 1 and offsetY = uiHeigth + iDistVer - 1. xNb represents a horizontal coordinate of the spatial non-neighbouring position, yNb represents a vertical coordinate of the spatial non-neighbouring position, xTL represents a horizontal coordinate of the top-left corner position of the current block, yTL represents a vertical coordinate of the top-left corner position of the current block, uiWidth represents the width of the current block, and uiHeigth represents the height of the current block.

The above spatial non-neighbouring positions provided in embodiments of the disclosure are evenly distributed around the current block, thereby enabling as many available direction parameters as possible to be found with as few candidate positions as possible.

Taking FIG. 9A as an example, assuming *N* = 1, then iDistHor is equal to the width of the current block, and iDistVer is equal to the height of the current block. Further, if offsetX = uiWidth + iDistHor - 1 and offsetY = -iDistVer - 1, then a spatial non-neighbouring position (xNb, yNB) refers to candidate position 15 in FIG. 9A. If offsetX = uiWidth >> 1 and offsetY = - iDistVer - 1, then the spatial non-neighbouring position (xNb, yNB) is located directly above the current block and has the same horizontal position as candidate position 15 (not numbered in FIG. 9A). If offsetX = -iDistHor - 1 and offsetY = -iDistVer - 1, then the spatial non-neighbouring position (xNb, yNB) refers to candidate position 16 in FIG. 9A. If offsetX = - iDistHor - 1 and offsetY = uiHeigth >> 1, then the spatial non-neighbouring position (xNb, yNB) is located directly on the left of the current block and has the same vertical position as candidate position 16 (not numbered in FIG. 9A). If offsetX = -iDistHor - 1 and offsetY = uiHeigth + iDistVer - 1, then the spatial non-neighbouring position (xNb, yNB) refers to candidate position 16 in FIG. 9A. Further, in some implementations, when *N* = 1, offsetX and offsetY satisfy at least one of: offsetX = uiWidth + iDistHor - 1 and offsetY = -iDistVer - 1; offsetX = -iDistHor - 1 and offsetY = -iDistVer - 1; or offsetX = -iDistHor - 1 and offsetY = uiHeigth + iDistVer - 1. Still taking FIG. 9A as an example, when *N* = 1, the spatial non-neighbouring position (xNb, yNB) may include candidate positions 14 to 16 in FIG. 9A.

Taking FIG. 9A as an example, assuming *N* = 2, then iDistHor is two times the width of the current block, and iDistVer is two times the height of the current block. Further, if offsetX = uiWidth + iDistHor - 1 and offsetY = -iDistVer - 1, then a spatial non-neighbouring position (xNb, yNB) refers to candidate position 18 in FIG. 9A. If offsetX = uiWidth >> 1 and offsetY = - iDistVer - 1, then the spatial non-neighbouring position (xNb, yNB) refers to candidate position 19 in FIG. 9A. If offsetX = -iDistHor - 1 and offsetY = -iDistVer - 1, then the spatial non-neighbouring position (xNb, yNB) refers to candidate position 21 in FIG. 9A. If offsetX = - iDistHor - 1 and offsetY = uiHeigth >> 1, then the spatial non-neighbouring position (xNb, yNB) refers to candidate position 20 in FIG. 9A. If offsetX = -iDistHor - 1 and offsetY = uiHeigth + iDistVer - 1, then the spatial non-neighbouring position (xNb, yNB) refers to candidate position 17 in FIG. 9A.

Taking FIG. 9A as an example, assuming *N* = 3, then iDistHor is three times the width of the current block, and iDistVer is three times the height of the current block. Further, if offsetX = uiWidth + iDistHor - 1 and offsetY = -iDistVer - 1, then a spatial non-neighbouring position (xNb, yNB) refers to candidate position 23 in FIG. 9A. If offsetX = uiWidth >> 1 and offsetY = -iDistVer - 1, then the spatial non-neighbouring position (xNb, yNB) refers to candidate position 24 in FIG. 9A. If offsetX = -iDistHor - 1 and offsetY = -iDistVer - 1, then the spatial non-neighbouring position (xNb, yNB) refers to candidate position 26 in FIG. 9A. If offsetX = -iDistHor - 1 and offsetY = uiHeigth >> 1, then the spatial non-neighbouring position (xNb, yNB) refers to candidate position 25 in FIG. 9A. If offsetX = -iDistHor - 1 and offsetY = uiHeigth + iDistVer - 1, then the spatial non-neighbouring position (xNb, yNB) refers to candidate position 22 in FIG. 9A.

Taking FIG. 9A as an example, assuming *N* = 4, then iDistHor is four times the width of the current block, and iDistVer is four times the height of the current block. Further, if offsetX = uiWidth + iDistHor - 1 and offsetY = -iDistVer - 1, then a spatial non-neighbouring position (xNb, yNB) refers to candidate position 28 in FIG. 9A. If offsetX = uiWidth >> 1 and offsetY = - iDistVer - 1, then the spatial non-neighbouring position (xNb, yNB) refers to candidate position 29 in FIG. 9A. If offsetX = -iDistHor - 1 and offsetY = -iDistVer - 1, then the spatial non-neighbouring position (xNb, yNB) refers to candidate position 31 in FIG. 9A. If offsetX = - iDistHor - 1 and offsetY = uiHeigth >> 1, then the spatial non-neighbouring position (xNb, yNB) refers to candidate position 30 in FIG. 9A. If offsetX = -iDistHor - 1 and offsetY = uiHeigth + iDistVer - 1, then the spatial non-neighbouring position (xNb, yNB) refers to candidate position 27 in FIG. 9A.

In some implementations, the spatial non-neighbouring position among the one or more candidate positions satisfies at least one of: being located on the top right of the current block, being located directly above the current block, being located on the top left of the current block, being located directly on the left of the current block, or being located on the bottom left of the current block. If a direction of a horizontal coordinate is used as a reference, the spatial non-neighbouring position among the one or more candidate positions satisfies at least one of: being located in a direction of 45° from the current block, being located in a direction of 90° from the current block, being located in a direction of 135° from the current block, being located in a direction of 180° from the current block, or being located in a direction of 225° from the current block. The above directions may be understood as search directions of the spatial non-neighbouring position among the one or more candidate positions. That is to say, with a position of the current block as a reference, a search operation may be performed in the above directions to determine the spatial non-neighbouring position of the current block. A search step length in each search direction may be determined based on *N* (or iDistHor and iDistVer) mentioned above. The above spatial non-neighbouring positions provided in embodiments of the disclosure are evenly distributed around the current block, thereby enabling as many available direction parameters as possible to be found with as few candidate positions as possible.

In some implementations, the one or more candidate positions may include only the spatial non-neighbouring position. Further, if each spatial non-neighbouring position has no corresponding candidate block and/or a candidate block corresponding to the spatial non-neighbouring position is unavailable, the DIMD merge mode may be disabled. The candidate block corresponding to the spatial non-neighbouring position being unavailable may mean that the candidate block corresponding to the spatial non-neighbouring position is not in a DIMD-related mode (for example, the DIMD mode or DIMD merge mode). Compared with the spatial neighbouring position, the spatial non-neighbouring position is more likely to have no corresponding candidate block. Therefore, considering only the spatial non-neighbouring position as the candidate position can reduce the probability of triggering the DIMD merge mode, thereby reducing the decoding complexity. In addition, since the DIMD merge mode is a sub-mode of the DIMD-related mode, and the DIMD mode mainly takes a direction parameter of a neighbouring position of the current block into consideration while the DIMD merge mode takes only a direction parameter of a non-neighbouring position of the current block into consideration, the DIMD mode and the DIMD merge mode can complement each other, thereby making the algorithm design more reasonable.

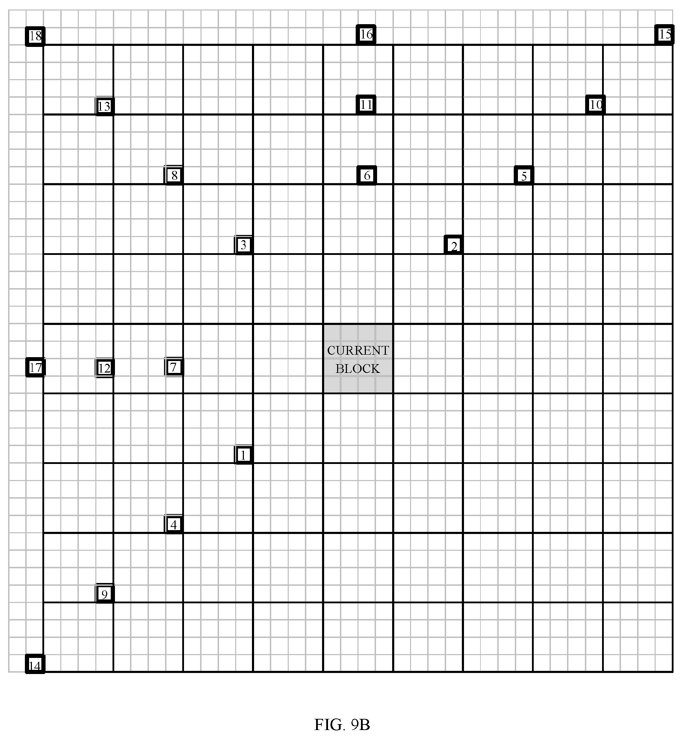

When the one or more candidate positions include only the spatial non-neighbouring position, the number of spatial non-neighbouring positions is not limited in embodiments of the disclosure. For example, the one or more candidate positions include only spatial non-neighbouring positions, and the number of spatial non-neighbouring positions is greater than or equal to 3. For another example, the one or more candidate positions include only spatial non-neighbouring positions, and the number of spatial non-neighbouring positions is greater than or equal to 5. For another example, the one or more candidate positions include only spatial non-neighbouring positions, and the number of spatial non-neighbouring positions is greater than or equal to 8. For another example, the one or more candidate positions include only spatial non-neighbouring positions, and the number of spatial non-neighbouring positions is greater than or equal to 13. For another example, the one or more candidate positions include only spatial non-neighbouring positions, and the number of spatial non-neighbouring positions is greater than or equal to 18. Taking FIG. 9B as an example, the one or more candidate positions include no spatial neighbouring position, but include 18 spatial non-neighbouring positions.

In some implementations, a priority of the spatial non-neighbouring position is higher than a priority of the spatial neighbouring position. The priority of the spatial non-neighbouring position being higher than the priority of the spatial neighbouring position may include at least one of: the spatial non-neighbouring position being preferentially searched compared with the spatial neighbouring position (i.e., the spatial non-neighbouring position being searched before the spatial neighbouring position); or, a candidate block corresponding to the spatial non-neighbouring position being preferentially stored in a set of candidate blocks compared with a candidate block corresponding to the spatial neighbouring position, where the set of candidate blocks is used for determining the prediction value (i.e., the candidate block corresponding to the spatial non-neighbouring position being placed into the set of candidate blocks before the candidate block corresponding to the spatial neighbouring position). As an example, a length of the set of candidate blocks (for example, a candidate list) may be limited. For example, the set of candidate blocks includes *Q* candidate positions (where *Q* is a positive integer greater than or equal to 1), and when the number of candidate blocks corresponding to the spatial non-neighbouring position is less than *Q*, the candidate block corresponding to the spatial neighbouring position is stored in the set of candidate blocks until there are no more available candidate blocks or all candidate positions in the set of candidate blocks are occupied. Certainly, if the number of candidate blocks corresponding to the spatial non-neighbouring position is greater than or equal to *Q*, then the candidate block corresponding to the spatial neighbouring position may not be added to the set of candidate blocks. As mentioned in the above implementations, DIMD merge may be performed based only on the spatial non-neighbouring position. If DIMD merge is performed based only on the spatial non-neighbouring position, then after duplication check and availability check, a candidate position(s) in the set of candidate blocks may be vacant. Therefore, in this implementation, priority is given to the candidate block corresponding to the spatial non-neighbouring position and then to the candidate block corresponding to the spatial neighbouring position, which can increase the number of candidate blocks in the set of candidate blocks, thereby improving the accuracy of the DIMD merge mode.

In some implementations, the number of candidate positions and/or a size of a search range may be adaptively adjusted. For example, the number of candidate positions and/or the size of the search range may be determined based on the size of the current block. By adaptively adjusting the number of candidate positions and/or the size of the search range based on the size of the current block, the found direction parameters (for example, HoG) are more accurate.

As an example, a value range of *N* (or iDistHor and iDistVer) mentioned above may be determined based on the size of the current block. For example, if the size of the current block is a first size, the value range of *N* is a first value range. If the size of the current block is a second size, the value range of *N* is a second value range. Further, in some implementations, if the first size is less than the second size, the first value range is less than the second value range. In other words, if the current block is a small block, a search range of the spatial non-neighbouring position of the current block is narrowed, and if the current block is a large block, the search range of the spatial non-neighbouring position of the current block is expanded, thereby making the prediction process more flexible. For example, if the size of the current block is the first size, the value range of *N* is 1 to 3, and if the size of the current block is the second size (greater than the first size), the value range of *N* is 1 to 4.

As another example, if the size of the current block is less than a preset size (for example, 16 × 16), the spatial neighbouring position of the current block may not include at least one of: a first position corresponding to 1/4 of the height of the current block (see candidate position 10 in FIG. 6); a second position corresponding to 1/4 of the width of the current block (see candidate position 11 in FIG. 6); a third position corresponding to 3/4 of the height of the current block (see candidate position 12 in FIG. 6); a fourth position corresponding to 3/4 of the width of the current block (see candidate position 13 in FIG. 6); a fifth position corresponding to 1/2 of the height of the current block (see candidate position 8 in FIG. 6); or a sixth position corresponding to 1/2 of the width of the current block (see candidate position 9 in FIG. 6).

As yet another example, the above two examples may be combined. For example, if the size of the current block is less than a preset size (for example, 16 × 16), a value range of *N* may be limited to a second value range (for example, 1 to 3), thereby reducing the number of spatial non-neighbouring positions to be searched. Further, one or more positions (for example, the first position to the fourth position) may be simultaneously removed from the first position to the sixth position mentioned above, thereby reducing the number of spatial neighbouring positions to be searched.

In operations at S830, a prediction value of the current block is determined according to the direction parameter to be merged. For example, a prediction direction corresponding to the current block is determined according to the direction parameter to be merged, and the prediction value of the current block is determined according to the prediction direction corresponding to the current block.

The form or content of the direction parameter is not limited in embodiments of the disclosure. For example, in some implementations, the direction parameter may be information of a histogram of gradients (information of HoG). The information of the HoG may be obtained based on a sample value of a picture by using a gradient derivation manner. In some other implementations, the direction parameter may include a set of IPMs and amplitudes corresponding to the set of IPMs. For example, the set of IPMs may be a set of IPMs corresponding to the highest amplitudes in the histogram of gradients. The set of IPMs may include three IPMs, may include five IPMs, or may include another number of IPMs.

In some implementations, the prediction value of the current block may be determined based on direction parameters of *K* candidate blocks, where *K* is a positive integer greater than 3. For example, a value of *K* may be 5. For another example, the value of *K* may be greater than 5, for instance, *K* may be 6, 7, or 8. The *K* candidate blocks mentioned herein may be determined based on the one or more candidate positions. For example, a set of candidate blocks (for example, a candidate list, which may be used for storing coding blocks corresponding to the candidate positions) may be determined based on the one or more candidate positions, and the *K* candidate blocks may be determined from the set of candidate blocks. For example, the *K* candidate blocks may be determined from the set of candidate blocks as follows. Candidate blocks in the set of candidate blocks are ranked (for example, according to distances between a top-left corner position of each candidate block and a top-left corner position of the current block), direction parameters of the first *K* candidate blocks ranked are then determined as the direction parameter to be merged, and the prediction value of the current block is determined based on the direction parameter to be merged. Further, in some implementations, if the number of available candidate blocks in the set of candidate blocks is less than *K*, prediction information of the current block may be determined based on direction parameters of all available candidate blocks in the set of candidate blocks. By increasing the number of candidate blocks for providing the direction parameters (where *K* = 3 in the related art), the accuracy of a merged direction parameter can be improved, thereby improving the accuracy of prediction.

In some implementations, the direction parameter to be merged is *K* histograms of gradients, where *K* is a positive integer greater than 3. For example, a value of *K* may be 5. Alternatively, the value of *K* may be greater than 5, for instance, *K* may be 6, 7, or 8.

In some implementations, the direction parameter to be merged is amplitudes corresponding to *K* sets of IPMs, where *K* is a positive integer greater than 3. For example, a value of *K* may be 5. Alternatively, the value of *K* may be greater than 5, for instance, *K* may be 6, 7, or 8. Each of the *K* sets of IPMs may include three, five, or more IPMs.

In some implementations, the prediction value of the current block is determined based on a set of candidate blocks. The set of candidate blocks may be determined based on the one or more candidate positions. The set of candidate blocks may include duplicate candidate blocks or may not include duplicate candidate blocks. For example, the set of candidate blocks (for example, a candidate list, which may be used for storing coding blocks corresponding to the candidate positions) may be determined based on the one or more candidate positions. Then, duplication check may be performed on candidate blocks in the set of candidate blocks. If the set of candidate blocks includes duplicate candidate blocks, only one candidate block is retained. By introducing the duplication check, redundant direction parameters can be avoided, thereby improving the accuracy of prediction.

In some implementations, the prediction value of the current block is determined based on a direction parameter of at least one candidate block in a set of candidate blocks. The set of candidate blocks may be determined based on the one or more candidate positions. The set of candidate blocks may include *M* candidate blocks (where *M* is a positive integer greater than or equal to 1), and ranking of the *M* candidate blocks in the set of candidate blocks is determined based on distances between each of the *M* candidate blocks and the current block. Ranking the *M* candidate blocks according to the distances between each of the *M* candidate blocks and the current block contributes to preferentially finding direction parameters corresponding to candidate positions with shorter distances.

There may be multiple manners of defining the distance between each of the *M* candidate blocks and the current block. For example, a distance between a top-left corner position of each of the *M* candidate blocks and a top-left corner position of the current block may be determined as the distance between each of the *M* candidate blocks and the current block. For another example, a distance between a center position of each of the *M* candidate blocks and a center position of the current block may be determined as the distance between each of the *M* candidate blocks and the current block.

As an example, the *M* candidate blocks include a first candidate block (which may be any candidate block among the *M* candidate blocks). A distance between the first candidate block and the current block is determined based on a difference between a first distance and a second distance. The first distance represents a horizontal distance between a top-left corner position of the first candidate block and a top-left corner position of the current block, and the second distance represents a vertical distance between the top-left corner position of the first candidate block and the top-left corner position of the current block. For example, the distance between the first candidate block and the current block satisfies: (abs(xTL - xNeiTL) + abs(yTL - yNeiTL) + abs(abs(xTL - xNeiTL) - abs(yTL - yNeiTL))), where xTL represents a horizontal coordinate of the top-left corner position of the current block, yTL represents a vertical coordinate of the top-left corner position of the current block, xNeiTL represents a horizontal coordinate of the top-left corner position of the first candidate block, yNeiTL represents a vertical coordinate of the top-left corner position of the first candidate block, and abs represents an operation for obtaining an absolute value. The distance determined in the above distance determination manner is close to a Euclidean distance between two positions, and thus is more accurate. In a specific implementation process, deltaX = abs(xTL - xNeiTL) and deltaY = abs(yTL - yNeiTL) may be first calculated, and then (deltaX + deltaY + abs(deltaX - deltaY)) may be calculated, thereby avoiding unnecessary repetitive operations.

As another example, the *M* candidate blocks include a second candidate block (which may be any candidate block among the *M* candidate blocks). A distance between the second candidate block and the current block satisfies: (abs(xTL - xNeiTL) + abs(yTL - yNeiTL)), where xTL represents a horizontal coordinate of a top-left corner position of the current block, yTL represents a vertical coordinate of the top-left corner position of the current block, xNeiTL represents a horizontal coordinate of a top-left corner position of the second candidate block, yNeiTL represents a vertical coordinate of the top-left corner position of the second candidate block, and abs represents an operation for obtaining an absolute value. The above distance determination manner is compatible with a distance determination manner provided in the related art.

In some implementations, if two candidate blocks among the *M* candidate blocks have equal distances from the current block, a candidate block located on the left of the current block in the two candidate blocks may be ranked higher than a candidate block located above the current block in the two candidate blocks. For example, a priority of the candidate block located on the left of the current block in the two candidate blocks is higher than a priority of the candidate block located above the current block in the two candidate blocks. Alternatively, a value of an index of the candidate block located on the left of the current block in the two candidate blocks is less than a value of an index of the candidate block located above the current block in the two candidate blocks.

In some implementations, if two candidate blocks among the *M* candidate blocks have equal distances from the current block, a candidate block located above the current block in the two candidate blocks may be ranked higher than a candidate block located on the left of the current block in the two candidate blocks. For example, a priority of the candidate block located above the current block in the two candidate blocks is higher than a priority of the candidate block located on the left of the current block in the two candidate blocks. Alternatively, a value of an index of the candidate block located above the current block in the two candidate blocks is less than a value of an index of the candidate block located on the left of the current block in the two candidate blocks.

In some implementations, the prediction value of the current block may be determined based on a direction parameter of at least one candidate block. The at least one candidate block may be determined from a set of candidate blocks, and the set of candidate blocks may be determined based on the one or more candidate positions. Further, in some implementations, the direction parameter of the at least one candidate block may be normalized according to a size (or block size) of the at least one candidate block, and the prediction value of the current block may be determined based on a normalized direction parameter. For example, at least one histogram of gradients in one-to-one correspondence with the at least one candidate block may be first determined. Then, amplitudes (or magnitudes) corresponding to all IPMs in the at least one histogram of gradients may be normalized according to the size of the at least one candidate block, and the prediction value of the current block may be determined based on a normalized histogram of gradients. Normalizing the direction parameter of the candidate block according to the size of the candidate block contributes to improving the accuracy of direction parameter merge.

In some implementations, a target direction parameter may be determined by performing arithmetic averaging or weighted averaging on the direction parameter to be merged (which may be determined based on the one or more candidate positions), and the prediction value of the current block is determined according to the target direction parameter. For example, when the direction parameter to be merged includes one or more histograms of gradients, a histogram of gradients (i.e., the target direction parameter) corresponding to the current block may be obtained by weighting the one or more histograms of gradients, and then the prediction value of the current block may be determined according to the histogram of gradients corresponding to the current block. The weighted averaging of different direction parameters to be merged helps improve the accuracy of direction parameter merge.

A manner of determining a weight of the direction parameter to be merged is not limited in embodiments of the disclosure. For example, as mentioned above, the direction parameter to be merged may be the direction parameter of the at least one candidate block in the set of candidate blocks. Therefore, in some implementations, the weight of the direction parameter to be merged may be determined according to the at least one candidate block.

As an example, the weight of the direction parameter to be merged may be determined according to a distance between the at least one candidate block and the current block. For example, a higher weight may be set for a direction parameter of a candidate block that is closer to the current block among the at least one candidate block, and a lower weight may be set for a direction parameter of a candidate block that is farther from the current block among the at least one candidate block.

As another example, the weight of the direction parameter to be merged may be determined according to a size of the at least one candidate block. For example, a higher weight may be assigned to a block of a larger size among the at least one candidate block, and a lower weight may be assigned to a block of a smaller size among the at least one candidate block.

As yet another example, the weight of the direction parameter to be merged may be determined according to the number of target samples corresponding to the at least one candidate block. The target samples are required for determining the direction parameter in a DIMD mode. The target samples corresponding to the at least one candidate block may be determined based on a size and/or position of the at least one candidate block. For example, a higher weight may be assigned to a block corresponding to a larger number of target samples among the at least one candidate block, and a lower weight may be assigned to a block corresponding to a smaller number of target samples among the at least one candidate block.

As yet another example, an initial weight of the direction parameter to be merged may be first determined based on the number of target samples corresponding to the at least one candidate block, and then the initial weight may be adjusted based on the distance between the at least one candidate block and the current block, to determine a target weight of the direction parameter of the at least one candidate block. A basic manner of adjusting the initial weight may be such that a higher weight is given to a block that is closer to the current block among the at least one candidate block.

As mentioned above, the one or more candidate positions are provided in the reconstructed region of the picture where the current block is located. A search order of the one or more candidate positions is not limited in embodiments of the disclosure. Some possible implementations will be provided below.

In some implementations, the one or more candidate positions may be searched in a search order from near to far relative to the current block.

For example, as mentioned above, in some implementations, the spatial non-neighbouring position among the one or more candidate positions may satisfy at least one of: the absolute value of the horizontal offset of the spatial non-neighbouring position from the top-left corner position of the current block being equal to iDistHor + 1; or, the absolute value of the vertical offset of the spatial non-neighbouring position from the top-left corner position of the current block being equal to iDistVer + 1. iDistHor is *N* times the width of the current block, iDistVer is *N* times the height of the current block, and *N* is a positive integer greater than or equal to 1. For a spatial non-neighbouring position satisfying the above conditions, the smaller a value of *N* corresponding to the spatial non-neighbouring position is, the closer the spatial non-neighbouring position is to the current block, and therefore a search order of that spatial non-neighbouring block may be more in the front.

Taking FIG. 9A as an example, spatial non-neighbouring positions 14 to 16 satisfy the above conditions, and a value of *N* corresponding to spatial non-neighbouring positions 14 to 16 is 1, so a search order of spatial non-neighbouring positions 14 to 16 is relatively in the front (spatial non-neighbouring positions 14 to 16 may be searched after spatial neighbouring positions are completely searched). Spatial non-neighbouring positions 17 to 21 satisfy the above conditions, and a value of *N* corresponding to spatial non-neighbouring positions 17 to 21 is 2, so spatial non-neighbouring positions 17 to 21 may be arranged in a search order after spatial non-neighbouring positions 14 to 16. Spatial non-neighbouring positions 22 to 26 satisfy the above conditions, and a value of *N* corresponding to spatial non-neighbouring positions 22 to 26 is 3, so spatial non-neighbouring positions 22 to 26 may be arranged in a search order after spatial non-neighbouring positions 17 to 21. Spatial non-neighbouring positions 27 to 31 satisfy the above conditions, and a value of *N* corresponding to spatial non-neighbouring positions 27 to 31 is 4, so spatial non-neighbouring positions 27 to 31 may be arranged in a search order after spatial non-neighbouring positions 22 to 26. If multiple spatial non-neighbouring positions correspond to the same value of *N*, an order between the multiple spatial non-neighbouring positions may be randomly set or may be determined according to a certain rule. For example, a search order of a candidate position located on the left of the current block has the highest priority, followed by a search order of a candidate position located above the current block, and then a search order of a candidate position located at the top-left corner of the current block. For another example, the search order of the candidate position located above the current block has the highest priority, followed by the search order of the candidate position located on the left of the current block, and then the search order of the candidate position located at the top-left corner of the current block.

In some implementations, the search order between the one or more candidate positions mentioned above may be determined based on distances (which may refer to absolute distances, i.e., absolute values of the distances) between each of the one or more candidate positions and the current block. A manner of defining the distance between the candidate position and the current block is not limited in embodiments of the disclosure. For example, the distance between the candidate position and the current block may be determined according to a distance between the candidate position and a top-left corner position of the current block. For another example, the distance between the candidate position and the current block may be determined according to a distance between the candidate position and a center position of the current block. For another example, the distance between the candidate position and the current block may be determined according to a distance between the candidate position and a top-right corner position of the current block. For example, the one or more candidate positions have a search order based on the distances between each of the one or more candidate positions and the current block and are ranked in an ascending order of the distances. The closer the candidate position is to the current block, the more similar a direction parameter corresponding to the candidate position is to a direction parameter of the current block. Searching such candidate positions preferentially contributes to obtaining useful reference information more quickly.

Further, in some implementations, if two candidate positions among the one or more candidate positions have equal distances from the current block, a search order between the two candidate positions may be randomly determined.

Alternatively, if two candidate positions among the one or more candidate positions have equal distances from the current block, a candidate position located on the left of the current block in the two candidate positions is searched before a candidate position located above the current block in the two candidate positions.

Alternatively, if two candidate positions among the one or more candidate positions have equal distances from the current block, a candidate position located above the current block in the two candidate positions is searched before a candidate position located on the left of the current block in the two candidate positions.

In some implementations, the direction parameter (for example, the histogram of gradients) may be stored in units of a coding block.

In some implementations, the direction parameter (for example, the histogram of gradients) may be stored in units of a picture block of a fixed size (or a storage unit of a fixed size). For example, the picture block of the fixed size may be a picture block of a relatively large size such as 32*32 or 64*64. If the direction parameter is stored in units of the picture block of the fixed size, then during use, a sample position to be searched may be directly divided by the storage unit to obtain storage coordinates, and a direction parameter corresponding to the storage coordinates may be searched for in a memory based on the storage coordinates. This storage manner of the direction parameter can save memory overhead and is beneficial for hardware implementation.

A specific size of the picture block (or storage unit) mentioned above may be determined based on a resolution of a current picture (i.e., adaptively selected according to the resolution of a current picture). For example, if the resolution of the current picture is relatively low, a picture block (or storage unit) of a relatively small size may be selected, and if the resolution of the current picture is relatively high, a picture block (or storage unit) of a relatively large size may be selected.

As mentioned above, in some implementations, duplication check may be performed on the candidate blocks in the set of candidate blocks. Whether two candidate blocks in the set of candidate blocks are duplicate may be determined based on at least one of: whether the two candidate blocks correspond to the same coding block; or whether a difference between direction parameters of the two candidate blocks satisfies a preset condition.

For example, if two candidate blocks in the set of candidate blocks correspond to the same coding block, it may be determined that the two candidate blocks are duplicate. In this case, only one candidate block may be retained.

For another example, if a difference between direction parameters of two candidate blocks in the set of candidate blocks satisfies the preset condition, it may be determined that the two candidate blocks are duplicate. In this case, only one candidate block may be retained. The preset condition herein may be used for measuring a similarity between the direction parameters of the two candidate blocks. That is to say, if the two candidate blocks correspond to similar direction parameters (or the same HoG characteristics), it may be determined that the two candidate blocks are duplicate. By introducing this duplication determination condition, it is conducive to removing redundant direction parameters, thereby making a result of direction parameter merge more accurate.

There may be multiple manners of determining whether two candidate blocks in the set of candidate blocks are similar. For example, when the two candidate blocks correspond to two histograms of gradients respectively, whether the two candidate blocks are similar may be directly determined according to a similarity between the two histograms of gradients. Alternatively, in some implementations, two sets of IPMs may be respectively determined according to amplitudes corresponding to IPMs in the two histograms of gradients, and whether the two candidate blocks are similar may be determined according to a similarity between the two sets of IPMs.

Exemplarily, the two candidate blocks in the set of candidate blocks include a first candidate block and a second candidate block. The first candidate block corresponds to a first histogram of gradients, and the second candidate block corresponds to a second histogram of gradients. *S* IPMs with highest amplitudes in the first histogram of gradients form a first set (i.e., amplitudes of gradients corresponding to the *S* IPMs in the first histogram of gradients are highest, where *S* is a positive integer greater than or equal to 1, for example, *S* may be 3, 4, or 5), and *S* IPMs with highest amplitudes in the second histogram of gradients form a second set (i.e., amplitudes of gradients corresponding to the *S* IPMs in the second histogram of gradients are highest). Whether the direction parameters of the two candidate blocks are similar (or whether the two candidate blocks are duplicate) may be determined based on whether the first set and the second set are similar.

In some implementations, whether the two candidate blocks are duplicate may be determined based on the number of identical IPMs in the first set and the second set.

For example, if the number of identical IPMs in the first set and the second set is greater than or equal to a second threshold, it may be determined that the two candidate blocks are duplicate. In other words, if values of IPMs in the first set and the second set are highly overlapped, it may be determined that the two candidate blocks are duplicate.

For another example, if a ratio of an intersection of the first set and the second set to a union of the first set and the second set is greater than or equal to a fourth threshold (for example, 0.5), the two candidate blocks are duplicate. Specifically, a similarity between the first set and the second set may be determined by calculating the ratio of the intersection of the first set and the second set to the union of the first set and the second set according to the Jaccard similarity criterion. A value of the Jaccard similarity index ranges from 0 to 1, where 1 indicates that two sets are identical, and 0 indicates that the two sets have no elements in common. If the ratio of the intersection of the first set and the second set to the union of the first set and the second set is greater than 0.5, the first set and the second set are considered similar, and thus it may be determined that the two candidate blocks are duplicate.

In some implementations, whether the two candidate blocks are duplicate may be determined based on a difference between a first IPM in the first set and a second IPM in the second set, where the first set does not include the second IPM, and the second set does not include the first IPM. In other words, the first IPM and the second IPM are IPMs that differ in the first set and the second set.

For example, if the difference (or a maximum difference) between the first IPM and the second IPM is less than or equal to a third threshold, it may be determined that the two candidate blocks are duplicate. For example, the third threshold may be 3, 4, or 5.

In some implementations, at least one of the following may be determined based on a size of the current block: the number of the direction parameter to be merged (for example, the number of histograms of gradients to be merged); or the number of IPMs for determining the prediction value (where this number may indicate how many prediction values corresponding to IPMs are needed for weighted blending to determine the prediction value of the current block). In other words, one or more of the number of the direction parameter to be merged or the number of IPMs for determining the prediction value may be adaptively adjusted according to the size of the current block.

For example, for a block with a size less than or equal to 16x16, the number of histograms of gradients to be merged may be reduced. Exemplarily, for a block with a size less than or equal to 16x16, only three histograms of gradients may be used for arithmetic averaging to determine a histogram of gradients corresponding to the current block.

For another example, for a block with a size greater than 16x16, the number of histograms of gradients to be merged may be increased.

For another example, for a block with a size less than or equal to 16x16, during weighted blending for prediction values corresponding to multiple IPMs to generate the prediction value of the current block, a smaller number of IPMs may be used. For example, only prediction values corresponding to two IPMs may be used for weighted blending to generate the prediction value of the current block.

For another example, for a block with a size greater than 16x16, during weighted blending for prediction values corresponding to multiple IPMs to generate the prediction value of the current block, a larger number of IPMs may be used.

The spatial non-neighbouring position mentioned above may be determined based on a certain search strategy. For example, a search distance and a search direction may be first determined, and then with a position of the current block as a reference, a two-dimensional search may be performed around the current block according to a search step length and the search direction, to determine the spatial non-neighbouring position.

Alternatively, in some implementations, the spatial non-neighbouring position may be determined based on a first mapping relationship pre-established, where the first mapping relationship is a mapping relationship between an index of the spatial non-neighbouring position and a coordinate of the spatial non-neighbouring position. For example, a one-dimensional list may be used for sequentially storing a mapping relationship between indexes and coordinates of spatial non-neighbouring positions to be searched for the current block. In practical use, the spatial non-neighbouring position may be directly found according to this one-dimensional list.

Alternatively, in some implementations, the spatial non-neighbouring position is determined based on a first mapping relationship and a second mapping relationship pre-established. The first mapping relationship is a mapping relationship between an index of the spatial non-neighbouring position and a search distance (for example, a distance between the spatial non-neighbouring position and a top-left corner position of the current block), and the second mapping relationship is a mapping relationship between the index of the spatial non-neighbouring position and a search direction (for example, a direction of the spatial non-neighbouring position relative to the current block). For example, one of two one-dimensional lists may be used for storing the mapping relationship between the index of the spatial non-neighbouring position and the search distance, and the other of the two one-dimensional lists may be used for storing the mapping relationship between the index of the spatial non-neighbouring position and the search direction. In practical use, coordinates of the spatial non-neighbouring position may be derived according to a combination of the two one-dimensional lists, and then the spatial non-neighbouring position may be determined according to the coordinates of the spatial non-neighbouring position.

In some implementations, the above pre-defined position or spatial non-neighbouring position may be determined based on second information parsed from a bitstream. The second information may be used for adjusting the pre-defined size mentioned above. For example, the second information may be used for scaling the pre-defined size.

The second information may be a high-level syntax element carried in the bitstream. The second information may be used for directly adjusting the pre-defined size, or may be used for indirectly adjusting the pre-defined size.

For example, it is assumed that the spatial non-neighbouring position may satisfy at least one of: an absolute value of a horizontal offset of the spatial non-neighbouring position from a top-left corner position of the current block being equal to iDistHor + 1 (hereinafter referred to as condition 1); or, an absolute value of a vertical offset of the spatial non-neighbouring position from the top-left corner position of the current block being equal to iDistVer + 1 (hereinafter referred to as condition 2). iDistHor is equal to a pre-defined horizontal size, and iDistVer is equal to a pre-defined vertical size. iDistHor and iDistVer may represent a horizontal search step length and a vertical search step length, respectively. iDistHor may be determined based on the width of the current block. iDistVer may be determined based on the height of the current block. That is to say, a search step length for the spatial non-neighbouring position may be determined by using the size of the current block as a search-step-length reference.

In the above example, the second information may be used for directly adjusting (for example, scaling) iDistHor and iDistVer, or may be used for adjusting (for example, scaling) a search reference and thus indirectly scaling iDistHor and iDistVer.

The second information may be determined based on a video resolution. For example, for low-resolution video, the search-step-length reference is reduced, and for high-resolution video, the search-step-length reference is increased.

As can be seen from the above description, adjusting the pre-defined size based on the second information is equivalent to changing the search-step-length reference or search step length for the spatial non-neighbouring position. Therefore, in some implementations, the second information may be used for adjusting the search step length or search-step-length reference.

In some implementations, the above pre-defined position or spatial non-neighbouring position may be determined based on third information parsed from a bitstream. The third information may be used for adjusting the number of the above pre-defined positions or spatial non-neighbouring positions.

The third information may be a high-level syntax element carried in the bitstream. The third information may be used for directly adjusting the pre-defined position or spatial non-neighbouring position, or may be used for indirectly adjusting the pre-defined position or spatial non-neighbouring position.

For example, it is assumed that the spatial non-neighbouring position may satisfy at least one of: an absolute value of a horizontal offset of the spatial non-neighbouring position from a top-left corner position of the current block being equal to iDistHor + 1 (hereinafter referred to as condition 1); or, an absolute value of a vertical offset of the spatial non-neighbouring position from the top-left corner position of the current block being equal to iDistVer + 1 (hereinafter referred to as condition 2). iDistHor is equal to a pre-defined horizontal size, and iDistVer is equal to a pre-defined vertical size. iDistHor and iDistVer may represent a horizontal search step length and a vertical search step length, respectively. iDistHor may be *N* times the width of the current block. iDistVer may be *N* times the height of the current block. A search range of the spatial non-neighbouring position is determined based on a value of *N*.

In the above example, the third information may be used for adjusting a maximum value of *N*, and thus adjusting the search range of the spatial non-neighbouring position. The adjustment of the search range of the spatial non-neighbouring position also changes the number of spatial non-neighbouring positions.

The third information may be determined based on a video resolution. For example, for low-resolution video, region search corresponding to a 4-fold search-step-length reference may be cancelled (i.e., the maximum value of *N* is 3). For another example, for low-resolution video, region search corresponding to 4-fold and 3-fold search-step-length references may be cancelled (i.e., the maximum value of *N* is 2). For another example, for high-resolution video, region search corresponding to a 5-fold search-step-length reference may be introduced (i.e., the maximum value of *N* is 5). For another example, for high-resolution video, region search corresponding to 5-fold and 6-fold search-step-length references may be introduced (i.e., the maximum value of *N* is 6).

As can be seen from the above description, based on the third information, the number of spatial non-neighbouring positions may be adjusted through adjustment of the search range of the spatial non-neighbouring position. Therefore, in some implementations, the third information may be used for adjusting the search range of the spatial non-neighbouring position.

In some implementations, the candidate positions may be adaptively determined based on a size of the current block and a size of a candidate block around the current block. How to adaptively determine the candidate positions has been described in detail above based on implementation 2. Different from implementation 2, in this implementation, the one or more candidate positions adaptively determined based on the size of the current block and the size of the candidate block around the current block may not include the spatial non-neighbouring position of the current block. For example, candidate positions 8 to 13 in FIG. 7A may not be included, i.e., search is performed only at candidate positions 1 to 7.

In some implementations, the prediction value of the current block is determined based on direction parameters of one or more candidate blocks. The one or more candidate blocks may be determined based on a cost corresponding to a candidate block in a set of candidate blocks (which is determined based on the one or more candidate positions). A manner of determining the cost corresponding to the candidate block in the set of candidate blocks is not limited in embodiments of the disclosure. For example, the cost corresponding to the candidate block in the set of candidate blocks may be determined based on a prediction value of a template region of the current block and a reconstructed value of the template region, where the prediction value of the template region is determined based on a direction parameter of the candidate block in the set of candidate blocks. For example, the template region of the current block may refer to a top region and/or a left region neighbouring to the current block. The cost corresponding to the candidate block in the set of candidate blocks may be determined based on a sum of absolute transformed differences (SATD) or a sum of absolute differences (SAD) between the prediction value of the template region and the reconstructed value of the template region.

The one or more candidate blocks mentioned above may be candidate blocks corresponding to minimum costs in the set of candidate blocks. Alternatively, the one or more candidate blocks may be candidate blocks obtained by ranking candidate blocks in the set of candidate blocks based on costs (before the ranking, the candidate blocks in the set of candidate blocks may be ranked once based on positions of the candidate blocks or distances from the candidate blocks to the current block).

For example, the one or more candidate blocks may refer to one candidate block corresponding to the minimum cost. In other words, the prediction value of the current block may be directly determined based on the one candidate block corresponding to the minimum cost.

For another example, the one or more candidate blocks may refer to two candidate blocks corresponding to the minimum costs. In other words, the prediction value of the current block may be determined based on direction parameters of the two candidate blocks corresponding to the minimum costs.

For another example, the one or more candidate blocks may refer to three or five candidate blocks corresponding to the minimum costs. In other words, the prediction value of the current block may be determined based on direction parameters of the three or five candidate blocks corresponding to the minimum costs.

For another example, the one or more candidate blocks may refer to one or more highest-ranked candidate blocks obtained by ranking the candidate blocks in the set of candidate blocks based on the costs. Exemplarily, the one or more candidate blocks may refer to the first three or five highest-ranked candidate blocks obtained by ranking the candidate blocks in the set of candidate blocks based on the costs.

There may be multiple manners of determining the prediction value of the current block based on the direction parameters of the one or more candidate blocks after the one or more candidate blocks are determined based on the costs.

In some implementations, first, a target direction parameter may be determined by performing weighted averaging on the direction parameters of the one or more candidate blocks. Then, the prediction value of the current block is determined based on the target direction parameter. Weights of the direction parameters of the one or more candidate blocks may be determined based on costs corresponding to the one or more candidate blocks. For example, the weights of the direction parameters of the one or more candidate blocks may be set such that the greater the costs corresponding to the one or more candidate blocks, the smaller the weights of the one or more candidate blocks.

For example, direction parameters of two candidate blocks corresponding to the minimum costs in the set of candidate blocks may be used for weighted averaging. The two candidate blocks are referred to as candidate block 1 and candidate block 2 respectively. Candidate block 1 corresponds to the smallest cost, and candidate block 2 corresponds to the second smallest cost. A cost corresponding to candidate block 1 is referred to as costMode1, and a weight corresponding to candidate block 1 is referred to as weight1. A cost corresponding to candidate block 2 is referred to as costMode2, and a weight corresponding to candidate block 2 is referred to as weight2. Weights of the two candidate blocks may be assigned according to the magnitude of the costs. A possible weight assignment manner is: weight1 = costMode2/(costMode1 + costMode2) and weight2 = 1 - weight1. Alternatively, in some implementations, if costMode2 < scale*costMode1 (where scale, for example, may be set to 2), weighted averaging is performed on the direction parameters of the two candidate blocks, and the prediction value of the current block is determined based on a direction parameter generated after the weighted averaging. Otherwise, the prediction value of the current block is determined based only on a direction parameter of candidate block 1.

For another example, weighted averaging may be performed on direction parameters of up to five candidate blocks in the set of candidate blocks according to the costs. Weights of the five candidate blocks may be assigned according to the magnitude of the costs. A possible weight assignment manner is: assuming that n is the number of candidate blocks for weighted averaging, $sum = {\sum }_{i = 0}^{4} costMode _ i$, and i=0...4, then weight_j=(sum-costMode_j) /(n-1)sum, where j=0...4.

In some implementations, candidate prediction values (or candidate prediction blocks) of the one or more candidate blocks may be first determined. Then, the prediction value of the current block is determined based on the candidate prediction values of the one or more candidate blocks (i.e., the prediction value of the current block is determined by fusing the candidate prediction values of the one or more candidate blocks). Weights of the direction parameters of the one or more candidate blocks may be determined based on costs corresponding to the one or more candidate blocks. For example, the weights of the direction parameters of the one or more candidate blocks may be set such that the greater the costs corresponding to the one or more candidate blocks, the smaller the weights of the one or more candidate blocks.

For example, the one or more candidate blocks include two candidate blocks, where the two candidate blocks are candidate block 1 and candidate block 2 respectively. Candidate block 1 corresponds to the smallest cost, and candidate block 2 corresponds to the second smallest cost. A cost corresponding to candidate block 1 is referred to as costMode1, a weight corresponding to candidate block 1 is referred to as weight1, and a candidate prediction block corresponding to candidate block 1 is referred to as p1. A cost corresponding to candidate block 2 is referred to as costMode2, a weight corresponding to candidate block 2 is referred to as weight2, and a candidate prediction block corresponding to candidate block 2 is referred to as p2. Weights may be assigned according to the magnitude of costMode1 and costMode2. For example, weight1 = costMode2/(costMode1 + costMode2), and weight2 = 1 - weight1. A final prediction value of the current block may be weight1*p1 + weight2*p2. Alternatively, if costMode2 < scale*costMode1 (where scale, for example, may be set to 2), the prediction value of the current block may be determined by fusing candidate prediction values of candidate block 1 and candidate block 2. Otherwise, a prediction value of candidate block 1 is determined as the prediction value of the current block.

Alternatively, the prediction value of the current block may be determined based on candidate prediction values of more candidate blocks (for example, five candidate blocks). Weights may be assigned according to the magnitude of costs corresponding to respective candidate blocks. A possible weight assignment manner is: assuming that n is the number of candidate blocks, $sum = {\sum }_{i = 0}^{4} costMode _ i$, and i=0...4, then weight_j=(sum-costMode_j) /(n-1)sum, where j=0...4, and in this case, a final prediction value of the current block is ∑ weight_j * pj.

Certainly, if the one or more candidate blocks mentioned above include only one candidate block, a prediction value of the one candidate block may be determined as the prediction value of the current block.

In some implementations, the one or more candidate positions mentioned above may be indicated based on an index parsed from a bitstream.

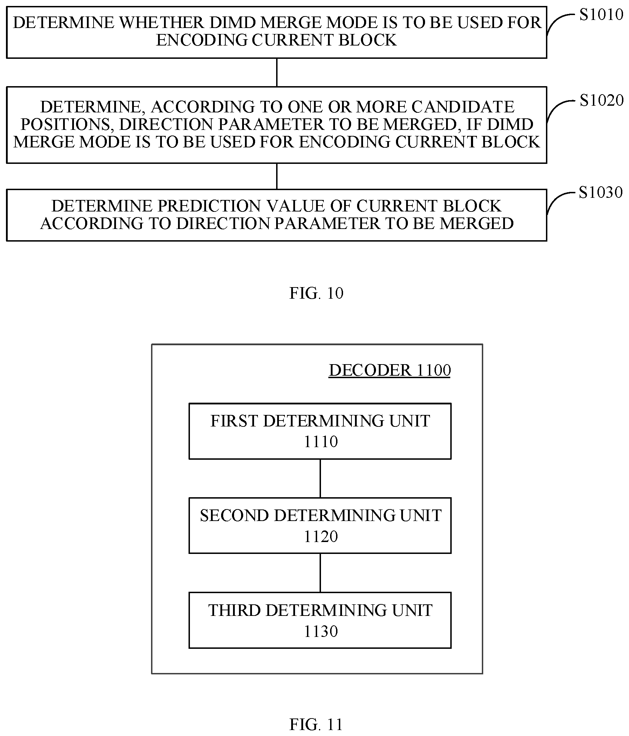

The decoding method provided in embodiments of the disclosure is described in detail above with reference to FIG. 8. With reference to FIG. 10, the following will provide detailed illustrative examples of an encoding method provided in embodiments of the disclosure.

FIG. 10 is a schematic flowchart of an encoding method provided in embodiments of the disclosure. The method in FIG. 10 may also be referred to as an intra prediction method or a prediction method based on a DIMD merge mode. The method in FIG. 10 may be applied to an encoder, for example, an intra prediction unit in the encoder.

As illustrated in FIG. 10, in operations at S1010, whether a DIMD merge mode is to be used for encoding a current block is determined. The current block may also be referred to as a current coding block or a current CU. For example, the current block may be a luma block.

In operations at S1020, if the DIMD merge mode is to be used for encoding the current block, a direction parameter to be merged is determined according to one or more candidate positions. The one or more candidate positions are located in a reconstructed region of a picture where the current block is located.

In some implementations, the number of the above one or more candidate positions may be greater than 13. For example, the number of the above one or more candidate positions may be greater than or equal to 16, 18, 21, 26, or 31. The number of candidate positions provided in embodiments of the disclosure is greater than the number of candidate positions provided in the related art (where 13 candidate positions are provided in the related art). Therefore, in other words, in embodiments of the disclosure, candidate blocks are searched for in a larger search region or at more candidate positions, thereby contributing to improving the accuracy of prediction.

In some implementations, the above one or more candidate positions may include a spatial neighbouring position (also referred to as a neighbouring reference sample) and/or a spatial non-neighbouring position (also referred to as a non-neighbouring reference sample). For example, search may be performed at X1 spatial neighbouring positions and X2 spatial non-neighbouring positions around the current block. For example, a value of X1 may be less than or equal to 13. For example, a value of X2 may be 3, 5, 8, 13, or 18. In embodiments of the disclosure, the search region is expanded, which contributes to obtaining more available candidate blocks and thus improving the accuracy of prediction. Taking FIG. 9A as an example, there are 13 spatial neighbouring positions and 18 spatial non-neighbouring positions around the current block. By comparing FIG. 6 and FIG. 9A, it is clear that the embodiments of the disclosure provide more candidate positions than the related art.

In some implementations, candidate positions around the current block include a spatial non-neighbouring position. The spatial non-neighbouring position is determined based on a pre-defined position and/or a pre-defined size. For example, the pre-defined size may include a pre-defined horizontal size (or horizontal step length) and/or a pre-defined vertical size (or vertical step length).

In some implementations, the above pre-defined position or spatial non-neighbouring position may be determined based on one or more of: a position of the current block (for example, a top-left corner position of the current block); a size of the current block (for example, a width and/or a height of the current block); a size of a neighbouring block of the current block (for example, a width and/or a height of the neighbouring block); the pre-defined horizontal size; or the pre-defined vertical size.

In some implementations, the above pre-defined size (which may include, for example, the pre-defined horizontal size and/or the pre-defined vertical size) may be determined based on the size of the current block. For example, the pre-defined horizontal size is determined based on the width of the current block. For another example, the pre-defined vertical size is determined based on the height of the current block. As a more specific example, the pre-defined horizontal size is *N* times the width of the current block, and the pre-defined vertical size is *N* times the height of the current block, where *N* is a positive integer greater than or equal to 1.

In some implementations, the above pre-defined size (which may include, for example, the pre-defined horizontal size and/or the pre-defined vertical size) may be independent of the size of the current block. For example, the pre-defined horizontal size and/or the pre-defined vertical size each may be a fixed value, which may include, for example, one or more of 4, 8, 16, 32, or 64.

For example, a spatial non-neighbouring position to be searched around the current block may satisfy at least one of: an absolute value of a horizontal offset of the spatial non-neighbouring position from a top-left corner position of the current block being equal to iDistHor + 1 (hereinafter referred to as condition 1); or, an absolute value of a vertical offset of the spatial non-neighbouring position from the top-left corner position of the current block being equal to iDistVer + 1 (hereinafter referred to as condition 2). iDistHor is equal to a pre-defined horizontal size, and iDistVer is equal to a pre-defined vertical size.

In some implementations, iDistHor may be a fixed value (which may include, for example, one or more of 4, 8, 16, 32, or 64) or may be determined based on the size of the current block (for example, the width of the current block). For example, iDistHor may be *N* times the width of the current block, where *N* is a positive integer greater than or equal to 1.

In some implementations, iDistVer may be a fixed value (which may include, for example, one or more of 4, 8, 16, 32, or 64) or may be determined based on the size of the current block (for example, the height of the current block). For example, iDistVer may be *N* times the height of the current block, where *N* is a positive integer greater than or equal to 1.

iDistHor and iDistVer may represent a search distance. By determining iDistHor and/or iDistVer based on the size of the current block, the search distance can be adaptively adjusted based on the size of the current block, and thus direction parameters found are more accurate.

Taking FIG. 9A as an example, the above spatial non-neighbouring position includes candidate positions 14 to 16. As can be seen from FIG. 9A, candidate position 14 satisfies condition 1, candidate position 15 satisfies condition 2, and candidate position 16 satisfies both condition 1 and condition 2. In addition, a value of *N* corresponding to candidate positions 14 to 16 is 1, i.e., iDistHor is equal to the width of the current block, and iDistVer is equal to the height of the current block. That is to say, with a position of the current block as a start position and a step length equal to once the size of the current block as a search step length, spatial non-neighbouring positions 14 to 16 may be found near a search region defined by that step length.

Still taking FIG. 9A as an example, the spatial non-neighbouring position of the current block includes candidate positions 17 to 21. As can be seen from FIG. 9A, candidate position 17 satisfies condition 1, candidate position 18 satisfies condition 2, candidate position 19 satisfies condition 2, candidate position 20 satisfies condition 1, and candidate position 21 satisfies both condition 1 and condition 2. In addition, a value of *N* corresponding to candidate positions 17 to 21 is 2, i.e., iDistHor is two times the width of the current block, and iDistVer is two times the height of the current block. That is to say, with a position of the current block as a start position and a step length equal to two times the size of the current block as a search step length, spatial non-neighbouring positions 17 to 21 may be found near a search region defined by that step length.

Still taking FIG. 9A as an example, the spatial non-neighbouring position of the current block includes candidate positions 22 to 26. As can be seen from FIG. 9A, candidate position 22 satisfies condition 1, candidate position 23 satisfies condition 2, candidate position 24 satisfies condition 2, candidate position 25 satisfies condition 1, and candidate position 26 satisfies both condition 1 and condition 2. In addition, a value of *N* corresponding to candidate positions 22 to 26 is 3, i.e., iDistHor is three times the width of the current block, and iDistVer is three times the height of the current block. That is to say, with a position of the current block as a start position and a step length equal to three times the size of the current block as a search step length, spatial non-neighbouring positions 22 to 26 may be found near a search region defined by that step length.

Still taking FIG. 9A as an example, the spatial non-neighbouring position of the current block includes candidate positions 27 to 31. As can be seen from FIG. 9A, candidate position 27 satisfies condition 1, candidate position 28 satisfies condition 2, candidate position 29 satisfies condition 2, candidate position 30 satisfies condition 1, and candidate position 31 satisfies both condition 1 and condition 2. In addition, a value of *N* corresponding to candidate positions 27 to 31 is 4, i.e., iDistHor is four times the width of the current block, and iDistVer is four times the height of the current block. That is to say, with a position of the current block as a start position and a step length equal to four times the size of the current block as a search step length, spatial non-neighbouring positions 27 to 31 may be found near a search region defined by that step length.

As mentioned above, iDistHor is *N* times the width of the current block, and iDistVer is *N* times the height of the current block. Alternatively, iDistHor is *N* times a width of a left neighbouring block of the current block, and iDistVer is *N* times a height of a top neighbouring block of the current block.

In some implementations, the value of *N* mentioned above may be less than or equal to 4. For example, the value of *N* includes 1, 2, 3, and 4. Certainly, the value of *N* may also be greater than 4. For example, *N* is 5, 6, or 7. By setting the value of *N* to be less than or equal to 4, the implementation complexity of the search process can be minimized while obtaining sufficient direction parameters.

In some implementations, the above spatial non-neighbouring position satisfies: xNb = xTL + offsetX and yNb = yTL + offsetY. offsetX and offsetY satisfy at least one of: offsetX = uiWidth + iDistHor - 1 and offsetY = -iDistVer - 1; offsetX = uiWidth >> 1 and offsetY = - iDistVer - 1; offsetX = -iDistHor - 1 and offsetY = -iDistVer - 1; offsetX = -iDistHor - 1 and offsetY = uiHeigth >> 1; or offsetX = -iDistHor - 1 and offsetY = uiHeigth + iDistVer - 1. xNb represents a horizontal coordinate of the spatial non-neighbouring position, yNb represents a vertical coordinate of the spatial non-neighbouring position, xTL represents a horizontal coordinate of the top-left corner position of the current block, yTL represents a vertical coordinate of the top-left corner position of the current block, uiWidth represents the width of the current block, and uiHeigth represents the height of the current block.

The above spatial non-neighbouring positions provided in embodiments of the disclosure are evenly distributed around the current block, thereby enabling as many available direction parameters as possible to be found with as few candidate positions as possible.

Taking FIG. 9A as an example, assuming *N* = 1, then iDistHor is equal to the width of the current block, and iDistVer is equal to the height of the current block. Further, if offsetX = uiWidth + iDistHor - 1 and offsetY = -iDistVer - 1, then a spatial non-neighbouring position (xNb, yNB) refers to candidate position 15 in FIG. 9A. If offsetX = uiWidth >> 1 and offsetY = - iDistVer - 1, then the spatial non-neighbouring position (xNb, yNB) is located directly above the current block and has the same horizontal position as candidate position 15 (not numbered in FIG. 9A). If offsetX = -iDistHor - 1 and offsetY = -iDistVer - 1, then the spatial non-neighbouring position (xNb, yNB) refers to candidate position 16 in FIG. 9A. If offsetX = - iDistHor - 1 and offsetY = uiHeigth >> 1, then the spatial non-neighbouring position (xNb, yNB) is located directly on the left of the current block and has the same vertical position as candidate position 16 (not numbered in FIG. 9A). If offsetX = -iDistHor - 1 and offsetY = uiHeigth + iDistVer - 1, then the spatial non-neighbouring position (xNb, yNB) refers to candidate position 16 in FIG. 9A. Further, in some implementations, when *N* = 1, offsetX and offsetY satisfy at least one of: offsetX = uiWidth + iDistHor - 1 and offsetY = -iDistVer - 1; offsetX = -iDistHor - 1 and offsetY = -iDistVer - 1; or offsetX = -iDistHor - 1 and offsetY = uiHeigth + iDistVer - 1. Still taking FIG. 9A as an example, when *N* = 1, the spatial non-neighbouring position (xNb, yNB) may include candidate positions 14 to 16 in FIG. 9A.

Taking FIG. 9A as an example, assuming *N* = 2, then iDistHor is two times the width of the current block, and iDistVer is two times the height of the current block. Further, if offsetX = uiWidth + iDistHor - 1 and offsetY = -iDistVer - 1, then a spatial non-neighbouring position (xNb, yNB) refers to candidate position 18 in FIG. 9A. If offsetX = uiWidth >> 1 and offsetY = - iDistVer - 1, then the spatial non-neighbouring position (xNb, yNB) refers to candidate position 19 in FIG. 9A. If offsetX = -iDistHor - 1 and offsetY = -iDistVer - 1, then the spatial non-neighbouring position (xNb, yNB) refers to candidate position 21 in FIG. 9A. If offsetX = - iDistHor - 1 and offsetY = uiHeigth >> 1, then the spatial non-neighbouring position (xNb, yNB) refers to candidate position 20 in FIG. 9A. If offsetX = -iDistHor - 1 and offsetY = uiHeigth + iDistVer - 1, then the spatial non-neighbouring position (xNb, yNB) refers to candidate position 17 in FIG. 9A.

Taking FIG. 9A as an example, assuming *N* = 3, then iDistHor is three times the width of the current block, and iDistVer is three times the height of the current block. Further, if offsetX = uiWidth + iDistHor - 1 and offsetY = -iDistVer - 1, then a spatial non-neighbouring position (xNb, yNB) refers to candidate position 23 in FIG. 9A. If offsetX = uiWidth >> 1 and offsetY = -iDistVer - 1, then the spatial non-neighbouring position (xNb, yNB) refers to candidate position 24 in FIG. 9A. If offsetX = -iDistHor - 1 and offsetY = -iDistVer - 1, then the spatial non-neighbouring position (xNb, yNB) refers to candidate position 26 in FIG. 9A. If offsetX = -iDistHor - 1 and offsetY = uiHeigth >> 1, then the spatial non-neighbouring position (xNb, yNB) refers to candidate position 25 in FIG. 9A. If offsetX = -iDistHor - 1 and offsetY = uiHeigth + iDistVer - 1, then the spatial non-neighbouring position (xNb, yNB) refers to candidate position 22 in FIG. 9A.

Taking FIG. 9A as an example, assuming *N* = 4, then iDistHor is four times the width of the current block, and iDistVer is four times the height of the current block. Further, if offsetX = uiWidth + iDistHor - 1 and offsetY = -iDistVer - 1, then a spatial non-neighbouring position (xNb, yNB) refers to candidate position 28 in FIG. 9A. If offsetX = uiWidth >> 1 and offsetY = - iDistVer - 1, then the spatial non-neighbouring position (xNb, yNB) refers to candidate position 29 in FIG. 9A. If offsetX = -iDistHor - 1 and offsetY = -iDistVer - 1, then the spatial non-neighbouring position (xNb, yNB) refers to candidate position 31 in FIG. 9A. If offsetX = - iDistHor - 1 and offsetY = uiHeigth >> 1, then the spatial non-neighbouring position (xNb, yNB) refers to candidate position 30 in FIG. 9A. If offsetX = -iDistHor - 1 and offsetY = uiHeigth + iDistVer - 1, then the spatial non-neighbouring position (xNb, yNB) refers to candidate position 27 in FIG. 9A.

In some implementations, the spatial non-neighbouring position satisfies at least one of: being located on the top right of the current block, being located directly above the current block, being located on the top left of the current block, being located directly on the left of the current block, or being located on the bottom left of the current block. If a direction of a horizontal coordinate is used as a reference, the spatial non-neighbouring position satisfies at least one of: being located in a direction of 45° from the current block, being located in a direction of 90° from the current block, being located in a direction of 135° from the current block, being located in a direction of 180° from the current block, or being located in a direction of 225° from the current block. The above directions may be referred to as search directions of the spatial non-neighbouring position. That is to say, with a position of the current block as a reference, a search operation may be performed in the above directions to determine the spatial non-neighbouring position of the current block. A search step length in each search direction may be determined based on *N* (or iDistHor and iDistVer) mentioned above. The above spatial non-neighbouring positions provided in embodiments of the disclosure are evenly distributed around the current block, thereby enabling as many available direction parameters as possible to be found with as few candidate positions as possible.

The implementation of operations at S1010 is not limited in embodiments of the disclosure. Several possible implementations will be provided below.

In some implementations, whether the DIMD merge mode is to be used for encoding the current block may be determined as follows. If the one or more candidate positions have no corresponding candidate block and/or candidate blocks corresponding to the one or more candidate positions are unavailable, it is determined that the DIMD merge mode is not to be used for encoding the current block; and/or, if the one or more candidate positions have a corresponding candidate block and/or candidate blocks corresponding to the one or more candidate positions are available, it is determined that the DIMD merge mode is to be used for encoding the current block. A usage condition of the DIMD merge mode is limited in embodiments of the disclosure, thereby significantly reducing the coding complexity.

Further, in some implementations, the one or more candidate positions may include a spatial non-neighbouring position. In this case, if each spatial non-neighbouring position has no corresponding candidate block and/or a candidate block corresponding to the spatial non-neighbouring position is unavailable, it is determined that the DIMD merge mode is not to be used for encoding the current block; and/or, if the spatial non-neighbouring position has a corresponding candidate block and/or the candidate block corresponding to the spatial non-neighbouring position is unavailable, it is determined that the DIMD merge mode is to be used for encoding the current block.

In some implementations, whether the DIMD merge mode is to be used for encoding the current block may be determined as follows. Whether the DIMD merge mode is to be used for encoding the current block is determined according to whether a size of the current block satisfies a first condition. For example, if a target size is less than or equal to a first threshold, it is determined that the DIMD merge mode is to be used for encoding the current block; and/or, if the target size is greater than the first threshold, it is determined that the DIMD merge mode is not to be used for encoding the current block. The target size is determined based on the size of the current block. The target size may be determined based on at least one of: a width of the current block; a height of the current block; a product of the width and the height of the current block; a maximum value of the width and the height of the current block; or a minimum value of the width and the height of the current block. For example, the target size is the width of the current block. For another example, the target size is the height of the current block. For another example, the target size is the width of the current block × the height of the current block. For another example, the target size is the maximum value of the width and the height of the current block. For another example, the target size is the minimum value of the width and the height of the current block. A usage condition of the DIMD merge mode is limited in embodiments of the disclosure, thereby significantly reducing the coding complexity.

The first threshold may be indicated to the decoding end via first information. For example, the first information may be represented by sps_dimd_merge_cand_max_size. The first information may have multiple candidate values, the multiple candidate values correspond to multiple thresholds respectively, and the first threshold corresponds to a current value of the first information. For example, the candidate value of the first information includes at least one of a first value (for example, 0), a second value (for example, 1), or a third value (for example, 2). A threshold corresponding to the first value is 32 × 32, a threshold corresponding to the second value is 16 × 32, and a threshold corresponding to the third value is 16 × 16. If the current value of the first information is the first value, the first threshold is 32 × 32, i.e., 1024. If the current value of the first information is the second value, the first threshold is 16 × 32, i.e., 512. If the current value of the first information is the third value, the first threshold is 16 × 16, i.e., 256.

An example that the first information is sps_dimd_merge_cand_max_size and the first value, the second value, and the third value are 0, 1, and 2 respectively will be taken below for more detailed illustration of a manner of determining the first condition.

### Example 1

In this example, if a value of sps_dimd_merge_cand_max_size is 0, *threshold* is set to 32*32 (i.e., 1024). If the value of sps_dimd_merge_cand_max_size is 1, *threshold* is set to 16*32 (i.e., 512). If the value of sps_dimd_merge_cand_max_size is 2, *threshold* is set to 16*16 (i.e., 256). In an actual encoding process, an enable/disable state of DIMD merge may be set according to a syntax element sps_dimd_merge_cand_max_size and a threshold *threshold*.

For example, if the value of sps_dimd_merge_cand_max_size is 0 and the width (uiWidth) of the current block * the height (uiHeight) of the current block is less than or equal to *threshold*, DIMD merge is enabled, and otherwise, DIMD merge is disabled.

For another example, if the value of sps_dimd_merge_cand_max_size is 1 and the width (uiWidth) of the current block * the height (uiHeight) of the current block is less than *threshold*, DIMD merge is enabled, and otherwise, DIMD merge is disabled.

For another example, if the value of sps_dimd_merge_cand_max_size is 2 and the width (uiWidth) of the current block * the height (uiHeight) of the current block is less than *threshold*, DIMD merge is enabled, and otherwise, DIMD merge is disabled.

In addition to determining the first threshold based on the first information parsed from the bitstream, the first threshold may be set to a pre-defined fixed value. For example, the fixed value may be 32 × 32, i.e., 1024. For another example, the fixed value may be 16 × 32, i.e., 512. For another example, the fixed value may be 16 × 16, i.e., 256.

### Example 2

In this example, if a value of sps_dimd_merge_cand_max_size is 0, *threshold* is set to 32. If the value of sps_dimd_merge_cand_max_size is 1, *threshold* is set to 16. If the value of sps_dimd_merge_cand_max_size is 2, *threshold* is set to 8. In an actual encoding process, an enable/disable state of DIMD merge may be set according to a syntax element sps_dimd_merge_cand_max_size and a threshold *threshold*.

For example, if the value of sps_dimd_merge_cand_max_size is 0 and the maximum value (or minimum value) of the width (uiWidth) and the height (uiHeight) of the current block is less than or equal to *threshold*, DIMD merge is enabled, and otherwise, DIMD merge is disabled.

For another example, if the value of sps_dimd_merge_cand_max_size is 1 and the maximum value (or minimum value) of the width (uiWidth) and the height (uiHeight) of the current block is less than *threshold*, DIMD merge is enabled, and otherwise, DIMD merge is disabled.

For another example, if the value of sps_dimd_merge_cand_max_size is 2 and the maximum value (or minimum value) of the width (uiWidth) and the height (uiHeight) of the current block is less than *threshold*, DIMD merge is enabled, and otherwise, DIMD merge is disabled.

In some implementations, the first information mentioned above may be determined based on a video resolution. For example, if a width or height of video falls within a first range, the value of sps_dimd_merge_cand_max_size is set to the first value. If the width or height of video falls within a second range, the value of sps_dimd_merge_cand_max_size is set to the second value. If the width or height of video falls within a third range, the value of sps_dimd_merge_cand_max_size is set to the third value. As a more concrete example, in the case where the first information is sps_dimd_merge_cand_max_size, if the width or height of video is greater than or equal to 2160, the value of sps_dimd_merge_cand_max_size is set to 0; otherwise, if the width or height of video is greater than 1280, the value of sps_dimd_merge_cand_max_size is set to 1; and otherwise, the value of sps_dimd_merge_cand_max_size is set to 2.

In some implementations, the first threshold may also be set to a pre-defined fixed value. For example, the fixed value may be 32 × 32, i.e., 1024. For another example, the fixed value may be 16 × 32, i.e., 512. For another example, the fixed value may be 16 × 16, i.e., 256.

In some implementations, the one or more candidate positions may include only the spatial non-neighbouring position. Compared with the spatial neighbouring position, the spatial non-neighbouring position is more likely to have no corresponding candidate block. Therefore, considering only the spatial non-neighbouring position as the candidate position can reduce the probability of triggering the DIMD merge mode, thereby reducing the coding complexity. In addition, since the DIMD merge mode is a sub-mode of a DIMD-related mode, and a DIMD mode mainly takes a direction parameter of a neighbouring position of the current block into consideration while the DIMD merge mode takes only a direction parameter of a non-neighbouring position of the current block into consideration, the DIMD mode and the DIMD merge mode can complement each other, thereby making the algorithm design more reasonable.

When the one or more candidate positions include only the spatial non-neighbouring position, the number of spatial non-neighbouring positions is not limited in embodiments of the disclosure. For example, the reconstructed region of the picture where the current block is located may include only spatial non-neighbouring positions, and the number of spatial non-neighbouring positions is greater than or equal to 3. For another example, the reconstructed region of the picture where the current block is located may include only spatial non-neighbouring positions, and the number of spatial non-neighbouring positions is greater than or equal to 5. For another example, the reconstructed region of the picture where the current block is located may include only spatial non-neighbouring positions, and the number of spatial non-neighbouring positions is greater than or equal to 8. For another example, the reconstructed region of the picture where the current block is located may include only spatial non-neighbouring positions, and the number of spatial non-neighbouring positions is greater than or equal to 13. For another example, the reconstructed region of the picture where the current block is located may include only spatial non-neighbouring positions, and the number of spatial non-neighbouring positions is greater than or equal to 18. Taking FIG. 9B as an example, the reconstructed region of the picture where the current block is located may include no spatial neighbouring position, but include 18 spatial non-neighbouring positions.

In some implementations, a priority of the spatial non-neighbouring position is higher than a priority of the spatial neighbouring position. The priority of the spatial non-neighbouring position being higher than the priority of the spatial neighbouring position may include at least one of: the spatial non-neighbouring position being preferentially searched compared with the spatial neighbouring position (i.e., the spatial non-neighbouring position being searched before the spatial neighbouring position); or, a candidate block corresponding to the spatial non-neighbouring position being preferentially stored in a set of candidate blocks compared with a candidate block corresponding to the spatial neighbouring position, where the set of candidate blocks is used for determining a prediction value (i.e., the candidate block corresponding to the spatial non-neighbouring position being placed into the set of candidate blocks before the candidate block corresponding to the spatial neighbouring position). As an example, a length of the set of candidate blocks (for example, a candidate list) may be limited. For example, the set of candidate blocks includes *Q* candidate positions (where *Q* is a positive integer greater than or equal to 1), and when the number of candidate blocks corresponding to the spatial non-neighbouring position is less than *Q*, the candidate block corresponding to the spatial neighbouring position is stored in the set of candidate blocks until there are no more available candidate blocks or all candidate positions in the set of candidate blocks are occupied. Certainly, if the number of candidate blocks corresponding to the spatial non-neighbouring position is greater than or equal to *Q*, then the candidate block corresponding to the spatial neighbouring position may not be added to the set of candidate blocks. As mentioned in the above implementations, DIMD merge may be performed based only on the spatial non-neighbouring position. If DIMD merge is performed based only on the spatial non-neighbouring position, then after duplication check and availability check, a candidate position(s) in the set of candidate blocks may be vacant. Therefore, in this implementation, priority is given to the candidate block corresponding to the spatial non-neighbouring position and then to the candidate block corresponding to the spatial neighbouring position, which can increase the number of candidate blocks in the set of candidate blocks, thereby improving the accuracy of the DIMD merge mode.

In some implementations, the number of candidate positions and/or a size of a search range may be adaptively adjusted. For example, the number of candidate positions and/or the size of the search range may be determined based on the size of the current block. By adaptively adjusting the number of candidate positions and/or the size of the search range based on the size of the current block, the found direction parameters are more accurate.

As an example, a value range of *N* (or iDistHor and iDistVer) mentioned above may be determined based on the size of the current block. For example, if the size of the current block is a first size, the value range of *N* is a first value range. If the size of the current block is a second size, the value range of *N* is a second value range. Further, in some implementations, if the first size is less than the second size, the first value range is less than the second value range. In other words, if the current block is a small block, a search range of the spatial non-neighbouring position of the current block is narrowed, and if the current block is a large block, the search range of the spatial non-neighbouring position of the current block is expanded, thereby making the prediction process more flexible. For example, if the size of the current block is the first size, the value range of *N* is 1 to 3, and if the size of the current block is the second size (greater than the first size), the value range of *N* is 1 to 4.

As another example, if the size of the current block is less than a preset size (for example, 16 × 16), the spatial neighbouring position of the current block may not include at least one of: a first position corresponding to 1/4 of the height of the current block (see candidate position 10 in FIG. 6); a second position corresponding to 1/4 of the width of the current block (see candidate position 11 in FIG. 6); a third position corresponding to 3/4 of the height of the current block (see candidate position 12 in FIG. 6); a fourth position corresponding to 3/4 of the width of the current block (see candidate position 13 in FIG. 6); a fifth position corresponding to 1/2 of the height of the current block (see candidate position 8 in FIG. 6); or a sixth position corresponding to 1/2 of the width of the current block (see candidate position 9 in FIG. 6).

As yet another example, the above two examples may be combined. For example, if the size of the current block is less than a preset size (for example, 16 × 16), a value range of *N* may be limited to a second value range (for example, 1 to 3), thereby reducing the number of spatial non-neighbouring positions to be searched. Further, one or more positions (for example, the first position to the fourth position) may be simultaneously removed from the first position to the sixth position mentioned above, thereby reducing the number of spatial neighbouring positions to be searched.

The form or content of the direction parameter is not limited in embodiments of the disclosure. For example, in some implementations, the direction parameter may be information of a histogram of gradients (or information of HoG). The term "information of the histogram of gradients" may also be referred to as or replaced by "angular-mode HoG information". In some other implementations, the direction parameter may include a set of IPMs and amplitudes corresponding to the set of IPMs. For example, the set of IPMs may be a set of IPMs corresponding to the highest amplitudes in the histogram of gradients. The set of IPMs may include three IPMs, may include five IPMs, or may include another number of IPMs.

In some implementations, a prediction value of the current block may be determined based on direction parameters of *K* candidate blocks, where *K* is a positive integer greater than 3. For example, a value of *K* may be 5. For another example, the value of *K* may be greater than 5, for instance, *K* may be 6, 7, or 8. The *K* candidate blocks mentioned herein may be determined based on the one or more candidate positions. For example, a set of candidate blocks (for example, a candidate list, which may be used for storing information of coding blocks corresponding to the candidate positions) may be determined based on the one or more candidate positions, and the *K* candidate blocks may be determined from the set of candidate blocks. For example, the *K* candidate blocks may be determined from the set of candidate blocks as follows. Candidate blocks in the set of candidate blocks are ranked (for example, according to distances between a top-left corner position of each candidate block and a top-left corner position of the current block), and then the prediction value of the current block is determined based on direction parameters of the first *K* candidate blocks ranked. Further, in some implementations, if the number of available candidate blocks in the set of candidate blocks is less than *K*, the prediction value of the current block may be determined based on direction parameters of all available candidate blocks. By increasing the number of candidate blocks for providing the direction parameters (where *K* = 3 in the related art), the accuracy of a merged direction parameter can be improved, thereby improving the accuracy of prediction.

In some implementations, the prediction value of the current block may be determined based on *K* histograms of gradients, where *K* is a positive integer greater than 3. For example, a value of *K* may be 5. Alternatively, the value of *K* may be greater than 5, for instance, *K* may be 6, 7, or 8.

In some implementations, the prediction value of the current block may be determined based on amplitudes corresponding to *K* sets of IPMs, where *K* is a positive integer greater than 3. For example, a value of *K* may be 5. Alternatively, the value of *K* may be greater than 5, for instance, *K* may be 6, 7, or 8. Each of the *K* sets of IPMs may include three, five, or more IPMs.

In some implementations, the prediction value of the current block is determined based on a set of candidate blocks. The set of candidate blocks may be determined based on the one or more candidate positions. The set of candidate blocks may include duplicate candidate blocks or may not include duplicate candidate blocks. For example, the set of candidate blocks (for example, a candidate list, which may be used for storing information of coding blocks corresponding to the candidate positions) may be determined based on the one or more candidate positions. Then, duplication check may be performed on candidate blocks in the set of candidate blocks. If the set of candidate blocks includes duplicate candidate blocks, only one candidate block is retained. By introducing the duplication check, redundant direction parameters can be avoided, thereby improving the accuracy of prediction.

In some implementations, the prediction value of the current block is determined based on a direction parameter of at least one candidate block in a set of candidate blocks. The set of candidate blocks may be determined based on the one or more candidate positions. The set of candidate blocks may include *M* candidate blocks (where *M* is a positive integer greater than or equal to 1), and ranking of the *M* candidate blocks in the set of candidate blocks is determined based on distances between each of the *M* candidate blocks and the current block. Ranking the *M* candidate blocks according to the distances between each of the *M* candidate blocks and the current block contributes to preferentially finding direction parameters corresponding to candidate positions with shorter distances.

There may be multiple manners of defining the distance between each of the *M* candidate blocks and the current block. For example, a distance between a top-left corner position of each of the *M* candidate blocks and a top-left corner position of the current block may be determined as the distance between each of the *M* candidate blocks and the current block. For another example, a distance between a center position of each of the *M* candidate blocks and a center position of the current block may be determined as the distance between each of the *M* candidate blocks and the current block.

As an example, the *M* candidate blocks include a first candidate block (which may be any candidate block among the *M* candidate blocks). A distance between the first candidate block and the current block is determined based on a difference between a first distance and a second distance. The first distance represents a horizontal distance between a top-left corner position of the first candidate block and a top-left corner position of the current block, and the second distance represents a vertical distance between the top-left corner position of the first candidate block and the top-left corner position of the current block. For example, the distance between the first candidate block and the current block satisfies: (abs(xTL - xNeiTL) + abs(yTL - yNeiTL) + abs(abs(xTL - xNeiTL) - abs(yTL - yNeiTL))), where xTL represents a horizontal coordinate of the top-left corner position of the current block, yTL represents a vertical coordinate of the top-left corner position of the current block, xNeiTL represents a horizontal coordinate of the top-left corner position of the first candidate block, yNeiTL represents a vertical coordinate of the top-left corner position of the first candidate block, and abs represents an operation for obtaining an absolute value. The distance determined in the above distance determination manner is close to a Euclidean distance between two positions, and thus is more accurate. In a specific implementation process, deltaX = abs(xTL - xNeiTL) and deltaY = abs(yTL - yNeiTL) may be first calculated, and then (deltaX + deltaY + abs(deltaX - deltaY)) may be calculated, thereby avoiding unnecessary repetitive operations.

As another example, the *M* candidate blocks include a second candidate block (which may be any candidate block among the *M* candidate blocks). A distance between the second candidate block and the current block satisfies: (abs(xTL - xNeiTL) + abs(yTL - yNeiTL)), where xTL represents a horizontal coordinate of a top-left corner position of the current block, yTL represents a vertical coordinate of the top-left corner position of the current block, xNeiTL represents a horizontal coordinate of a top-left corner position of the second candidate block, yNeiTL represents a vertical coordinate of the top-left corner position of the second candidate block, and abs represents an operation for obtaining an absolute value. The above distance determination manner is compatible with a distance determination manner provided in the related art.

In some implementations, if two candidate blocks among the *M* candidate blocks have equal distances from the current block, a candidate block located on the left of the current block in the two candidate blocks may be ranked higher than a candidate block located above the current block in the two candidate blocks. For example, a priority of the candidate block located on the left of the current block in the two candidate blocks is higher than a priority of the candidate block located above the current block in the two candidate blocks. Alternatively, a value of an index of the candidate block located on the left of the current block in the two candidate blocks is less than a value of an index of the candidate block located above the current block in the two candidate blocks.

In some implementations, if two candidate blocks among the *M* candidate blocks have equal distances from the current block, a candidate block located above the current block in the two candidate blocks may be ranked higher than a candidate block located on the left of the current block in the two candidate blocks. For example, a priority of the candidate block located above the current block in the two candidate blocks is higher than a priority of the candidate block located on the left of the current block in the two candidate blocks. Alternatively, a value of an index of the candidate block located above the current block in the two candidate blocks is less than a value of an index of the candidate block located on the left of the current block in the two candidate blocks.

In some implementations, the prediction value of the current block may be determined based on a direction parameter of at least one candidate block. The at least one candidate block may be determined from a set of candidate blocks, and the set of candidate blocks may be determined based on the one or more candidate positions. Further, in some implementations, the direction parameter of the at least one candidate block may be normalized according to a size (or block size) of the at least one candidate block, and the prediction value of the current block may be determined based on a normalized direction parameter. For example, at least one histogram of gradients in one-to-one correspondence with the at least one candidate block may be first determined. Then, amplitudes (or magnitudes) corresponding to all IPMs in the at least one histogram of gradients may be normalized according to the size of the at least one candidate block, and the prediction value of the current block may be determined based on a normalized histogram of gradients. Normalizing the direction parameter of the candidate block according to the size of the candidate block contributes to improving the accuracy of direction parameter merge.

In some implementations, a target direction parameter may be determined by performing arithmetic averaging or weighted averaging on the direction parameter to be merged (which may be determined based on the one or more candidate positions), and the prediction value of the current block is determined according to the target direction parameter. For example, when the direction parameter to be merged includes one or more histograms of gradients, a histogram of gradients (i.e., the target direction parameter) corresponding to the current block may be obtained by weighting the one or more histograms of gradients, and then the prediction value of the current block may be determined according to the histogram of gradients corresponding to the current block. The weighted averaging of different direction parameters to be merged helps improve the accuracy of direction parameter merge.

A manner of determining a weight of the direction parameter to be merged is not limited in embodiments of the disclosure. For example, as mentioned above, the direction parameter to be merged may be the direction parameter of the at least one candidate block in the set of candidate blocks. Therefore, in some implementations, the weight of the direction parameter to be merged may be determined according to the at least one candidate block.

As an example, the weight of the direction parameter to be merged may be determined according to a distance between the at least one candidate block and the current block. For example, a higher weight may be set for a direction parameter of a candidate block that is closer to the current block among the at least one candidate block, and a lower weight may be set for a direction parameter of a candidate block that is farther from the current block among the at least one candidate block.

As another example, the weight of the direction parameter to be merged may be determined according to a size of the at least one candidate block. For example, a higher weight may be assigned to a block of a larger size among the at least one candidate block, and a lower weight may be assigned to a block of a smaller size among the at least one candidate block.

As yet another example, the weight of the direction parameter to be merged may be determined according to the number of target samples corresponding to the at least one candidate block. The target samples are required for determining the direction parameter in a DIMD mode. The target samples corresponding to the at least one candidate block may be determined based on a size and/or position of the at least one candidate block. For example, a higher weight may be assigned to a block corresponding to a larger number of target samples among the at least one candidate block, and a lower weight may be assigned to a block corresponding to a smaller number of target samples among the at least one candidate block.

As yet another example, an initial weight of the direction parameter to be merged may be first determined based on the number of target samples corresponding to the at least one candidate block, and then the initial weight may be adjusted based on the distance between the at least one candidate block and the current block, to determine a target weight of the direction parameter of the at least one candidate block. A basic manner of adjusting the initial weight may be such that a higher weight is given to a block that is closer to the current block among the at least one candidate block.

As mentioned above, the one or more candidate positions are provided in the reconstructed region of the picture where the current block is located. A search order of the one or more candidate positions is not limited in embodiments of the disclosure. Some possible implementations will be provided below.

In some implementations, the one or more candidate positions may be searched in a search order from near to far relative to the current block.

For example, as mentioned above, in some implementations, the spatial non-neighbouring position may satisfy at least one of: the absolute value of the horizontal offset of the spatial non-neighbouring position from the top-left corner position of the current block being equal to iDistHor + 1; or, the absolute value of the vertical offset of the spatial non-neighbouring position from the top-left corner position of the current block being equal to iDistVer + 1. iDistHor is *N* times the width of the current block, iDistVer is *N* times the height of the current block, and *N* is a positive integer greater than or equal to 1. For a spatial non-neighbouring position satisfying the above conditions, the smaller a value of *N* corresponding to the spatial non-neighbouring position is, the closer the spatial non-neighbouring position is to the current block, and therefore a search order of that spatial non-neighbouring block may be more in the front.

Taking FIG. 9A as an example, spatial non-neighbouring positions 14 to 16 satisfy the above conditions, and a value of *N* corresponding to spatial non-neighbouring positions 14 to 16 is 1, so a search order of spatial non-neighbouring positions 14 to 16 is relatively in the front (spatial non-neighbouring positions 14 to 16 may be searched after spatial neighbouring positions are completely searched). Spatial non-neighbouring positions 17 to 21 satisfy the above conditions, and a value of *N* corresponding to spatial non-neighbouring positions 17 to 21 is 2, so spatial non-neighbouring positions 17 to 21 may be arranged in a search order after spatial non-neighbouring positions 14 to 16. Spatial non-neighbouring positions 22 to 26 satisfy the above conditions, and a value of *N* corresponding to spatial non-neighbouring positions 22 to 26 is 3, so spatial non-neighbouring positions 22 to 26 may be arranged in a search order after spatial non-neighbouring positions 17 to 21. Spatial non-neighbouring positions 27 to 31 satisfy the above conditions, and a value of *N* corresponding to spatial non-neighbouring positions 27 to 31 is 4, so spatial non-neighbouring positions 27 to 31 may be arranged in a search order after spatial non-neighbouring positions 22 to 26. If multiple spatial non-neighbouring positions correspond to the same value of *N*, an order between the multiple spatial non-neighbouring positions may be randomly set or may be determined according to a certain rule. For example, a search order of a candidate position located on the left of the current block has the highest priority, followed by a search order of a candidate position located above the current block, and then a search order of a candidate position located at the top-left corner of the current block. For another example, the search order of the candidate position located above the current block has the highest priority, followed by the search order of the candidate position located on the left of the current block, and then the search order of the candidate position located at the top-left corner of the current block.

In some implementations, the search order between the one or more candidate positions mentioned above may be determined based on distances (which may refer to absolute distances, i.e., absolute values of the distances) between each of the one or more candidate positions and the current block. A manner of defining the distance between the candidate position and the current block is not limited in embodiments of the disclosure. For example, the distance between the candidate position and the current block may be determined according to a distance between the candidate position and a top-left corner position of the current block. For another example, the distance between the candidate position and the current block may be determined according to a distance between the candidate position and a center position of the current block. For another example, the distance between the candidate position and the current block may be determined according to a distance between the candidate position and a top-right corner position of the current block. For example, the one or more candidate positions have a search order based on the distances between each of the one or more candidate positions and the current block and are ranked in an ascending order of the distances. The closer the candidate position is to the current block, the more similar a direction parameter corresponding to the candidate position is to a direction parameter of the current block. Searching such candidate positions preferentially contributes to obtaining useful reference information more quickly.

Further, in some implementations, if two candidate positions among the one or more candidate positions have equal distances from the current block, a search order between the two candidate positions may be randomly determined.

Alternatively, if two candidate positions among the one or more candidate positions have equal distances from the current block, a candidate position located on the left of the current block in the two candidate positions is searched before a candidate position located above the current block in the two candidate positions.

Alternatively, if two candidate positions among the one or more candidate positions have equal distances from the current block, a candidate position located above the current block in the two candidate positions is searched before a candidate position located on the left of the current block in the two candidate positions.

In some implementations, the direction parameter (for example, the histogram of gradients) may be stored in units of a coding block.

In some implementations, the direction parameter (for example, the histogram of gradients) may be stored in units of a picture block of a fixed size (or a storage unit of a fixed size). For example, the picture block of the fixed size may be a picture block of a relatively large size such as 32*32 or 64*64. If the direction parameter is stored in units of the picture block of the fixed size, then during use, a sample position to be searched may be directly divided by the storage unit to obtain storage coordinates, and a direction parameter corresponding to the storage coordinates may be searched for in a memory based on the storage coordinates. This storage manner of the direction parameter can save memory overhead and is beneficial for hardware implementation.

A specific size of the picture block (or storage unit) mentioned above may be determined based on a resolution of a current picture (i.e., adaptively selected according to the resolution of a current picture). For example, if the resolution of the current picture is relatively low, a picture block (or storage unit) of a relatively small size may be selected, and if the resolution of the current picture is relatively high, a picture block (or storage unit) of a relatively large size may be selected.

As mentioned above, in some implementations, duplication check may be performed on the candidate blocks in the set of candidate blocks. Whether two candidate blocks in the set of candidate blocks are duplicate may be determined based on at least one of: whether the two candidate blocks correspond to the same coding block; or whether a difference between direction parameters of the two candidate blocks satisfies a preset condition.

For example, if two candidate blocks in the set of candidate blocks correspond to the same coding block, it may be determined that the two candidate blocks are duplicate. In this case, only one candidate block may be retained.

For another example, if a difference between direction parameters of two candidate blocks in the set of candidate blocks satisfies the preset condition, it may be determined that the two candidate blocks are duplicate. In this case, only one candidate block may be retained. The preset condition herein may be used for measuring a similarity between the direction parameters of the two candidate blocks. That is to say, if the two candidate blocks correspond to similar direction parameters (or the same HoG characteristics), it may be determined that the two candidate blocks are duplicate. By introducing this duplication determination condition, it is conducive to removing redundant direction parameters, thereby making a result of direction parameter merge more accurate.

There may be multiple manners of determining whether two candidate blocks in the set of candidate blocks are similar. For example, when the two candidate blocks correspond to two histograms of gradients respectively, whether the two candidate blocks are similar may be directly determined according to a similarity between the two histograms of gradients. Alternatively, in some implementations, two sets of IPMs may be respectively determined according to amplitudes corresponding to IPMs in the two histograms of gradients, and whether the two candidate blocks are similar may be determined according to a similarity between the two sets of IPMs.

Exemplarily, the two candidate blocks in the set of candidate blocks include a first candidate block and a second candidate block. The first candidate block corresponds to a first histogram of gradients, and the second candidate block corresponds to a second histogram of gradients. *S* IPMs with highest amplitudes in the first histogram of gradients form a first set (i.e., amplitudes of gradients corresponding to the *S* IPMs in the first histogram of gradients are highest, where *S* is a positive integer greater than or equal to 1, for example, *S* may be 3, 4, or 5), and *S* IPMs with highest amplitudes in the second histogram of gradients form a second set (i.e., amplitudes of gradients corresponding to the *S* IPMs in the second histogram of gradients are highest). Whether the direction parameters of the two candidate blocks are similar (or whether the two candidate blocks are duplicate) may be determined based on whether the first set and the second set are similar.

In some implementations, whether the two candidate blocks are duplicate may be determined based on the number of identical IPMs in the first set and the second set.

For example, if the number of identical IPMs in the first set and the second set is greater than or equal to a second threshold, it may be determined that the two candidate blocks are duplicate. In other words, if values of IPMs in the first set and the second set are highly overlapped, it may be determined that the two candidate blocks are duplicate.

For another example, if a ratio of an intersection of the first set and the second set to a union of the first set and the second set is greater than or equal to a fourth threshold (for example, 0.5), the two candidate blocks are duplicate. Specifically, a similarity between the first set and the second set may be determined by calculating the ratio of the intersection of the first set and the second set to the union of the first set and the second set according to the Jaccard similarity criterion. A value of the Jaccard similarity index ranges from 0 to 1, where 1 indicates that two sets are identical, and 0 indicates that the two sets have no elements in common. If the ratio of the intersection of the first set and the second set to the union of the first set and the second set is greater than 0.5, the first set and the second set are considered similar, and thus it may be determined that the two candidate blocks are duplicate.

In some implementations, whether the two candidate blocks are duplicate may be determined based on a difference between a first IPM in the first set and a second IPM in the second set, where the first set does not include the second IPM, and the second set does not include the first IPM. In other words, the first IPM and the second IPM are IPMs that differ in the first set and the second set.

For example, if the difference (or a maximum difference) between the first IPM and the second IPM is less than or equal to a third threshold, it may be determined that the two candidate blocks are duplicate. For example, the third threshold may be 3, 4, or 5.

In some implementations, at least one of the following may be determined based on a size of the current block: the number of the direction parameter to be merged (for example, the number of histograms of gradients to be merged); or the number of IPMs for determining the prediction value (where this number may indicate how many prediction values corresponding to IPMs are needed for weighted blending to determine the prediction value of the current block). In other words, one or more of the number of the direction parameter to be merged or the number of IPMs for determining the prediction value may be adaptively adjusted according to the size of the current block.

For example, for a block with a size less than or equal to 16x16, the number of histograms of gradients to be merged may be reduced. Exemplarily, for a block with a size less than or equal to 16x16, only three histograms of gradients may be used for arithmetic averaging to determine a histogram of gradients corresponding to the current block.

For another example, for a block with a size greater than 16x16, the number of histograms of gradients to be merged may be increased.

For another example, for a block with a size less than or equal to 16x16, during weighted blending for prediction values corresponding to multiple IPMs to generate the prediction value of the current block, a smaller number of IPMs may be used. For example, only prediction values corresponding to two IPMs may be used for weighted blending to generate the prediction value of the current block.

For another example, for a block with a size greater than 16x16, during weighted blending for prediction values corresponding to multiple IPMs to generate the prediction value of the current block, a larger number of IPMs may be used.

The spatial non-neighbouring position mentioned above may be determined based on a certain search strategy. For example, a search distance and a search direction may be first determined, and then with a position of the current block as a reference, a two-dimensional search may be performed around the current block according to a search step length and the search direction, to determine the spatial non-neighbouring position.

Alternatively, in some implementations, the spatial non-neighbouring position may be determined based on a first mapping relationship pre-established, where the first mapping relationship is a mapping relationship between an index of the spatial non-neighbouring position and a coordinate of the spatial non-neighbouring position. For example, a one-dimensional list may be used for sequentially storing a mapping relationship between indexes and coordinates of spatial non-neighbouring positions to be searched for the current block. In practical use, the spatial non-neighbouring position may be directly found according to this one-dimensional list.

Alternatively, in some implementations, the spatial non-neighbouring position is determined based on a first mapping relationship and a second mapping relationship pre-established. The first mapping relationship is a mapping relationship between an index of the spatial non-neighbouring position and a search distance (for example, a distance between the spatial non-neighbouring position and a top-left corner position of the current block), and the second mapping relationship is a mapping relationship between the index of the spatial non-neighbouring position and a search direction (for example, a direction of the spatial non-neighbouring position relative to the current block). For example, one of two one-dimensional lists may be used for storing the mapping relationship between the index of the spatial non-neighbouring position and the search distance, and the other of the two one-dimensional lists may be used for storing the mapping relationship between the index of the spatial non-neighbouring position and the search direction. In practical use, coordinates of the spatial non-neighbouring position may be derived according to a combination of the two one-dimensional lists, and then the spatial non-neighbouring position may be determined according to the coordinates of the spatial non-neighbouring position.

In some implementations, a first indication parameter (for example, a DIMD merge flag) may be signalled in a bitstream. For example, the first indication parameter may have a first value and a second value. The first value may be 1 or true. The first value may indicate that the DIMD merge mode is to be used for the current block. The second value may be 0 or false. The second value may indicate that the DIMD merge mode is not to be used for the current block. If the DIMD merge mode is not to be used for the current block, the current block may be predicted based on a DIMD mode.

In some implementations, the above pre-defined position or spatial non-neighbouring position may be determined based on second information parsed from a bitstream. The second information may be used for adjusting the pre-defined size mentioned above. For example, the second information may be used for scaling the pre-defined size.

The second information may be a high-level syntax element carried in the bitstream. The second information may be used for directly adjusting the pre-defined size, or may be used for indirectly adjusting the pre-defined size.

For example, it is assumed that the spatial non-neighbouring position to be searched may satisfy at least one of: an absolute value of a horizontal offset of the spatial non-neighbouring position from a top-left corner position of the current block being equal to iDistHor + 1 (hereinafter referred to as condition 1); or, an absolute value of a vertical offset of the spatial non-neighbouring position from the top-left corner position of the current block being equal to iDistVer + 1 (hereinafter referred to as condition 2). iDistHor is equal to a pre-defined horizontal size, and iDistVer is equal to a pre-defined vertical size. iDistHor and iDistVer may represent a horizontal search step length and a vertical search step length, respectively. iDistHor may be determined based on the width of the current block. iDistVer may be determined based on the height of the current block. That is to say, a search step length for the spatial non-neighbouring position may be determined by using the size of the current block as a search-step-length reference.

In the above example, the second information may be used for directly adjusting (for example, scaling) iDistHor and iDistVer, or may be used for adjusting (for example, scaling) a search reference and thus indirectly scaling iDistHor and iDistVer.

The second information may be determined based on a video resolution. For example, for low-resolution video, the search-step-length reference is reduced, and for high-resolution video, the search-step-length reference is increased.

As can be seen from the above description, adjusting the pre-defined size based on the second information is equivalent to changing the search-step-length reference or search step length for the spatial non-neighbouring position. Therefore, in some implementations, the second information may be used for adjusting the search step length or search-step-length reference.

In some implementations, the above pre-defined position or spatial non-neighbouring position may be determined based on third information parsed from a bitstream. The third information may be used for adjusting the number of the above pre-defined positions or spatial non-neighbouring positions.

The third information may be a high-level syntax element carried in the bitstream. The third information may be used for directly adjusting the pre-defined position or spatial non-neighbouring position, or may be used for indirectly adjusting the pre-defined position or spatial non-neighbouring position.

For example, it is assumed that the spatial non-neighbouring position may satisfy at least one of: an absolute value of a horizontal offset of the spatial non-neighbouring position from a top-left corner position of the current block being equal to iDistHor + 1 (hereinafter referred to as condition 1); or, an absolute value of a vertical offset of the spatial non-neighbouring position from the top-left corner position of the current block being equal to iDistVer + 1 (hereinafter referred to as condition 2). iDistHor is equal to a pre-defined horizontal size, and iDistVer is equal to a pre-defined vertical size. iDistHor and iDistVer may represent a horizontal search step length and a vertical search step length, respectively. iDistHor may be *N* times the width of the current block. iDistVer may be *N* times the height of the current block. A search range of the spatial non-neighbouring position is determined based on a value of *N*.

In the above example, the third information may be used for adjusting a maximum value of *N*, and thus adjusting the search range of the spatial non-neighbouring position. The adjustment of the search range of the spatial non-neighbouring position also changes the number of spatial non-neighbouring positions.

The third information may be determined based on a video resolution. For example, for low-resolution video, region search corresponding to a 4-fold search-step-length reference may be cancelled (i.e., the maximum value of *N* is 3). For another example, for low-resolution video, region search corresponding to 4-fold and 3-fold search-step-length references may be cancelled (i.e., the maximum value of *N* is 2). For another example, for high-resolution video, region search corresponding to a 5-fold search-step-length reference may be introduced (i.e., the maximum value of *N* is 5). For another example, for high-resolution video, region search corresponding to 5-fold and 6-fold search-step-length references may be introduced (i.e., the maximum value of *N* is 6).

As can be seen from the above description, based on the third information, the number of spatial non-neighbouring positions may be adjusted through adjustment of the search range of the spatial non-neighbouring position. Therefore, in some implementations, the third information may be used for adjusting the search range of the spatial non-neighbouring position.

In some implementations, for S820, the one or more candidate positions may be determined as follows. Multiple search positions are determined based on a size of the current block and a size of a candidate block around the current block. In other words, the candidate positions may be adaptively determined based on the size of the current block and the size of the candidate block around the current block. How to adaptively determine the candidate positions has been described in detail above based on implementation 2. Different from implementation 2, in this implementation, the one or more candidate positions adaptively determined based on the size of the current block and the size of the candidate block around the current block may not include the spatial non-neighbouring position of the current block. For example, candidate positions 8 to 13 in FIG. 7A may not be included, i.e., search is performed only at candidate positions 1 to 7.

In some implementations, the prediction value of the current block is determined based on direction parameters of one or more candidate blocks. The one or more candidate blocks may be determined based on a cost corresponding to a candidate block in a set of candidate blocks (which is determined based on the one or more candidate positions). A manner of determining the cost corresponding to the candidate block in the set of candidate blocks is not limited in embodiments of the disclosure. For example, the cost corresponding to the candidate block in the set of candidate blocks may be determined based on a prediction value of a template region of the current block and a reconstructed value of the template region, where the prediction value of the template region is determined based on a direction parameter of the candidate block in the set of candidate blocks. For example, the template region of the current block may refer to a top region and/or a left region neighbouring to the current block. The cost corresponding to the candidate block in the set of candidate blocks may be determined based on an SATD or an SAD between the prediction value of the template region and the reconstructed value of the template region.

The one or more candidate blocks mentioned above may be candidate blocks corresponding to minimum costs in the set of candidate blocks. Alternatively, the one or more candidate blocks may be candidate blocks obtained by ranking candidate blocks in the set of candidate blocks based on costs (before the ranking, the candidate blocks in the set of candidate blocks may be ranked once based on positions of the candidate blocks or distances from the candidate blocks to the current block).

For example, the one or more candidate blocks may refer to one candidate block corresponding to the minimum cost. In other words, the prediction value of the current block may be directly determined based on the one candidate block corresponding to the minimum cost.

For another example, the one or more candidate blocks may refer to two candidate blocks corresponding to the minimum costs. In other words, the prediction value of the current block may be determined based on direction parameters of the two candidate blocks corresponding to the minimum costs.

For another example, the one or more candidate blocks may refer to three or five candidate blocks corresponding to the minimum costs. In other words, the prediction value of the current block may be determined based on direction parameters of the three or five candidate blocks corresponding to the minimum costs.

For another example, the one or more candidate blocks may refer to one or more highest-ranked candidate blocks obtained by ranking the candidate blocks in the set of candidate blocks based on the costs. Exemplarily, the one or more candidate blocks may refer to the first three or five highest-ranked candidate blocks obtained by ranking the candidate blocks in the set of candidate blocks based on the costs.

There may be multiple manners of determining the prediction value of the current block based on the direction parameters of the one or more candidate blocks after the one or more candidate blocks are determined based on the costs.

In some implementations, first, a target direction parameter may be determined by performing weighted averaging on the direction parameters of the one or more candidate blocks. Then, the prediction value of the current block is determined based on the target direction parameter. Weights of the direction parameters of the one or more candidate blocks may be determined based on costs corresponding to the one or more candidate blocks. For example, the weights of the direction parameters of the one or more candidate blocks may be set such that the greater the costs corresponding to the one or more candidate blocks, the smaller the weights of the one or more candidate blocks.

For example, direction parameters of two candidate blocks corresponding to the minimum costs in the set of candidate blocks may be used for weighted averaging. The two candidate blocks are referred to as candidate block 1 and candidate block 2 respectively. Candidate block 1 corresponds to the smallest cost, and candidate block 2 corresponds to the second smallest cost. A cost corresponding to candidate block 1 is referred to as costMode1, and a weight corresponding to candidate block 1 is referred to as weight1. A cost corresponding to candidate block 2 is referred to as costMode2, and a weight corresponding to candidate block 2 is referred to as weight2. Weights of the two candidate blocks may be assigned according to the magnitude of the costs. A possible weight assignment manner is: weight1 = costMode2/(costMode1 + costMode2) and weight2 = 1 - weight1. Alternatively, in some implementations, if costMode2 < scale*costMode1 (where scale, for example, may be set to 2), weighted averaging is performed on the direction parameters of the two candidate blocks, and the prediction value of the current block is determined based on a direction parameter generated after the weighted averaging. Otherwise, the prediction value of the current block is determined based only on a direction parameter of candidate block 1.

For another example, weighted averaging may be performed on direction parameters of up to five candidate blocks in the set of candidate blocks according to the costs. Weights of the five candidate blocks may be assigned according to the magnitude of the costs. A possible weight assignment manner is: assuming that n is the number of candidate blocks for weighted averaging, $sum = {\sum }_{i = 0}^{4} costMode _ i$, and i=0...4, then weight_j=(sum-costMode_j) /(n-1)sum, where j=0...4.

In some implementations, candidate prediction values (or candidate prediction blocks) of the one or more candidate blocks may be first determined. Then, the prediction value of the current block is determined based on the candidate prediction values of the one or more candidate blocks (i.e., the prediction value of the current block is determined by fusing the candidate prediction values of the one or more candidate blocks). Weights of the direction parameters of the one or more candidate blocks may be determined based on costs corresponding to the one or more candidate blocks. For example, the weights of the direction parameters of the one or more candidate blocks may be set such that the greater the costs corresponding to the one or more candidate blocks, the smaller the weights of the one or more candidate blocks.

For example, the one or more candidate blocks include two candidate blocks, where the two candidate blocks are candidate block 1 and candidate block 2 respectively. Candidate block 1 corresponds to the smallest cost, and candidate block 2 corresponds to the second smallest cost. A cost corresponding to candidate block 1 is referred to as costMode1, a weight corresponding to candidate block 1 is referred to as weight1, and a candidate prediction block corresponding to candidate block 1 is referred to as p1. A cost corresponding to candidate block 2 is referred to as costMode2, a weight corresponding to candidate block 2 is referred to as weight2, and a candidate prediction block corresponding to candidate block 2 is referred to as p2. Weights may be assigned according to the magnitude of costMode1 and costMode2. For example, weight1 = costMode2/(costMode1 + costMode2), and weight2 = 1 - weight1. A final prediction value of the current block may be weight1*p1 + weight2*p2. Alternatively, if costMode2 < scale*costMode1 (where scale, for example, may be set to 2), the prediction value of the current block may be determined by fusing candidate prediction values of candidate block 1 and candidate block 2. Otherwise, a prediction value of candidate block 1 is determined as the prediction value of the current block.

Alternatively, the prediction value of the current block may be determined based on candidate prediction values of more candidate blocks (for example, five candidate blocks). Weights may be assigned according to the magnitude of costs corresponding to respective candidate blocks. A possible weight assignment manner is: assuming that n is the number of candidate blocks, $sum = {\sum }_{i = 0}^{4} costMode _ i$, and i=0...4, then weight_j=(sum-costMode_j) /(n-1)sum, where j=0...4, and in this case, a final prediction value of the current block is ∑ weight_j * pj.

Certainly, if the one or more candidate blocks mentioned above include only one candidate block, a prediction value of the one candidate block may be determined as the prediction value of the current block.

In some implementations, the prediction value of the current block is determined based on a first target direction parameter. The first target direction parameter may be determined based on the one or more candidate positions, and the first target direction parameter includes a direction parameter corresponding to a first IPM. The first IPM may be a dominant IPM in the first target direction parameter. For example, in the first target direction parameter, an amplitude corresponding to the first IPM is highest. After the first IPM is determined, to enable or disable the DIMD merge mode may be determined according to the first IPM and a second IPM. The second IPM may be determined based on a second target direction parameter, and the second target direction parameter is determined based on a DIMD mode. The second IPM may be a dominant IPM in the second target direction parameter. For example, in the second target direction parameter, an amplitude corresponding to the second IPM is highest.

Further, in some implementations, to enable or disable the DIMD merge mode may be determined according to the first IPM and the second IPM as follows. To enable or disable the DIMD merge mode is determined according to a similarity between the first IPM and the second IPM. The similarity between the first IPM and the second IPM may be determined based on a difference between a mode index of the first IPM and a mode index of the second IPM.

For example, if the difference between the mode index of the first IPM and the mode index of the second IPM is less than or equal to a preset threshold, the DIMD merge mode is disabled. If the difference between the mode index (also referred to as a mode number) of the first IPM and the mode index (also referred to as a mode number) of the second IPM is greater than the preset threshold, the DIMD merge mode is enabled.

For another example, if the difference between the mode index of the first IPM and the mode index of the second IPM falls within a preset range, the DIMD merge mode is disabled. If the difference between the mode index of the first IPM and the mode index of the second IPM does not fall within the preset range, the DIMD merge mode is enabled. For instance, if the difference between the mode index of the first IPM and the mode index of the second IPM falls within [-2, +2], [-1, +1], or [-3, +3], the two IPMs may be considered similar.

Disabling the DIMD merge mode according to the similarity between the first IPM and the second IPM can reduce the number of rate-distortion optimization (RDO) decisions, thereby reducing the coding complexity.

It may be understood that, the determination of enabling/disabling the DIMD merge mode based on the similarity between the first IPM and the second IPM may be combined with the determination of enabling/disabling the DIMD merge mode based on the size of the current block, thereby further reducing the number of RDO decisions and the coding complexity.

In some implementations, a cost corresponding to the DIMD merge mode may be determined according to the prediction value and an original value of the current block (for example, the cost corresponding to the DIMD merge mode may be determined based on an SATD or an SAD between the prediction value and the original value). If the cost corresponding to the DIMD merge mode satisfies a preset condition, the DIMD merge mode is added to a set of candidate modes. The set of candidate modes may be referred to as a coarse-selection list, which is used for storing a prediction mode to be subject to RDO. Then, a target prediction mode (i.e., a final prediction mode) for the current block may be determined by performing RDO on prediction modes in the set of candidate modes. By determining, according to the cost corresponding to the DIMD merge mode, whether to add the DIMD merge mode to the set of candidate modes, the coding complexity can be further reduced (in the related art, the DIMD merge mode directly participates in RDO and is not placed into the coarse-selection list, resulting in relatively high coding complexity). This implementation may be combined with the determination of enabling/disabling the DIMD merge mode based on the similarity between the first IPM and the second IPM and/or the determination of enabling/disabling the DIMD merge mode based on the size of the current block mentioned above, thereby further reducing the number of RDO decisions and the coding complexity.

A manner of defining the preset condition is not limited in embodiments of the disclosure. For example, the preset condition includes: the cost corresponding to the DIMD merge mode is less than or equal to a target cost. The target cost may be determined based on a cost corresponding to a first prediction mode in the set of candidate modes, and in the set of candidate modes, the cost corresponding to the first prediction mode is maximum. The first prediction mode may be the last prediction mode in the set of candidate modes. As an example, the target cost is equal to the cost corresponding to the first prediction mode. As another example, the target cost is equal to a product of the cost corresponding to the first prediction mode and a scaling factor.

As a specific example, the prediction value may be generated using a HoG derived in the DIMD merge mode. Then, during the SATD/SAD coarse selection, a cost between the prediction value and the original value is calculated, and a coarse-selection list (corresponding to the above set of candidate modes) is updated according to this cost. If this cost is less than a cost (i.e., a maximum value of the cost) corresponding to the last mode in the coarse-selection list, the coarse-selection list is extended by one position, and the DIMD merge mode is added to the coarse-selection list. Finally, a final prediction mode for the current block is selected by performing RDO decision on modes in the coarse-selection list. Alternatively, during updating of the coarse-selection list, the cost corresponding to the last mode in the coarse-selection list may be fine-tuned. A fine-tuning manner is: if the cost corresponding to the DIMD merge is less than a product of the cost corresponding to the last mode in the coarse-selection list and a scaling factor (scale), then the coarse-selection list is updated. Herein, scale may be 1.3 or may be set to a value between 0.8 and 1.5.

How to determine the cost corresponding to the candidate block based on the reconstructed value and the prediction value of the template region of the candidate block has been described in detail above. Then, the direction parameter to be merged and/or candidate prediction values are determined based on the cost corresponding to the candidate block. The advantage of such processing is that both the encoding end and the decoding end can perform cost calculation in the same manner. In addition to the above manner, in some implementations, the encoding end may also determine the prediction value based on the direction parameter of the candidate block, and then determine an appropriate candidate block or an appropriate candidate position based on the cost between the prediction value and the original value. In such implementations, the encoding end may transmit an index of the appropriate candidate position to the decoding end for use by the decoding end during decoding.

Further, as illustrated in FIG. 10, in operations at S1030, a prediction value of the current block is determined according to the direction parameter to be merged. For example, a prediction direction corresponding to the current block is determined according to the direction parameter to be merged, and the prediction value of the current block is determined according to the prediction direction corresponding to the current block.

Embodiments of the disclosure will be described in more detail below in combination with specific examples. It may be noted that, the following examples are merely illustrated for helping those skilled in the art to understand embodiments of the disclosure, and is not intended to limit embodiments of the disclosure to specific values or specific scenarios as illustrated. Apparently, various equivalent modifications or changes can be made by those skilled in the art based on the examples illustrated, and those modifications or changes also fall within the scope of embodiments of the disclosure.

### Example 1

During derivation of an IPM based on DIMD merge, a coding block at a spatial non-neighbouring position in a larger search region may be added to a candidate list.

### S1: DIMD mode

For the implementation of S1, reference can be made to the above, which will not be repeated herein.

### S2.1: Intra mode derivation using DIMD merge

An input in step S2.1 may include the following information:
- a top-left position (xTL, yTL) of a current luma block, a bottom-left position (xLB, yLB) of the current luma block, and a top-right position (xRT, yRT) of the current luma block;
- a width uiWidth of the current luma block and a height uiHeigth of the current luma block;
- a neighbouring position (xNb[idx], yNb[idx]) of the current luma block, where idx = 1,...,31;
- a CU corresponding to the neighbouring position (xNb[idx], yNb[idx]), denoted as cuNeibor[idx], where idx = 1,...,31.

An output in step S2.1 has different contents in different scenarios. In a scenario of obtaining an intra prediction value using DIMD, the output is information of a histogram. In another application scenario, the output may be a conventional IPM IntraPredModeD, where a value of IntraPredModeD is between [0,66].

The derivation of the conventional IPM through gradient analysis after expanding the search region using DIMD merge will be introduced in detail below.

Step a: Check a size of a current block. If the size of the current block is less than or equal to a threshold, DIMD merge is enabled, and otherwise, DIMD merge is disabled.

The threshold is determined according to video content. The determination is as follows.
i. First, a high-level syntax element sps_dimd_merge_cand_max_size is obtained.
ii. Then, the threshold is set according to a value of the syntax element sps_dimd_merge_cand_max_size.

A setting manner is as follows. If the value of sps_dimd_merge_cand_max_size is 0, the threshold is set to 32*32 (i.e., 1024). If the value of sps_dimd_merge_cand_max_size is 1, the threshold is set to 16*32 (i.e., 512). If the value of sps_dimd_merge_cand_max_size is 2, the threshold is set to 16*16 (i.e., 256).

According to the syntax element sps_dimd_merge_cand_max_size and the threshold, an enable/disable state of DIMD merge is set.

A setting manner is as follows. If the value of sps_dimd_merge_cand_max_size is 0 and the width (uiWidth) of the current luma block * the height (uiHeight) of the current luma block is less than or equal to *threshold*, DIMD merge is enabled, and otherwise, DIMD merge is disabled. If the value of sps_dimd_merge_cand_max_size is 1 and the width (uiWidth) of the current luma block * the height (uiHeight) of the current luma block is less than *threshold*, DIMD merge is enabled, and otherwise, DIMD merge is disabled. If the value of sps_dimd_merge_cand_max_size is 2 and the width (uiWidth) of the current luma block * the height (uiHeight) of the current luma block is less than *threshold*, DIMD merge is enabled, and otherwise, DIMD merge is disabled.

Step b: If the condition in step a is satisfied, then search for cuNeibor[idx] corresponding to neighbouring positions of the current block, and add corresponding coding blocks to the candidate list in a search order. During addition of cuNeibor[idx] to the candidate list, whether cuNeibor[idx] is present, is duplicate, and is in the DIMD mode or DIMD merge mode is checked. The neighbouring positions searched and the search order of the neighbouring positions are illustrated in FIG. 9A. If cuNeibor[idx] in the candidate list is duplicate, only one candidate block is retained.

During obtaining of cuNeibor[idx] corresponding to the neighbouring positions, coding blocks corresponding to 13 spatial neighbouring positions and 18 spatial non-neighbouring positions of the current block are used as candidates in the candidate list.
i. For the selection of cuNeibor[idx] corresponding to the spatial neighbouring positions, reference can be made to the related art.
ii. For cuNeibor[idx] corresponding to the spatial non-neighbouring positions, a search distance may be determined based on the width (uiWidth) and the height (uiHeight) of the current block. Candidate positions correspond to positions 14 to 31 in FIG. 9A, and the search order may be determined based on the criterion from near to far.

The specific search process is as follows.

Search is performed in different directions of the current block. A search direction may include 45°, vertical 90°, 135°, horizontal 180°, and 225°directions. The width and the height of the current block are used as a step-length reference for a search step length, and a search range extends to a region corresponding to a 4-fold step-length reference. In addition, in the horizontal 180° and vertical 90° directions, search corresponding to a 1-fold step-length reference is skipped.

Five directions angle[5]={0, 1, 2, 3, 4} are defined, which correspond to 45°, vertical 90°, 135°, horizontal 180°, and 225° directions respectively. The number numAng[4] = { 3, 5, 5, 5 } of directions to be searched for a different search step length is defined. A specific search direction is determined based on iMap[4][5], where iMap[4][5] = { { 0, 2, 4 },{ 0, 1, 2, 3, 4 },{ 0, 1, 2, 3, 4 },{ 0, 1, 2, 3, 4 } } represents directions to be searched for each search step length. The search steps are as follows:
- Step length 1: search directions angle[0], angle[2], and angle[4];
- Step length 2: search directions angle[0], angle[1], angle[2], angle[3], and angle[4];
- Step length 3: search directions angle[0], angle[1], angle[2], angle[3], and angle[4];
- Step length 4: search directions angle[0], angle[1], angle[2], angle[3], and angle[4].

Then, a corresponding search operation is performed. The search process may be implemented using the following code:

```
         for (int iDistIdx = 1; iDistIdx <= 4; iDistIdx ++)//search-step-length iteration
         {
           int iDistHor = uiWidth * iDistIdx ;//horizontal search distance
           int iDistVer = uiHeigth * iDistIdx ;//vertical search distance
           for (int angleIdx= 0; angleIdx < numAng [iDistIdx - 1]; angleIdx ++) // directions
 to be searched for each search step length
         {
         switch (iMap[iDistIdx -1][angleIdx])//obtain final coordinate offset values for
 different directions
         {
         case 0: offsetX = uiWidth + iDistHor - 1;
offsetY = -iDistVer - 1; // 45° direction, i.e.,
 corresponding to positions 15, 18, 23, and 28 in FIG. 9A;
         case 1: offsetX = uiWidth >> 1; offsetY = -iDistVer - 1; //vertical 90°, i.e.,
 corresponding to positions 19, 24, and 29 in FIG. 9A;
         case 2: offsetX = -iDistHor - 1; offsetY = -iDistVer - 1; //135°, i.e., corresponding to
 positions 16, 21, 26, and 31 in FIG. 9A;
         case 3: offsetX = -iDistHor - 1; offsetY = uiHeigth >> 1; //horizontal 180°, i.e.,
 corresponding to positions 20, 25, and 30 in FIG. 9A;
         case 4: offsetX = -iDistHor - 1; offsetY = uiHeigth + iDistVer - 1; // 225°, i.e.,
 corresponding to positions 14, 17, 22, and 37 in FIG. 9A;
         }
         }
         }
```

Coordinates (xNb, yNb) of different candidate positions are obtained according to a coordinate offset value of each candidate position, where xNb = xTL + offsetX, and yNb = yTL + offset. Information of a coding block corresponding to the neighbouring position (xNb[idx], yNb[idx]) is stored in the candidate list.

Step c: Rank available candidate blocks in the candidate list according to positional distances.

If a top-left corner position of available candidate block cuNeibor[idx] in the candidate list is denoted as (xNeiTL, yNeiTL), then a distance dists[idx] between the current block and the candidate block cuNeibor[idx] satisfies dists[idx] = (abs(xTL - xNeiTL) + abs(yTL - yNeiTL)). The available candidate blocks are ranked in an ascending order of values of dists[idx]. In case of equal dists[idx], the available candidate blocks are ranked in the search order.

Step d: Read a histogram of gradients for the first five candidate blocks cuNeibor[idx] ranked, denoted as HoGN[nei], where nei = 0..4. When the number of available candidates cuNeibor is less than 5, HoGN[nei] corresponding to available candidates cuNeibor[idx] may be obtained as many as possible.

Step e: Calculate a histogram of gradients HoGM by performing arithmetic averaging on the obtained histogram of gradients HoGN[nei].

Step f: Store the histogram of gradients HoGM in units of a coding block.

Step g: Obtain an IPM for the current block according to the histogram of gradients HoGM.

In a scenario of DIMD prediction, all or part of the information of the histogram of gradients will be stored for subsequent operations. For details, reference can be made to S2.2 below.

In another application scenario, a direction mode IntraPredModeD may be further derived according to the information of the histogram of gradients. For example, if there is no non-zero amplitude in the HoG, IntraPredModeD is set to PLANAR. Otherwise, IntraPredModeD is set to argmax*ᵢ* (HoG[i]), where *i* = 0,...,*N*, and argmax*ᵢ*(L[i]) returns an index between 0 and *N* that maximizes L. If there are multiple indexes maximizing L, an index with a smaller value may be returned. Finally, predModeIntra is mapped to IntraPredModeD. It may be understood that, in a scenario of obtaining a prediction value based on DIMD, this part is not necessary.

### S2.2: Obtaining a prediction value using DIMD merge

For the implementation of S2.2, reference can be made to the above description, which will not be repeated herein.

A technical solution of DIMD merge based on the larger search region is proposed in this example, which can effectively guide the current block using directions of the coding block at the neighbouring position, thereby improving the accuracy of the prediction value generated according to the derived IPM. In addition, a usage condition of DIMD merge is limited in this example, which can significantly reduce the coding complexity. This method is applied to ECM11.0 and tested under All Intra conditions at 48 frame intervals, which can achieve -0.07% BD-rate changes (i.e., average bitrate changes under the same peak signal to noise ratio (PSNR)) in the Y component.

### Example 2

During derivation of an IPM based on DIMD merge, a candidate position around a current block may include only a spatial non-neighbouring position. This implementation will be described in detail below.

### S1: DIMD mode

For the implementation of S1, reference can be made to the above, which will not be repeated herein.

### S2.1: Intra mode derivation using DIMD merge

An input in step S2.1 may include the following information:
- a top-left position (xTL, yTL) of a current luma block, a bottom-left position (xLB, yLB) of the current luma block, and a top-right position (xRT, yRT) of the current luma block;
- a width uiWidth of the current luma block and a height uiHeigth of the current luma block;
- a neighbouring position (xNb[idx], yNb[idx]) of the current luma block, where idx = 1,...,31;
- a CU corresponding to the neighbouring position (xNb[idx], yNb[idx]), denoted as cuNeibor[idx], where idx = 1,...,31.

An output in step S2.1 has different contents in different scenarios. In a scenario of obtaining an intra prediction value using DIMD, the output is information of a histogram. In another application scenario, the output may be a conventional IPM IntraPredModeD, where a value of IntraPredModeD is between [0,66].

The derivation of the conventional IPM through gradient analysis will be introduced in detail below.

Step a: Search for coding blocks Neibor[idx] corresponding to neighbouring positions of the current block, and add the corresponding coding blocks to a candidate list in a search order. Whether the coding blocks Neibor[idx] are present, are duplicate, and are in the DIMD mode or DIMD merge mode is checked. The neighbouring positions searched and the search order of the neighbouring positions are illustrated in FIG. 9B. If there are duplicate coding blocks Neibor[idx] in the candidate list, only one coding block is retained.

During obtaining of the coding blocks Neibor[idx] corresponding to the neighbouring positions, coding blocks corresponding to 18 spatial non-neighbouring positions near the current block are used as candidates in the candidate list.

During selection of the coding blocks Neibor[idx] corresponding to the spatial non-neighbouring positions, a search distance may be determined based on the width (uiWidth) and the height (uiHeight) of the current block. Candidate positions are positions 1 to 18 illustrated in FIG. 9B, and the search order is based on the criterion from near to far.

The specific search process is as follows.

Search is performed in different directions of the current block, including 45°, vertical 90°, 135°, horizontal 180°, and 225°directions. The width (uiWidth) and the height (uiHeight) of the current luma block are used as a step-length reference for a search step length, and a search range extends to a region corresponding to a 4-fold step-length reference. In addition, in the horizontal 180° and vertical 90° directions, search corresponding to a 1-fold step-length reference is skipped.

Five directions angle[5]={0, 1, 2, 3, 4} are defined, which correspond to 45°, vertical 90°, 135°, horizontal 180°, and 225° directions respectively. The number numAng[4] = { 3, 5, 5, 5 } of directions to be searched for a different search step length is defined. A specific search direction is determined based on iMap[4][5], where iMap[4][5] = { { 0, 1, 4 },{ 0, 1, 2, 3, 4 },{ 0, 1, 2, 3, 4 },{ 0, 1, 2, 3, 4 } } represents directions to be searched for each search step length. The search steps are as follows:
- Step length 1: search directions angle[0], angle[1], and angle[4];
- Step length 2: search directions angle[0], angle[1], angle[2], angle[3], and angle[4];
- Step length 3: search directions angle[0], angle[1], angle[2], angle[3], and angle[4];
- Step length 4: search directions angle[0], angle[1], angle[2], angle[3], and angle[4].

Then, a corresponding search operation is performed.

```
         for (int iDistIdx = 1; iDistIdx <= 4; iDistIdx ++)//search-step-length iteration
         {
           int iDistHor = uiWidth * iDistIdx ;//horizontal search distance
           int iDistVer = uiHeigth * iDistIdx ;//vertical search distance
           for (int angleIdx= 0; angleIdx < numAng [iDistIdx - 1]; angleIdx ++)
         //directions to be searched for each search step length
         {
         switch (iMap[iDistIdx -1][ angleIdx])//obtain final coordinate offset values for
 different directions
         {
         case 0: offsetX = uiWidth + iDistHor - 1;
 offsetY = -iDistVer - 1 ;// 45° direction, i.e.,
 corresponding to positions 2, 5, 10, and 15 in FIG. 8
         case 1: offsetX = uiWidth >> 1; offsetY = -iDistVer - 1; //vertical 90° direction, i.e.,
 corresponding to positions 6, 11, and 16 in FIG. 8
         case 2: offsetX = -iDistHor - 1; offsetY = -iDistVer - 1; //135° direction, i.e.,
 corresponding to positions 3, 8, 13, and 18 in FIG. 8
         case 3: offsetX = -iDistHor - 1; offsetY = uiHeigth >> 1; //horizontal 180° direction,
 i.e., corresponding to positions 7, 12, and 17 in FIG. 8
         case 4: offsetX = -iDistHor - 1; offsetY = uiHeigth + iDistVer - 1; //225° direction,
 i.e., corresponding to positions 1, 4, 9, and 14 in FIG. 8
         }
         }
         }
```

Coordinates (xNb, yNb) of different candidate positions are obtained according to a coordinate offset value of each candidate position, where xNb = xTL + offsetX, and yNb = yTL + offset. A coding block corresponding to the neighbouring position (xNb[idx], yNb[idx]) is stored in the candidate list.

Step b: Rank available candidate blocks.

If a top-left position of an available coding block Neibor[idx] in the candidate list is denoted as (xNeiTL, yNeiTL), then a distance dists[idx] between the current block and the candidate coding block Neibor[idx] satisfies dists[idx] = (abs(xTL - xNeiTL) + abs(yTL - yNeiTL)). The available candidate blocks are ranked in an ascending order of values of dists[idx]. In case of equal dists[idx], the available candidate blocks are ranked in the search order.

Step c: Read a histogram of gradients of the first five coding blocks Neibor[idx] ranked, denoted as HoGN[nei], where nei = 0..4. If the number of available candidate coding blocks Neibor is less than 5, HoGN[nei] corresponding to available candidate coding blocks Neibor[idx] may be obtained as many as possible.

Step d: Calculate a histogram of gradients HoGM by performing arithmetic averaging on the obtained histogram of gradients HoGN[nei].

Step e: Store the histogram of gradients HoGM in units of a coding block.

Step f: Obtain an IPM for the current block according to the histogram of gradients HoGM.

In a scenario of DIMD prediction, all or part of the information of the histogram of gradients will be stored for subsequent operations. For details, reference can be made to S2.2 below.

In another application scenario, a direction mode IntraPredModeD may be further derived according to the information of the histogram of gradients. For example, if there is no non-zero amplitude in the HoG, IntraPredModeD is set to PLANAR. Otherwise, IntraPredModeD is set to argmax*ᵢ* (HoG[i]), where *i* = 0,...,*N*, and argmax*ᵢ*(L[i]) returns an index between 0 and *N* that maximizes L. If there are multiple indexes maximizing L, an index with a smaller value may be returned. Finally, predModeIntra is mapped to IntraPredModeD. It may be understood that, in a scenario of obtaining a prediction value based on DIMD, this part is not necessary.

### S2.2: Obtaining a prediction value using DIMD merge

For the implementation of S2.2, reference can be made to the above description, which will not be repeated herein.

The method embodiments of the disclosure are described in detail above with reference to FIG. 1 to FIG. 10, and apparatus embodiments of the disclosure will be described in detail below with reference to FIG. 11 to FIG. 14. It may be understood that, illustrations of the method embodiments and illustrations of the apparatus embodiments correspond to each other, and therefore, for parts not described in detail, reference can be made to the above method embodiments.

FIG. 11 is a schematic structural diagram of a decoder provided in an embodiment of the disclosure. The decoder 1100 in FIG. 11 includes a first determining unit 1110, a second determining unit 1120, and a third determining unit 1130.

The first determining unit 1110 is configured to determine a prediction parameter of a current block, where the prediction parameter of the current block includes a first indication parameter.

The second determining unit 1120 is configured to determine, according to one or more candidate positions, a direction parameter to be merged, if the first indication parameter indicates that a DIMD merge mode is to be used for decoding the current block, where the one or more candidate positions are located in a reconstructed region of a picture where the current block is located.

The third determining unit 1130 is configured to determine a prediction value of the current block according to the direction parameter to be merged.

In some implementations, the first determining unit 1110 is configured to parse a bitstream to determine the first indication parameter.

In some implementations, the prediction parameter of the current block is determined as follows. If the one or more candidate positions have no corresponding candidate block and/or candidate blocks corresponding to the one or more candidate positions are unavailable, it is determined that the first indication parameter indicates that the DIMD merge mode is not to be used for decoding the current block; and/or, if the one or more candidate positions have a corresponding candidate block, it is determined that the first indication parameter indicates that the DIMD merge mode is to be used for decoding the current block.

In some implementations, the first determining unit 1110 is configured to determine the first indication parameter according to whether a size of the current block satisfies a first condition.

In some implementations, the first determining unit 1110 is configured to determine that the first indication parameter indicates that the DIMD merge mode is to be used for decoding the current block, if a target size is less than or equal to a first threshold; and/or determine that the first indication parameter indicates that the DIMD merge mode is not to be used for decoding the current block, if the target size is greater than the first threshold. The target size is determined based on the size of the current block.

In some implementations, the target size is determined based on at least one of: a width of the current block; a height of the current block; a product of the width and the height of the current block; a maximum value of the width and the height of the current block; or a minimum value of the width and the height of the current block.

In some implementations, the first threshold is a pre-defined fixed value. Alternatively, the first threshold is determined based on first information parsed from a bitstream.

In some implementations, the first information has multiple candidate values. The multiple candidate values correspond to multiple thresholds respectively. The first threshold corresponds to a current value of the first information.

In some implementations, the multiple candidate values include at least one of: a first value, where a threshold corresponding to the first value is 32 × 32; a second value, where a threshold corresponding to the second value is 16 × 32; or a third value, where a threshold corresponding to the third value is 16 × 16.

In some implementations, the one or more candidate positions include a spatial neighbouring position and/or a spatial non-neighbouring position.

In some implementations, the one or more candidate positions include only the spatial non-neighbouring position.

In some implementations, a priority of the spatial non-neighbouring position is higher than a priority of the spatial neighbouring position.

In some implementations, the priority of the spatial non-neighbouring position being higher than the priority of the spatial neighbouring position includes at least one of: the spatial non-neighbouring position being preferentially searched compared with the spatial neighbouring position; or, a candidate block corresponding to the spatial non-neighbouring position being preferentially stored in a set of candidate blocks compared with a candidate block corresponding to the spatial neighbouring position. The set of candidate blocks is used for determining the prediction value.

In some implementations, the set of candidate blocks includes *Q* candidate positions. When the number of candidate blocks corresponding to the spatial non-neighbouring position is less than *Q*, the candidate block corresponding to the spatial neighbouring position is stored in the set of candidate blocks. *Q* is a positive integer greater than or equal to 1.

In some implementations, the one or more candidate positions are determined based on a size of the current block and a size of a candidate block around the current block, and the one or more candidate positions do not include the spatial non-neighbouring position of the current block.

In some implementations, the one or more candidate positions include seven candidate positions.

In some implementations, the one or more candidate positions are indicated based on an index parsed from a bitstream.

In some implementations, the prediction value is determined based on direction parameters of one or more candidate blocks. The one or more candidate blocks are determined based on a cost corresponding to a candidate block in a set of candidate blocks. The set of candidate blocks is determined based on the one or more candidate positions.

In some implementations, the cost corresponding to the candidate block in the set of candidate blocks is determined based on a prediction value of a template region of the current block and a reconstructed value of the template region. The prediction value of the template region is determined based on a direction parameter of the candidate block in the set of candidate blocks.

In some implementations, the cost corresponding to the candidate block in the set of candidate blocks is determined based on an SATD or an SAD between the prediction value of the template region and the reconstructed value of the template region.

In some implementations, the one or more candidate blocks are candidate blocks corresponding to minimum costs in the set of candidate blocks. Alternatively, the one or more candidate blocks are candidate blocks obtained by ranking candidate blocks in the set of candidate blocks based on costs.

In some implementations, the prediction value of the current block is determined based on a target direction parameter. The target direction parameter is determined based on weighted averaging of the direction parameters of the one or more candidate blocks. Weights of the one or more candidate blocks are determined based on costs corresponding to the one or more candidate blocks.

In some implementations, the prediction value of the current block is determined based on weighted averaging of candidate prediction values of the one or more candidate blocks. Weights of the one or more candidate blocks are determined based on costs corresponding to the one or more candidate blocks.

In some implementations, the greater the costs corresponding to the one or more candidate blocks, the smaller the weights of the one or more candidate blocks.

In some implementations, the spatial non-neighbouring position is determined based on a pre-defined position.

In some implementations, the pre-defined position is determined based on at least one of: a position of the current block; a pre-defined size; second information parsed from a bitstream, where the second information is used for adjusting the pre-defined size; or third information parsed from the bitstream, where the third information is used for adjusting the number of the pre-defined positions.

In some implementations, the pre-defined size is determined based on a size of the current block.

In some implementations, the pre-defined size includes a pre-defined horizontal size and/or a pre-defined vertical size.

In some implementations, the pre-defined horizontal size is *N* times a width of the current block; and/or, the pre-defined vertical size is *N* times a height of the current block. *N* is a positive integer greater than or equal to 1.

In some implementations, a value of *N* is less than or equal to 4.

In some implementations, a value of *N* includes 1, 2, 3, and 4.

In some implementations, the number of the one or more candidate positions is greater than 13.

In some implementations, the number of the one or more candidate positions is greater than or equal to 31.

In some implementations, the spatial non-neighbouring position satisfies at least one of: an absolute value of a horizontal offset of the spatial non-neighbouring position from a top-left corner position of the current block being equal to iDistHor + 1; or, an absolute value of a vertical offset of the spatial non-neighbouring position from the top-left corner position of the current block being equal to iDistVer + 1. iDistHor is equal to a pre-defined horizontal size, and iDistVer is equal to a pre-defined vertical size.

In some implementations, the spatial non-neighbouring position satisfies: xNb = xTL + offset and yNb = yTL + offset. offsetX and offsetY satisfy at least one of: offsetX = uiWidth + iDistHor - 1 and offsetY = -iDistVer - 1; offsetX = uiWidth >> 1 and offsetY = -iDistVer - 1; offsetX = -iDistHor - 1 and offsetY = -iDistVer - 1; offsetX = -iDistHor - 1 and offsetY = uiHeigth >> 1; or offsetX = -iDistHor - 1 and offsetY = uiHeigth + iDistVer - 1. xNb represents a horizontal coordinate of the spatial non-neighbouring position, yNb represents a vertical coordinate of the spatial non-neighbouring position, xTL represents a horizontal coordinate of the top-left corner position of the current block, yTL represents a vertical coordinate of the top-left corner position of the current block, uiWidth represents a width of the current block, and uiHeigth represents a height of the current block.

In some implementations, when *N* = 1, offsetX and offsetY satisfy at least one of: offsetX = uiWidth + iDistHor - 1 and offsetY = -iDistVer - 1; offsetX = -iDistHor - 1 and offsetY = -iDistVer - 1; or offsetX = -iDistHor - 1 and offsetY = uiHeigth + iDistVer - 1.

In some implementations, the spatial non-neighbouring position satisfies at least one of: being located on the top right of the current block; being located directly above the current block; being located on the top left of the current block; being located directly on the left of the current block; or being located on the bottom left of the current block.

In some implementations, the prediction value is determined based on direction parameters of *K* candidate blocks. The *K* candidate blocks are determined based on the one or more candidate positions. *K* is a positive integer greater than 3.

In some implementations, a value of *K* is greater than or equal to 5.

In some implementations, the prediction value is determined based on a set of candidate blocks, the set of candidate blocks is determined based on the one or more candidate positions, and the set of candidate blocks does not include duplicate candidate blocks.

In some implementations, the prediction value is determined based on arithmetic averaging or weighted averaging of the direction parameter to be merged. The direction parameter to be merged is determined based on the one or more candidate positions.

In some implementations, the direction parameter to be merged is a direction parameter of at least one candidate block. A weight of the direction parameter of the at least one candidate block is determined based on at least one of: a distance between the at least one candidate block and the current block; or the number of target samples corresponding to the at least one candidate block, where the target samples are required for determining the direction parameter in a DIMD mode.

In some implementations, the number of target samples corresponding to the at least one candidate block is used for determining an initial weight of the direction parameter of the at least one candidate block. The distance between the at least one candidate block and the current block is used for adjusting the initial weight to determine a target weight of the direction parameter of the at least one candidate block.

In some implementations, a direction parameter of each candidate block among the at least one candidate block includes an amplitude corresponding to an IPM, and the amplitude corresponding to the IPM is an amplitude normalized based on a size of the candidate block.

In some implementations, a value range of *N* is determined based on the size of the current block.

In some implementations, if the size of the current block is a first size, the value range of *N* is a first value range. If the size of the current block is a second size, the value range of *N* is a second value range. The first size is less than the second size, and the first value range is less than the second value range.

In some implementations, if a size of the current block is less than a preset size, a spatial neighbouring position does not include at least one of: a first position corresponding to 1/4 of a height of the current block; a second position corresponding to 1/4 of a width of the current block; a third position corresponding to 3/4 of the height of the current block; a fourth position corresponding to 3/4 of the width of the current block; a fifth position corresponding to 1/2 of the height of the current block; or a sixth position corresponding to 1/2 of the width of the current block.

In some implementations, a search order between the one or more candidate positions is determined based on distances between each of the one or more candidate positions and the current block.

In some implementations, the distances between each of the one or more candidate positions and the current block are determined based on distances between each of the one or more candidate positions and a top-left corner position of the current block.

In some implementations, the one or more candidate positions have a search order based on the distances between each of the one or more candidate positions and the current block and are ranked in an ascending order of the distances.

In some implementations, if two candidate positions among the one or more candidate positions have equal distances from the current block, a candidate position located on the left of the current block in the two candidate positions is searched before a candidate position located above the current block in the two candidate positions. Alternatively, if two candidate positions among the one or more candidate positions have equal distances from the current block, a candidate position located above the current block in the two candidate positions is searched before a candidate position located on the left of the current block in the two candidate positions.

In some implementations, the prediction value is determined based on a direction parameter of at least one candidate block in a set of candidate blocks. The set of candidate blocks is determined based on multiple search positions. The set of candidate blocks includes *M* candidate blocks, and ranking of the *M* candidate blocks in the set of candidate blocks is determined based on distances between each of the *M* candidate blocks and the current block. *M* is a positive integer greater than or equal to 1.

In some implementations, if two candidate blocks among the *M* candidate blocks have equal distances from the current block, a candidate block located on the left of the current block in the two candidate blocks is ranked higher than a candidate block located above the current block in the two candidate blocks. Alternatively, if two candidate blocks among the *M* candidate blocks have equal distances from the current block, a candidate block located above the current block in the two candidate blocks is ranked higher than a candidate block located on the left of the current block in the two candidate blocks.

In some implementations, the *M* candidate blocks include a first candidate block, and a distance between the first candidate block and the current block is determined based on a difference between a first distance and a second distance. The first distance represents a horizontal distance between a top-left corner position of the first candidate block and a top-left corner position of the current block, and the second distance represents a vertical distance between the top-left corner position of the first candidate block and the top-left corner position of the current block.

In some implementations, the distance between the first candidate block and the current block satisfies: (abs(xTL - xNeiTL) + abs(yTL - yNeiTL) + abs(abs(xTL - xNeiTL) - abs(yTL - yNeiTL))). xTL represents a horizontal coordinate of the top-left corner position of the current block, yTL represents a vertical coordinate of the top-left corner position of the current block, xNeiTL represents a horizontal coordinate of the top-left corner position of the first candidate block, yNeiTL represents a vertical coordinate of the top-left corner position of the first candidate block, and abs represents an operation for obtaining an absolute value.

In some implementations, the direction parameter is stored in units of a coding block. Alternatively, the direction parameter is stored in units of a picture block of a fixed size in a current picture.

In some implementations, a size of the picture block is determined based on a resolution of the current picture.

In some implementations, the prediction value is determined based on a set of candidate blocks. The set of candidate blocks is determined based on the one or more candidate positions, and whether two candidate blocks in the set of candidate blocks are duplicate is determined based on at least one of: whether the two candidate blocks correspond to the same coding block; or whether a difference between direction parameters of the two candidate blocks satisfies a preset condition.

In some implementations, the two candidate blocks include a first candidate block and a second candidate block. The first candidate block corresponds to a first histogram of gradients. The second candidate block corresponds to a second histogram of gradients. *S* IPMs with highest amplitudes in the first histogram of gradients form a first set. *S* IPMs with highest amplitudes in the second histogram of gradients form a second set. The difference between the direction parameters of the two candidate blocks is determined based on a difference between the first set and the second set. *S* is a positive integer greater than or equal to 1.

In some implementations, the difference between the first set and the second set is determined based on at least one of: the number of identical IPMs in the first set and the second set; or a difference between a first IPM in the first set and a second IPM in the second set. The first set does not include the second IPM, and the second set does not include the first IPM.

In some implementations, if the number of identical IPMs in the first set and the second set is greater than or equal to a second threshold, the two candidate blocks are duplicate; and/or, if the difference between the first IPM and the second IPM is less than or equal to a third threshold, the two candidate blocks are duplicate; and/or, if a ratio of an intersection of the first set and the second set to a union of the first set and the second set is greater than or equal to a fourth threshold, the two candidate blocks are duplicate.

In some implementations, at least one of the following is determined based on a size of the current block: the number of the direction parameter to be merged, where the direction parameter to be merged is determined based on the one or more candidate positions; or the number of IPMs for determining the prediction value.

In some implementations, the spatial non-neighbouring position is determined based on a first mapping relationship pre-established, where the first mapping relationship is a mapping relationship between an index of the spatial non-neighbouring position and a coordinate of the spatial non-neighbouring position. Alternatively, the spatial non-neighbouring position is determined based on a first mapping relationship and a second mapping relationship pre-established, where the first mapping relationship is a mapping relationship between an index of the spatial non-neighbouring position and a search distance, and the second mapping relationship is a mapping relationship between the index of the spatial non-neighbouring position and a search direction.

In some implementations, the search distance is a distance between the spatial non-neighbouring position and a top-left corner position of the current block; and/or, the search direction is a direction of the spatial non-neighbouring position relative to the current block.

In some implementations, the direction parameter includes: a set of IPMs and amplitudes corresponding to the set of IPMs; or information of a histogram of gradients.

In some implementations, the third determining unit 1230 is configured to determine a prediction direction corresponding to the current block according to the direction parameter to be merged, and determine the prediction value of the current block according to the prediction direction corresponding to the current block.

It may be understood that in embodiments of the disclosure, the "unit" may be part of the circuitry, part of the processor, part of the program or software, etc., and of course may also be a module, or may be non-modular. In addition, various components described in this embodiment may be integrated into one processing unit or may be present as a number of physically separated units, or two or more units may be integrated into one. The integrated unit may take the form of hardware or a software functional module.

If the integrated unit is implemented as a software functional module and not sold or used as a stand-alone product, the integrated unit may be stored in a computer-readable storage medium. Based on such understanding, the technical solution of this embodiment in essential, or a part that contributes to the prior art, or all or part of the technical solution, may be embodied in the form of a software product. The computer software product is stored in a storage medium and includes a number of instructions to enable a computer device (which may be a personal computer, a server, or a network device, etc.) or processor to perform all or part of the operations of the method described in this embodiment. The foregoing storage medium includes a USB stick, a removable hard disk, a read-only memory (ROM), a random-access memory (RAM), a magnetic disk or an optical disk, and other media that may store program codes.

Thus, embodiments of the disclosure provide a computer-readable storage medium, which is applied to the decoder 1100. The computer-readable storage medium is configured to store a computer program which, when executed by a processor, is operable to implement the decoding method described in any one of the foregoing embodiments.

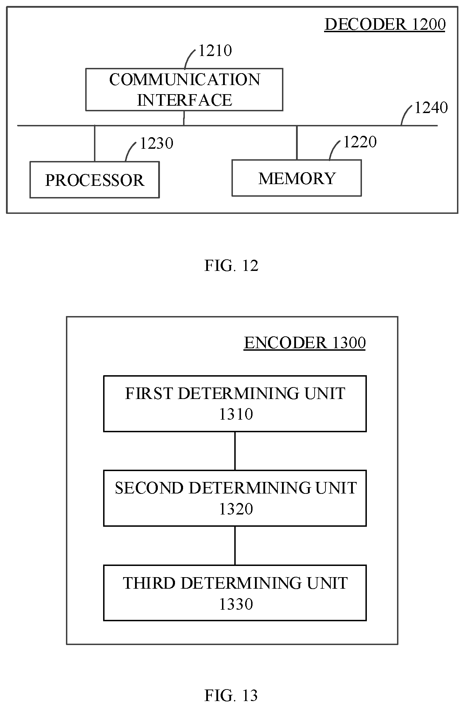

Based on the above structure of the decoder 1100 and the computer-readable storage medium, reference is made to FIG. 12 which is a schematic diagram of a specific hardware structure of a decoder 1100 provided in embodiments of the disclosure. As illustrated in FIG. 12, the decoder 1200 may include a communication interface 1210, a memory 1220, and a processor 1230. Various components are coupled together via a bus system 1240. It may be understood that, the bus system 1240 is configured to enable connection and communication between these components. The bus system 1240 includes a power bus, a control bus, and a status signal bus in addition to a data bus. For the sake of clarity, however, the various buses are labelled as bus system 1240 in FIG. 12.

The communication interface 1210 is configured to receive and transmit signals during information transmission with other external network elements.

The memory 1220 is configured to store a computer program.

The processor 1230 is configured to, when executing the computer program, determine a prediction parameter of a current block, where the prediction parameter of the current block includes a first indication parameter; determine, according to one or more candidate positions, a direction parameter to be merged, if the first indication parameter indicates that a DIMD merge mode is to be used for decoding the current block, where the one or more candidate positions are located in a reconstructed region of a picture where the current block is located; and determine a prediction value of the current block according to the direction parameter to be merged.

It will be appreciated that, the memory 1220 in embodiments of the disclosure may be a transitory memory or non-transitory memory, or may include both the transitory memory and non-transitory memory. In particular, the non-transitory memory may be an ROM, a programmable ROM (PROM), an erasable PROM (EPROM), an electrically EPROM (EEPROM), or a flash memory. The transitory memory may be an RAM, which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct Rambus RAM (DRRAM). The memory 1220 of the system and method described in this disclosure is intended to include, but is not limited to, these and any other suitable types of memory.

The processor 1230 may be an integrated circuit chip with signal processing capabilities. During implementation, the operations in the above method may be accomplished by integrated logic circuitry in the hardware of the processor 1230 or by instructions in the form of software. The processor 1230 described above may be a general-purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the memory 1220, and the processor 1230 reads the information in the memory 1220 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP Device (DSPD), programmable logic device (PLD), FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the processor 1230 is further configured to perform the decoding method described in the foregoing embodiment when executing the computer program.

FIG. 13 is a schematic structural diagram of an encoder provided in an embodiment of the disclosure. The encoder 1300 in FIG. 13 includes a first determining unit 1310, a second determining unit 1320, and a third determining unit 1330.

The first determining unit 1310 is configured to determine whether a DIMD merge mode is to be used for encoding a current block.

The second determining unit 1320 is configured to determine, according to one or more candidate positions, a direction parameter to be merged, if the DIMD merge mode is to be used for encoding the current block, where the one or more candidate positions are located in a reconstructed region of a picture where the current block is located.

The third determining unit 1130 is configured to determine a prediction value of the current block according to the direction parameter to be merged.

In some implementations, the encoder 1300 further includes a signalling unit. The signalling unit is configured to signal a first indication parameter in a bitstream, where the first indication parameter indicates whether the DIMD merge mode is to be used for encoding the current block.

In some implementations, the first determining unit 1310 is configured to determine that the DIMD merge mode is not to be used for decoding the current block, if the one or more candidate positions have no corresponding candidate block and/or candidate blocks corresponding to the one or more candidate positions are unavailable; and/or determine that the DIMD merge mode is to be used for decoding the current block, if the one or more candidate positions have a corresponding candidate block.

In some implementations, the first determining unit 1310 is configured to determine, according to whether a size of the current block satisfies a first condition, whether the DIMD merge mode is to be used for encoding the current block.

In some implementations, the first determining unit 1310 is configured to determine that the DIMD merge mode is to be used for decoding the current block, if a target size is less than or equal to a first threshold; and/or determine that the DIMD merge mode is not to be used for decoding the current block, if the target size is greater than the first threshold. The target size is determined based on the size of the current block.

In some implementations, the target size is determined based on at least one of: a width of the current block; a height of the current block; a product of the width and the height of the current block; a maximum value of the width and the height of the current block; or a minimum value of the width and the height of the current block.

In some implementations, the first threshold is a pre-defined fixed value.

In some implementations, the method further includes the following. First information is signalled in a bitstream, where the first information is used for determining the first threshold.

In some implementations, the first information is determined based on a video resolution.

In some implementations, the first information has multiple candidate values, the multiple candidate values correspond to multiple thresholds respectively, and the first threshold corresponds to a current value of the first information.

In some implementations, the multiple candidate values include at least one of: a first value, where a threshold corresponding to the first value is 32 × 32; a second value, where a threshold corresponding to the second value is 16 × 32; or a third value, where a threshold corresponding to the third value is 16 × 16.

In some implementations, the one or more candidate positions include a spatial neighbouring position and/or a spatial non-neighbouring position.

In some implementations, the one or more candidate positions include only the spatial non-neighbouring position.

In some implementations, a priority of the spatial non-neighbouring position is higher than a priority of the spatial neighbouring position.

In some implementations, the priority of the spatial non-neighbouring position being higher than the priority of the spatial neighbouring position includes at least one of: the spatial non-neighbouring position being preferentially searched compared with the spatial neighbouring position; or, a candidate block corresponding to the spatial non-neighbouring position being preferentially stored in a set of candidate blocks compared with a candidate block corresponding to the spatial neighbouring position. The set of candidate blocks is used for determining the prediction value.

In some implementations, the set of candidate blocks includes *Q* candidate positions. When the number of candidate blocks corresponding to the spatial non-neighbouring position is less than *Q*, the candidate block corresponding to the spatial neighbouring position is stored in the set of candidate blocks. *Q* is a positive integer greater than or equal to 1.

In some implementations, the one or more candidate positions are determined based on a size of the current block and a size of a candidate block around the current block, and the one or more candidate positions do not include a spatial non-neighbouring position of the current block.

In some implementations, the one or more candidate positions include seven candidate positions.

In some implementations, whether the DIMD merge mode is to be used for encoding the current block is determined as follows. Whether the DIMD merge mode is to be used is determined according to a first IPM and a second IPM, where the first IPM is determined based on a first target direction parameter, the first target direction parameter is determined based on the one or more candidate positions, the second IPM is determined based on a second target direction parameter, and the second target direction parameter is determined based on a DIMD mode.

In some implementations, in the first target direction parameter, an amplitude corresponding to the first IPM is highest; and/or, in the second target direction parameter, an amplitude corresponding to the second IPM is highest.

In some implementations, whether the DIMD merge mode is to be used is determined according to the first IPM and the second IPM as follows. To enable or disable the DIMD merge mode is determined according to a difference between a mode index of the first IPM and a mode index of the second IPM.

In some implementations, to enable or disable the DIMD merge mode is determined according to the difference between the mode index of the first IPM and the mode index of the second IPM as follows. If the difference between the mode index of the first IPM and the mode index of the second IPM is less than a preset threshold or falls within a preset range, the DIMD merge mode is disabled.

In some implementations, the method further includes the following. A cost corresponding to the DIMD merge mode is determined according to the prediction value and an original value of the current block. If the cost corresponding to the DIMD merge mode satisfies a preset condition, the DIMD merge mode is added to a set of candidate modes. A target prediction mode for the current block is determined by performing RDO on prediction modes in the set of candidate modes.

In some implementations, the preset condition includes: the cost corresponding to the DIMD merge mode is less than or equal to a target cost. The target cost is determined based on a cost corresponding to a first prediction mode in the set of candidate modes, and in the set of candidate modes, the cost corresponding to the first prediction mode is maximum.

In some implementations, the target cost is equal to the cost corresponding to the first prediction mode. Alternatively, the target cost is equal to a product of the cost corresponding to the first prediction mode and a scaling factor.

In some implementations, the cost corresponding to the DIMD merge mode is determined based on an SATD or an SAD between the prediction value and the original value.

In some implementations, the prediction value is determined based on direction parameters of one or more candidate blocks. The one or more candidate blocks are determined based on a cost corresponding to a candidate block in a set of candidate blocks. The set of candidate blocks is determined based on the one or more candidate positions.

In some implementations, the cost corresponding to the candidate block in the set of candidate blocks is determined based on a prediction value of a template region of the current block and a reconstructed value of the template region. The prediction value of the template region is determined based on a direction parameter of the candidate block in the set of candidate blocks.

In some implementations, the cost corresponding to the candidate block in the set of candidate blocks is determined based on an SATD or an SAD between the prediction value of the template region and the reconstructed value of the template region.

In some implementations, the one or more candidate blocks are candidate blocks corresponding to minimum costs in the set of candidate blocks. Alternatively, the one or more candidate blocks are candidate blocks obtained by ranking candidate blocks in the set of candidate blocks based on costs.

In some implementations, the prediction value of the current block is determined based on a target direction parameter. The target direction parameter is determined based on weighted averaging of the direction parameters of the one or more candidate blocks. Weights of the one or more candidate blocks are determined based on costs corresponding to the one or more candidate blocks.

In some implementations, the prediction value of the current block is determined based on weighted averaging of candidate prediction values of the one or more candidate blocks. Weights of the one or more candidate blocks are determined based on costs corresponding to the one or more candidate blocks.

In some implementations, the greater the costs corresponding to the one or more candidate blocks, the smaller the weights of the one or more candidate blocks.

In some implementations, the spatial non-neighbouring position is determined based on a pre-defined position.

In some implementations, the pre-defined position is determined based on at least one of: a position of the current block; a pre-defined size; second information for adjusting the pre-defined size; or third information for adjusting the number of the pre-defined positions.

In some implementations, the method further includes the following. The second information and/or the third information is signalled in a bitstream.

In some implementations, the second information and/or the third information is determined based on a video resolution.

In some implementations, the pre-defined size is determined based on a size of the current block.

In some implementations, the pre-defined size includes a pre-defined horizontal size and/or a pre-defined vertical size.

In some implementations, the pre-defined horizontal size is *N* times a width of the current block; and/or, the pre-defined vertical size is *N* times a height of the current block. *N* is a positive integer greater than or equal to 1.

In some implementations, a value of *N* is less than or equal to 4.

In some implementations, a value of *N* includes 1, 2, 3, and 4.

In some implementations, the number of the one or more candidate positions is greater than 13.

In some implementations, the number of the one or more candidate positions is greater than or equal to 31.

In some implementations, a spatial non-neighbouring position satisfies at least one of: an absolute value of a horizontal offset of the spatial non-neighbouring position from a top-left corner position of the current block being equal to iDistHor + 1; or, an absolute value of a vertical offset of the spatial non-neighbouring position from the top-left corner position of the current block being equal to iDistVer + 1. iDistHor is equal to a pre-defined horizontal size, and iDistVer is equal to a pre-defined vertical size.

In some implementations, the spatial non-neighbouring position satisfies: xNb = xTL + offsetX and yNb = yTL + offsetY. offsetX and offsetY satisfy at least one of: offsetX = uiWidth + iDistHor - 1 and offsetY = -iDistVer - 1; offsetX = uiWidth >> 1 and offsetY = -iDistVer - 1; offsetX = -iDistHor - 1 and offsetY = -iDistVer - 1; offsetX = -iDistHor - 1 and offsetY = uiHeigth >> 1; or offsetX = -iDistHor - 1 and offsetY = uiHeigth + iDistVer - 1. xNb represents a horizontal coordinate of the spatial non-neighbouring position, yNb represents a vertical coordinate of the spatial non-neighbouring position, xTL represents a horizontal coordinate of the top-left corner position of the current block, yTL represents a vertical coordinate of the top-left corner position of the current block, uiWidth represents a width of the current block, and uiHeigth represents a height of the current block.

In some implementations, when *N* = 1, offsetX and offsetY satisfy at least one of: offsetX = uiWidth + iDistHor - 1 and offsetY = -iDistVer - 1; offsetX = -iDistHor - 1 and offsetY = -iDistVer - 1; or offsetX = -iDistHor - 1 and offsetY = uiHeigth + iDistVer - 1.

In some implementations, a spatial non-neighbouring position satisfies at least one of: being located on the top right of the current block; being located directly above the current block; being located on the top left of the current block; being located directly on the left of the current block; or being located on the bottom left of the current block.

In some implementations, the prediction value is determined based on direction parameters of *K* candidate blocks. The *K* candidate blocks are determined based on the one or more candidate positions. *K* is a positive integer greater than 3.

In some implementations, a value of *K* is greater than or equal to 5.

In some implementations, the prediction value is determined based on a set of candidate blocks, the set of candidate blocks is determined based on the one or more candidate positions, and the set of candidate blocks does not include duplicate candidate blocks.

In some implementations, the prediction value is determined based on a target direction parameter. The target direction parameter is determined based on arithmetic averaging or weighted averaging of the direction parameter to be merged. The direction parameter to be merged is determined based on the one or more candidate positions.

In some implementations, the direction parameter to be merged is a direction parameter of at least one candidate block. A weight of the direction parameter of the at least one candidate block is determined based on at least one of: a distance between the at least one candidate block and the current block; or the number of target samples corresponding to the at least one candidate block, where the target samples are required for determining the direction parameter in a DIMD mode.

In some implementations, the number of target samples corresponding to the at least one candidate block is used for determining an initial weight of the direction parameter of the at least one candidate block. The distance between the at least one candidate block and the current block is used for adjusting the initial weight to determine a target weight of the direction parameter of the at least one candidate block.

In some implementations, a direction parameter of each candidate block among the at least one candidate block includes an amplitude corresponding to an IPM, and the amplitude corresponding to the IPM is an amplitude normalized based on a size of the candidate block.

In some implementations, a value range of *N* is determined based on the size of the current block.

In some implementations, if the size of the current block is a first size, the value range of *N* is a first value range. If the size of the current block is a second size, the value range of *N* is a second value range. The first size is less than the second size, and the first value range is less than the second value range.

In some implementations, if a size of the current block is less than a preset size, a spatial neighbouring position does not include at least one of: a first position corresponding to 1/4 of a height of the current block; a second position corresponding to 1/4 of a width of the current block; a third position corresponding to 3/4 of the height of the current block; a fourth position corresponding to 3/4 of the width of the current block; a fifth position corresponding to 1/2 of the height of the current block; or a sixth position corresponding to 1/2 of the width of the current block.

In some implementations, a search order between the one or more candidate positions is determined based on distances between each of the one or more candidate positions and the current block.

In some implementations, the distances between each of the one or more candidate positions and the current block are determined based on distances between each of the one or more candidate positions and a top-left corner position of the current block.

In some implementations, the one or more candidate positions have a search order based on the distances between each of the one or more candidate positions and the current block and are ranked in an ascending order of the distances.

In some implementations, if two candidate positions among the one or more candidate positions have equal distances from the current block, a candidate position located on the left of the current block in the two candidate positions is searched before a candidate position located above the current block in the two candidate positions. Alternatively, if two candidate positions among the one or more candidate positions have equal distances from the current block, a candidate position located above the current block in the two candidate positions is searched before a candidate position located on the left of the current block in the two candidate positions.

In some implementations, the prediction value is determined based on a direction parameter of at least one candidate block in a set of candidate blocks. The set of candidate blocks is determined based on the one or more candidate positions. The set of candidate blocks includes *M* candidate blocks, and ranking of the *M* candidate blocks in the set of candidate blocks is determined based on distances between each of the *M* candidate blocks and the current block. *M* is a positive integer greater than or equal to 1.

In some implementations, if two candidate blocks among the *M* candidate blocks have equal distances from the current block, a candidate block located on the left of the current block in the two candidate blocks is ranked higher than a candidate block located above the current block in the two candidate blocks. Alternatively, if two candidate blocks among the *M* candidate blocks have equal distances from the current block, a candidate block located above the current block in the two candidate blocks is ranked higher than a candidate block located on the left of the current block in the two candidate blocks.

In some implementations, the *M* candidate blocks include a first candidate block, and a distance between the first candidate block and the current block is determined based on a difference between a first distance and a second distance. The first distance represents a horizontal distance between a top-left corner position of the first candidate block and a top-left corner position of the current block, and the second distance represents a vertical distance between the top-left corner position of the first candidate block and the top-left corner position of the current block.

In some implementations, the distance between the first candidate block and the current block satisfies: (abs(xTL - xNeiTL) + abs(yTL - yNeiTL) + abs(abs(xTL - xNeiTL) - abs(yTL - yNeiTL))). xTL represents a horizontal coordinate of the top-left corner position of the current block, yTL represents a vertical coordinate of the top-left corner position of the current block, xNeiTL represents a horizontal coordinate of the top-left corner position of the first candidate block, yNeiTL represents a vertical coordinate of the top-left corner position of the first candidate block, and abs represents an operation for obtaining an absolute value.

In some implementations, the direction parameter is stored in units of a coding block. Alternatively, the direction parameter is stored in units of a picture block of a fixed size in a current picture.

In some implementations, a size of the picture block is determined based on a resolution of the current picture.

In some implementations, the prediction value is determined based on a set of candidate blocks. The set of candidate blocks is determined based on the one or more candidate positions, and whether two candidate blocks in the set of candidate blocks are duplicate is determined based on at least one of: whether the two candidate blocks correspond to the same coding block; or whether a difference between direction parameters of the two candidate blocks satisfies a preset condition.

In some implementations, the two candidate blocks include a first candidate block and a second candidate block. The first candidate block corresponds to a first histogram of gradients. The second candidate block corresponds to a second histogram of gradients. *S* IPMs with highest amplitudes in the first histogram of gradients form a first set. *S* IPMs with highest amplitudes in the second histogram of gradients form a second set. The difference between the direction parameters of the two candidate blocks is determined based on a difference between the first set and the second set. *S* is a positive integer greater than or equal to 1.

In some implementations, the difference between the first set and the second set is determined based on at least one of: the number of identical IPMs in the first set and the second set; or a difference between a first IPM in the first set and a second IPM in the second set. The first set does not include the second IPM, and the second set does not include the first IPM.

In some implementations, if the number of identical IPMs in the first set and the second set is greater than or equal to a second threshold, the two candidate blocks are duplicate; and/or, if the difference between the first IPM and the second IPM is less than or equal to a third threshold, the two candidate blocks are duplicate; and/or, if a ratio of an intersection of the first set and the second set to a union of the first set and the second set is greater than or equal to a fourth threshold, the two candidate blocks are duplicate.

In some implementations, at least one of the following is determined based on a size of the current block: the number of the direction parameter to be merged, where the direction parameter to be merged is determined based on the one or more candidate positions; or the number of IPMs for determining the prediction value.

In some implementations, a spatial non-neighbouring position is determined based on a first mapping relationship pre-established, where the first mapping relationship is a mapping relationship between an index of the spatial non-neighbouring position and a coordinate of the spatial non-neighbouring position. Alternatively, a spatial non-neighbouring position is determined based on a first mapping relationship and a second mapping relationship pre-established, where the first mapping relationship is a mapping relationship between an index of the spatial non-neighbouring position and a search distance, and the second mapping relationship is a mapping relationship between the index of the spatial non-neighbouring position and a search direction.

In some implementations, the search distance is a distance between the spatial non-neighbouring position and a top-left corner position of the current block; and/or, the search direction is a direction of the spatial non-neighbouring position relative to the current block.

In some implementations, the direction parameter includes: a set of IPMs and amplitudes corresponding to the set of IPMs; or information of a histogram of gradients.

In some implementations, the third determining unit is configured to determine a prediction direction corresponding to the current block according to the direction parameter to be merged, and determine the prediction value of the current block according to the prediction direction corresponding to the current block.

It may be understood that in embodiments of the disclosure, the "unit" may be part of the circuitry, part of the processor, part of the program or software, etc., and of course may also be a module, or may be non-modular. In addition, various components described in this embodiment may be integrated into one processing unit or may be present as a number of physically separated units, or two or more units may be integrated into one. The integrated unit may take the form of hardware or a software functional module.

If the integrated unit is implemented as a software functional module and not sold or used as a stand-alone product, the integrated unit may be stored in a computer-readable storage medium. Based on such understanding, the technical solution of this embodiment in essential, or a part that contributes to the prior art, or all or part of the technical solution, may be embodied in the form of a software product. The computer software product is stored in a storage medium and includes a number of instructions to enable a computer device (which may be a personal computer, a server, or a network device, etc.) or processor to perform all or part of the operations of the method described in this embodiment. The foregoing storage medium includes a USB stick, a removable hard disk, an ROM, an RAM, a magnetic disk or an optical disk, and other media that may store program codes.

Thus, embodiments of the disclosure provide a computer-readable storage medium, which is applied to the encoder 1300. The computer-readable storage medium is configured to store a computer program which, when executed by a processor, is operable to implement the encoding method described in any one of the foregoing embodiments.

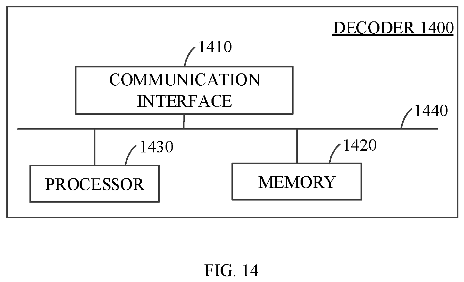

Based on the above structure of the encoder 1300 and the computer-readable storage medium, reference is made to FIG. 14 which is a schematic diagram of a specific hardware structure of an encoder 1400 provided in embodiments of the disclosure. As illustrated in FIG. 14, the encoder 1400 may include a communication interface 1410, a memory 1420, and a processor 1430. Various components are coupled together via a bus system 1440. It may be understood that, the bus system 1440 is configured to enable connection and communication between these components. The bus system 1440 includes a power bus, a control bus, and a status signal bus in addition to a data bus. For the sake of clarity, however, the various buses are labelled as bus system 1440 in FIG. 14.

The communication interface 1410 is configured to receive and transmit signals during information transmission with other external network elements.

The memory 1420 is configured to store a computer program.

The processor 1430 is configured to, when executing the computer program, determine whether a DIMD merge mode is to be used for encoding a current block; determine, according to one or more candidate positions, a direction parameter to be merged, if the DIMD merge mode is to be used for encoding the current block, where the one or more candidate positions are located in a reconstructed region of a picture where the current block is located; and determine a prediction value of the current block according to the direction parameter to be merged.

It will be appreciated that, the memory 1420 in embodiments of the disclosure may be a transitory memory or non-transitory memory, or may include both the transitory memory and non-transitory memory. In particular, the non-transitory memory may be an ROM, a PROM, an EPROM, an EEPROM, or a flash memory. The transitory memory may be an RAM, which is used as an external cache. By way of illustration, but not limitation, many forms of RAM are available, such as an SRAM, a DRAM, an SDRAM, a DDRSDRAM, an ESDRAM, an SLDRAM, and a DRRAM. The memory 1420 of the system and method described in this disclosure is intended to include, but is not limited to, these and any other suitable types of memory.

The processor 1430 may be an integrated circuit chip with signal processing capabilities. During implementation, the operations in the above method may be accomplished by integrated logic circuitry in the hardware of the processor 1430 or by instructions in the form of software. The processor 1430 described above may be a general-purpose processor, a DSP, an ASIC, an FPGA, or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the memory 1420, and the processor 1430 reads the information in the memory 1420 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSPD, PLD, FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the processor 1430 is further configured to perform the encoding method described in the foregoing embodiment when executing the computer program.

Embodiments of the disclosure further provide a computer-readable storage medium, where the computer-readable storage medium is a non-volatile computer-readable storage medium storing a bitstream. The bitstream is generated according to an encoding method for an encoder or decoded according to a decoding method for a decoder. The decoding method may be the decoding method described in any one of the foregoing embodiments, and the encoding method may be the encoding method described in any one of the foregoing embodiments.

It may be noted that in this disclosure, the terms "include", "comprise" or any other variant thereof are intended to cover non-exclusive inclusion, such that a process, method, article or apparatus comprising a range of elements includes not only those elements, but also includes other elements that are not explicitly listed or are also inherent to such a process, method, article or apparatus. Without further limitation, an element qualified by the statement "including a..." does not preclude the existence of another identical element in the process, method, article or apparatus including that element.

The above serial numbers of the embodiments of the disclosure are for descriptive purposes only and do not represent the merits of the embodiments.

The methods disclosed in the several method embodiments provided in this disclosure may be combined in any way to obtain new method embodiments without conflict.

The features disclosed in the several product embodiments provided in this disclosure may be combined in any way to obtain new product embodiments without conflict.

The features disclosed in several method or apparatus embodiments provided in this disclosure may be combined in any way to obtain new method embodiments or apparatus embodiments without conflict.

The foregoing is only a specific implementation of the present disclosure, but the scope of protection of the present disclosure is not limited thereto, and any variation or substitution readily conceivable by any person skilled in the art within the technical scope disclosed in the present disclosure shall be covered by the scope of protection of the present disclosure. Accordingly, the scope of protection of this disclosure shall be governed by the scope of protection of the stated claims.

## Claims

1. A decoding method, applied to a decoder and comprising:
determining a prediction parameter of a current block, wherein the prediction parameter of the current block comprises a first indication parameter;
determining, according to one or more candidate positions, a direction parameter to be merged, in response to the first indication parameter indicating that a decoder-side intra mode derivation (DIMD) merge mode is to be used for decoding the current block, wherein the one or more candidate positions are located in a reconstructed region of a picture where the current block is located; and
determining a prediction value of the current block according to the direction parameter to be merged.

2. The method of claim 1, wherein determining the prediction parameter of the current block comprises:
parsing a bitstream to determine the first indication parameter.

3. The method of claim 1, wherein determining the prediction parameter of the current block comprises:
determining that the first indication parameter indicates that the DIMD merge mode is not to be used for decoding the current block, in response to the one or more candidate positions having no corresponding candidate block and/or candidate blocks corresponding to the one or more candidate positions being unavailable; and/or
determining that the first indication parameter indicates that the DIMD merge mode is to be used for decoding the current block, in response to the one or more candidate positions having a corresponding candidate block.

4. The method of claim 1, wherein determining the prediction parameter of the current block comprises:
determining the first indication parameter according to whether a size of the current block satisfies a first condition.

5. The method of claim 4, wherein determining the first indication parameter according to whether the size of the current block satisfies the first condition comprises:
determining that the first indication parameter indicates that the DIMD merge mode is to be used for decoding the current block, in response to a target size being less than or equal to a first threshold; and/or
determining that the first indication parameter indicates that the DIMD merge mode is not to be used for decoding the current block, in response to the target size being greater than the first threshold;
wherein the target size is determined based on the size of the current block.

6. The method of claim 5, wherein the target size is determined based on at least one of:
a width of the current block;
a height of the current block;
a product of the width and the height of the current block;
a maximum value of the width and the height of the current block; or
a minimum value of the width and the height of the current block.

7. The method of claim 5, wherein
the first threshold is a pre-defined fixed value; or
the first threshold is determined based on first information parsed from a bitstream.

8. The method of claim 7, wherein the first information has a plurality of candidate values, the plurality of candidate values correspond to a plurality of thresholds respectively, and the first threshold corresponds to a current value of the first information.

9. The method of claim 8, wherein the plurality of candidate values comprise at least one of:
a first value, wherein a threshold corresponding to the first value is 32 × 32;
a second value, wherein a threshold corresponding to the second value is 16 × 32; or
a third value, wherein a threshold corresponding to the third value is 16 × 16.

10. The method of claim 1, wherein the one or more candidate positions comprise a spatial neighbouring position and/or a spatial non-neighbouring position.

11. The method of claim 10, wherein the one or more candidate positions comprise only the spatial non-neighbouring position.

12. The method of claim 10, wherein a priority of the spatial non-neighbouring position is higher than a priority of the spatial neighbouring position.

13. The method of claim 12, wherein the priority of the spatial non-neighbouring position being higher than the priority of the spatial neighbouring position comprises at least one of:
the spatial non-neighbouring position being preferentially searched compared with the spatial neighbouring position; or
a candidate block corresponding to the spatial non-neighbouring position being preferentially stored in a set of candidate blocks compared with a candidate block corresponding to the spatial neighbouring position, wherein the set of candidate blocks is used for determining the prediction value.

14. The method of claim 13, wherein the set of candidate blocks comprises *Q* candidate positions, and in response to a number of candidate blocks corresponding to the spatial non-neighbouring position being less than *Q*, the candidate block corresponding to the spatial neighbouring position is stored in the set of candidate blocks, wherein *Q* is a positive integer greater than or equal to 1.

15. The method of claim 10, wherein the one or more candidate positions are determined based on a size of the current block and a size of a candidate block around the current block, and the one or more candidate positions do not comprise the spatial non-neighbouring position of the current block.

16. The method of claim 15, wherein the one or more candidate positions comprise seven candidate positions.

17. The method of claim 1, wherein the one or more candidate positions are indicated based on an index parsed from a bitstream.

18. The method of claim 1, wherein the prediction value is determined based on direction parameters of one or more candidate blocks, the one or more candidate blocks are determined based on a cost corresponding to a candidate block in a set of candidate blocks, and the set of candidate blocks is determined based on the one or more candidate positions.

19. The method of claim 18, wherein the cost corresponding to the candidate block in the set of candidate blocks is determined based on a prediction value of a template region of the current block and a reconstructed value of the template region, and the prediction value of the template region is determined based on a direction parameter of the candidate block in the set of candidate blocks.

20. The method of claim 19, wherein the cost corresponding to the candidate block in the set of candidate blocks is determined based on a sum of absolute transformed differences (SATD) or a sum of absolute differences (SAD) between the prediction value of the template region and the reconstructed value of the template region.

21. The method of any one of claims 18 to 20, wherein
the one or more candidate blocks are candidate blocks corresponding to minimum costs in the set of candidate blocks; or
the one or more candidate blocks are candidate blocks obtained by ranking candidate blocks in the set of candidate blocks based on costs.

22. The method of any one of claims 18 to 21, wherein the prediction value of the current block is determined based on a target direction parameter, the target direction parameter is determined based on weighted averaging of the direction parameters of the one or more candidate blocks, and weights of the one or more candidate blocks are determined based on costs corresponding to the one or more candidate blocks.

23. The method of any one of claims 18 to 21, wherein the prediction value of the current block is determined based on weighted averaging of candidate prediction values of the one or more candidate blocks, and weights of the one or more candidate blocks are determined based on costs corresponding to the one or more candidate blocks.

24. The method of claim 22 or 23, wherein the greater the costs corresponding to the one or more candidate blocks, the smaller the weights of the one or more candidate blocks.

25. The method of claim 10, wherein the spatial non-neighbouring position is determined based on a pre-defined position.

26. The method of claim 25, wherein the pre-defined position is determined based on at least one of:
a position of the current block;
a pre-defined size;
second information parsed from a bitstream, wherein the second information is used for adjusting the pre-defined size; or
third information parsed from the bitstream, wherein the third information is used for adjusting a number of the pre-defined positions.

27. The method of claim 26, wherein the pre-defined size is determined based on a size of the current block.

28. The method of claim 27, wherein the pre-defined size comprises a pre-defined horizontal size and/or a pre-defined vertical size.

29. The method of claim 28, wherein
the pre-defined horizontal size is *N* times a width of the current block; and/or
the pre-defined vertical size is *N* times a height of the current block;
wherein *N* is a positive integer greater than or equal to 1.

30. The method of claim 29, wherein a value of *N* is less than or equal to 4.

31. The method of claim 29, wherein a value of *N* comprises 1, 2, 3, and 4.

32. The method of claim 1, wherein a number of the one or more candidate positions is greater than 13.

33. The method of claim 1, wherein a number of the one or more candidate positions is greater than or equal to 31.

34. The method of claim 10, wherein the spatial non-neighbouring position satisfies at least one of:
an absolute value of a horizontal offset of the spatial non-neighbouring position from a top-left corner position of the current block being equal to iDistHor + 1; or
an absolute value of a vertical offset of the spatial non-neighbouring position from the top-left corner position of the current block being equal to iDistVer + 1;
wherein iDistHor is equal to a pre-defined horizontal size, and iDistVer is equal to a pre-defined vertical size.

35. The method of claim 34, wherein the spatial non-neighbouring position satisfies: $xNb = xTL + offsetX and yNb = yTL + offsetY ;$ wherein offsetX and offsetY satisfy at least one of: $offsetX = uiWidth + iDistHor - 1 and offsetY = - iDistVer - 1 ;$ $offsetX = uiWidth ≫ 1 and offsetY = - iDistVer - 1 ;$ $offsetX = - iDistHor - 1 and offsetY = - iDistVer - 1 ;$ $offsetX = - iDistHor - 1 and offsetY = uiHeigth ≫ 1 ;$ or $offsetX = - iDistHor - 1 and offsetY = uiHeigth + iDistVer - 1 ;$ wherein xNb represents a horizontal coordinate of the spatial non-neighbouring position, yNb represents a vertical coordinate of the spatial non-neighbouring position, xTL represents a horizontal coordinate of the top-left corner position of the current block, yTL represents a vertical coordinate of the top-left corner position of the current block, uiWidth represents a width of the current block, and uiHeigth represents a height of the current block.

36. The method of claim 35, wherein in response to *N* = 1, offsetX and offsetY satisfy at least one of: $offsetX = uiWidth + iDistHor - 1 and offsetY = - iDistVer - 1 ;$ $offsetX = - iDistHor - 1 and offsetY = - iDistVer - 1 ;$ or $offsetX = - iDistHor - 1 and offsetY = uiHeigth + iDistVer - 1 .$

37. The method of claim 10, wherein the spatial non-neighbouring position satisfies at least one of:
being located on the top right of the current block;
being located directly above the current block;
being located on the top left of the current block;
being located directly on the left of the current block; or
being located on the bottom left of the current block.

38. The method of claim 1, wherein the prediction value is determined based on direction parameters of *K* candidate blocks, and the *K* candidate blocks are determined based on the one or more candidate positions, wherein *K* is a positive integer greater than 3.

39. The method of claim 38, wherein a value of *K* is greater than or equal to 5.

40. The method of claim 1, wherein the prediction value is determined based on a set of candidate blocks, the set of candidate blocks is determined based on the one or more candidate positions, and the set of candidate blocks does not comprise duplicate candidate blocks.

41. The method of claim 1, wherein the prediction value is determined based on arithmetic averaging or weighted averaging of the direction parameter to be merged.

42. The method of claim 41, wherein the direction parameter to be merged is a direction parameter of at least one candidate block, and a weight of the direction parameter of the at least one candidate block is determined based on at least one of:
a distance between the at least one candidate block and the current block; or
a number of target samples corresponding to the at least one candidate block, wherein the target samples are required for determining the direction parameter in a DIMD mode.

43. The method of claim 42, wherein the number of target samples corresponding to the at least one candidate block is used for determining an initial weight of the direction parameter of the at least one candidate block, and the distance between the at least one candidate block and the current block is used for adjusting the initial weight to determine a target weight of the direction parameter of the at least one candidate block.

44. The method of claim 42 or 43, wherein a direction parameter of each candidate block among the at least one candidate block comprises an amplitude corresponding to an intra prediction mode (IPM), and the amplitude corresponding to the IPM is an amplitude normalized based on a size of the candidate block.

45. The method of claim 29, wherein a value range of *N* is determined based on the size of the current block.

46. The method of claim 45, wherein
in response to the size of the current block being a first size, the value range of *N* is a first value range; and
in response to the size of the current block being a second size, the value range of *N* is a second value range;
wherein the first size is less than the second size, and the first value range is less than the second value range.

47. The method of claim 1, wherein
in response to a size of the current block being less than a preset size, a spatial neighbouring position does not comprise at least one of:
a first position corresponding to 1/4 of a height of the current block;
a second position corresponding to 1/4 of a width of the current block;
a third position corresponding to 3/4 of the height of the current block;
a fourth position corresponding to 3/4 of the width of the current block;
a fifth position corresponding to 1/2 of the height of the current block; or
a sixth position corresponding to 1/2 of the width of the current block.

48. The method of claim 1, wherein a search order between the one or more candidate positions is determined based on distances between each of the one or more candidate positions and the current block.

49. The method of claim 48, wherein the distances between each of the one or more candidate positions and the current block are determined based on distances between each of the one or more candidate positions and a top-left corner position of the current block.

50. The method of claim 48 or 49, wherein the one or more candidate positions have a search order based on the distances between each of the one or more candidate positions and the current block and are ranked in an ascending order of the distances.

51. The method of claim 50, wherein
in response to two candidate positions among the one or more candidate positions having equal distances from the current block, a candidate position located on the left of the current block in the two candidate positions is searched before a candidate position located above the current block in the two candidate positions; or
in response to two candidate positions among the one or more candidate positions having equal distances from the current block, a candidate position located above the current block in the two candidate positions is searched before a candidate position located on the left of the current block in the two candidate positions.

52. The method of claim 1, wherein the prediction value is determined based on a direction parameter of at least one candidate block in a set of candidate blocks, the set of candidate blocks is determined based on a plurality of search positions, the set of candidate blocks comprises *M* candidate blocks, and ranking of the *M* candidate blocks in the set of candidate blocks is determined based on distances between each of the *M* candidate blocks and the current block, wherein *M* is a positive integer greater than or equal to 1.

53. The method of claim 52, wherein
in response to two candidate blocks among the *M* candidate blocks having equal distances from the current block, a candidate block located on the left of the current block in the two candidate blocks is ranked higher than a candidate block located above the current block in the two candidate blocks; or
in response to two candidate blocks among the *M* candidate blocks having equal distances from the current block, a candidate block located above the current block in the two candidate blocks is ranked higher than a candidate block located on the left of the current block in the two candidate blocks.

54. The method of claim 52, wherein the *M* candidate blocks comprise a first candidate block, and a distance between the first candidate block and the current block is determined based on a difference between a first distance and a second distance, wherein the first distance represents a horizontal distance between a top-left corner position of the first candidate block and a top-left corner position of the current block, and the second distance represents a vertical distance between the top-left corner position of the first candidate block and the top-left corner position of the current block.

55. The method of claim 54, wherein the distance between the first candidate block and the current block satisfies: 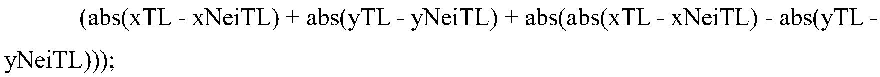 (abs(xTL - xNeiTL) + abs(yTL - yNeiTL) + abs(abs(xTL - xNeiTL) - abs(yTL - yNeiTL))): wherein xTL represents a horizontal coordinate of the top-left corner position of the current block, yTL represents a vertical coordinate of the top-left corner position of the current block, xNeiTL represents a horizontal coordinate of the top-left corner position of the first candidate block, yNeiTL represents a vertical coordinate of the top-left corner position of the first candidate block, and abs represents an operation for obtaining an absolute value.

56. The method of claim 1, wherein the direction parameter is stored in units of a coding block, or the direction parameter is stored in units of a picture block of a fixed size in a current picture.

57. The method of claim 56, wherein a size of the picture block is determined based on a resolution of the current picture.

58. The method of claim 1, wherein the prediction value is determined based on a set of candidate blocks, the set of candidate blocks is determined based on the one or more candidate positions, and whether two candidate blocks in the set of candidate blocks are duplicate is determined based on at least one of:
whether the two candidate blocks correspond to a same coding block; or
whether a difference between direction parameters of the two candidate blocks satisfies a preset condition.

59. The method of claim 58, wherein the two candidate blocks comprise a first candidate block and a second candidate block, the first candidate block corresponds to a first histogram of gradients, the second candidate block corresponds to a second histogram of gradients, *S* IPMs with highest amplitudes in the first histogram of gradients form a first set, *S* IPMs with highest amplitudes in the second histogram of gradients form a second set, and the difference between the direction parameters of the two candidate blocks is determined based on a difference between the first set and the second set, wherein *S* is a positive integer greater than or equal to 1.

60. The method of claim 59, wherein the difference between the first set and the second set is determined based on at least one of:
a number of identical IPMs in the first set and the second set; or
a difference between a first IPM in the first set and a second IPM in the second set,
wherein the first set does not comprise the second IPM, and the second set does not comprise the first IPM.

61. The method of claim 60, wherein
in response to the number of identical IPMs in the first set and the second set being greater than or equal to a second threshold, the two candidate blocks are duplicate; and/or
in response to the difference between the first IPM and the second IPM being less than or equal to a third threshold, the two candidate blocks are duplicate; and/or
in response to a ratio of an intersection of the first set and the second set to a union of the first set and the second set being greater than or equal to a fourth threshold, the two candidate blocks are duplicate.

62. The method of claim 1, wherein at least one of the following is determined based on a size of the current block:
a number of the direction parameter to be merged; or
a number of IPMs for determining the prediction value.

63. The method of claim 10, wherein
the spatial non-neighbouring position is determined based on a first mapping relationship pre-established, wherein the first mapping relationship is a mapping relationship between an index of the spatial non-neighbouring position and a coordinate of the spatial non-neighbouring position; or
the spatial non-neighbouring position is determined based on a first mapping relationship and a second mapping relationship pre-established, wherein the first mapping relationship is a mapping relationship between an index of the spatial non-neighbouring position and a search distance, and the second mapping relationship is a mapping relationship between the index of the spatial non-neighbouring position and a search direction.

64. The method of claim 63, wherein
the search distance is a distance between the spatial non-neighbouring position and a top-left corner position of the current block; and/or
the search direction is a direction of the spatial non-neighbouring position relative to the current block.

65. The method of claim 1, wherein the direction parameter comprises:
a set of IPMs and amplitudes corresponding to the set of IPMs; or
information of a histogram of gradients.

66. The method of claim 1, wherein determining the prediction value of the current block according to the direction parameter to be merged comprises:
determining a prediction direction corresponding to the current block according to the direction parameter to be merged; and
determining the prediction value of the current block according to the prediction direction corresponding to the current block.

67. An encoding method, applied to an encoder and comprising:
determining whether a decoder-side intra mode derivation (DIMD) merge mode is to be used for encoding a current block;
determining, according to one or more candidate positions, a direction parameter to be merged, in response to the DIMD merge mode being to be used for encoding the current block, wherein the one or more candidate positions are located in a reconstructed region of a picture where the current block is located; and
determining a prediction value of the current block according to the direction parameter to be merged.

68. The method of claim 67, further comprising:
signalling a first indication parameter in a bitstream, wherein the first indication parameter indicates whether the DIMD merge mode is to be used for encoding the current block.

69. The method of claim 67, wherein determining whether the DIMD merge mode is to be used for encoding the current block comprises:
determining that the DIMD merge mode is not to be used for decoding the current block, in response to the one or more candidate positions having no corresponding candidate block and/or candidate blocks corresponding to the one or more candidate positions being unavailable;
and/or
determining that the DIMD merge mode is to be used for decoding the current block, in response to the one or more candidate positions having a corresponding candidate block.

70. The method of claim 67, wherein determining whether the DIMD merge mode is to be used for encoding the current block comprises:
determining, according to whether a size of the current block satisfies a first condition, whether the DIMD merge mode is to be used for encoding the current block.

71. The method of claim 70, wherein determining, according to whether the size of the current block satisfies the first condition, whether the DIMD merge mode is to be used for encoding the current block comprises:
determining that the DIMD merge mode is to be used for decoding the current block, in response to a target size being less than or equal to a first threshold; and/or
determining that the DIMD merge mode is not to be used for decoding the current block, in response to the target size being greater than the first threshold;
wherein the target size is determined based on the size of the current block.

72. The method of claim 71, wherein the target size is determined based on at least one of:
a width of the current block;
a height of the current block;
a product of the width and the height of the current block;
a maximum value of the width and the height of the current block; or
a minimum value of the width and the height of the current block.

73. The method of claim 71, wherein the first threshold is a pre-defined fixed value.

74. The method of claim 71, further comprising:
signalling first information in a bitstream, wherein the first information is used for determining the first threshold.

75. The method of claim 74, wherein the first information is determined based on a video resolution.

76. The method of claim 74, wherein the first information has a plurality of candidate values, the plurality of candidate values correspond to a plurality of thresholds respectively, and the first threshold corresponds to a current value of the first information.

77. The method of claim 76, wherein the plurality of candidate values comprise at least one of:
a first value, wherein a threshold corresponding to the first value is 32 × 32;
a second value, wherein a threshold corresponding to the second value is 16 × 32; or
a third value, wherein a threshold corresponding to the third value is 16 × 16.

78. The method of claim 67, wherein the one or more candidate positions comprise a spatial neighbouring position and/or a spatial non-neighbouring position.

79. The method of claim 78, wherein the one or more candidate positions comprise only the spatial non-neighbouring position.

80. The method of claim 78, wherein a priority of the spatial non-neighbouring position is higher than a priority of the spatial neighbouring position.

81. The method of claim 80, wherein the priority of the spatial non-neighbouring position being higher than the priority of the spatial neighbouring position comprises at least one of:
the spatial non-neighbouring position being preferentially searched compared with the spatial neighbouring position; or
a candidate block corresponding to the spatial non-neighbouring position being preferentially stored in a set of candidate blocks compared with a candidate block corresponding to the spatial neighbouring position, wherein the set of candidate blocks is used for determining the prediction value.

82. The method of claim 81, wherein the set of candidate blocks comprises *Q* candidate positions, and in response to a number of candidate blocks corresponding to the spatial non-neighbouring position being less than *Q*, the candidate block corresponding to the spatial neighbouring position is stored in the set of candidate blocks, wherein *Q* is a positive integer greater than or equal to 1.

83. The method of claim 67, wherein the one or more candidate positions are determined based on a size of the current block and a size of a candidate block around the current block, and the one or more candidate positions do not comprise a spatial non-neighbouring position of the current block.

84. The method of claim 83, wherein the one or more candidate positions comprise seven candidate positions.

85. The method of claim 67, wherein determining whether the DIMD merge mode is to be used for encoding the current block comprises:
determining, according to a first intra prediction mode (IPM) and a second IPM, whether the DIMD merge mode is to be used, wherein the first IPM is determined based on a first target direction parameter, the first target direction parameter is determined based on the one or more candidate positions, the second IPM is determined based on a second target direction parameter, and the second target direction parameter is determined based on a DIMD mode.

86. The method of claim 85, wherein
in the first target direction parameter, an amplitude corresponding to the first IPM is highest; and/or
in the second target direction parameter, an amplitude corresponding to the second IPM is highest.

87. The method of claim 85 or 86, wherein determining, according to the first IPM and the second IPM, whether the DIMD merge mode is to be used comprises:
determining, according to a difference between a mode index of the first IPM and a mode index of the second IPM, to enable or disable the DIMD merge mode.

88. The method of claim 87, wherein determining, according to the difference between the mode index of the first IPM and the mode index of the second IPM, to enable or disable the DIMD merge mode comprises:
disabling the DIMD merge mode, in response to the difference between the mode index of the first IPM and the mode index of the second IPM being less than a preset threshold or falling within a preset range.

89. The method of claim 67, further comprising:
determining a cost corresponding to the DIMD merge mode according to the prediction value and an original value of the current block;
adding the DIMD merge mode to a set of candidate modes, in response to the cost corresponding to the DIMD merge mode satisfying a preset condition; and
determining a target prediction mode for the current block by performing rate-distortion optimization (RDO) on prediction modes in the set of candidate modes.

90. The method of claim 89, wherein the preset condition comprises: the cost corresponding to the DIMD merge mode is less than or equal to a target cost, wherein the target cost is determined based on a cost corresponding to a first prediction mode in the set of candidate modes, and in the set of candidate modes, the cost corresponding to the first prediction mode is maximum.

91. The method of claim 90, wherein
the target cost is equal to the cost corresponding to the first prediction mode; or
the target cost is equal to a product of the cost corresponding to the first prediction mode and a scaling factor.

92. The method of any one of claims 89 to 91, wherein the cost corresponding to the DIMD merge mode is determined based on a sum of absolute transformed differences (SATD) or a sum of absolute differences (SAD) between the prediction value and the original value.

93. The method of claim 67, wherein the prediction value is determined based on direction parameters of one or more candidate blocks, the one or more candidate blocks are determined based on a cost corresponding to a candidate block in a set of candidate blocks, and the set of candidate blocks is determined based on the one or more candidate positions.

94. The method of claim 93, wherein the cost corresponding to the candidate block in the set of candidate blocks is determined based on a prediction value of a template region of the current block and a reconstructed value of the template region, and the prediction value of the template region is determined based on a direction parameter of the candidate block in the set of candidate blocks.

95. The method of claim 94, wherein the cost corresponding to the candidate block in the set of candidate blocks is determined based on an SATD or an SAD between the prediction value of the template region and the reconstructed value of the template region.

96. The method of any one of claims 93 to 95, wherein
the one or more candidate blocks are candidate blocks corresponding to minimum costs in the set of candidate blocks; or
the one or more candidate blocks are candidate blocks obtained by ranking candidate blocks in the set of candidate blocks based on costs.

97. The method of any one of claims 93 to 96, wherein the prediction value of the current block is determined based on a target direction parameter, the target direction parameter is determined based on weighted averaging of the direction parameters of the one or more candidate blocks, and weights of the one or more candidate blocks are determined based on costs corresponding to the one or more candidate blocks.

98. The method of any one of claims 93 to 96, wherein the prediction value of the current block is determined based on weighted averaging of candidate prediction values of the one or more candidate blocks, and weights of the one or more candidate blocks are determined based on costs corresponding to the one or more candidate blocks.

99. The method of claim 97 or 98, wherein the greater the costs corresponding to the one or more candidate blocks, the smaller the weights of the one or more candidate blocks.

100. The method of claim 78, wherein the spatial non-neighbouring position is determined based on a pre-defined position.

101. The method of claim 100, wherein the pre-defined position is determined based on at least one of:
a position of the current block;
a pre-defined size;
second information for adjusting the pre-defined size; or
third information for adjusting a number of the pre-defined positions.

102. The method of claim 101, further comprising:
signalling the second information and/or the third information in a bitstream.

103. The method of claim 102, wherein the second information and/or the third information is determined based on a video resolution.

104. The method of claim 103, wherein the pre-defined size is determined based on a size of the current block.

105. The method of claim 104, wherein the pre-defined size comprises a pre-defined horizontal size and/or a pre-defined vertical size.

106. The method of claim 105, wherein
the pre-defined horizontal size is *N* times a width of the current block; and/or
the pre-defined vertical size is *N* times a height of the current block;
wherein *N* is a positive integer greater than or equal to 1.

107. The method of claim 106, wherein a value of *N* is less than or equal to 4.

108. The method of claim 106, wherein a value of *N* comprises 1, 2, 3, and 4.

109. The method of claim 67, wherein a number of the one or more candidate positions is greater than 13.

110. The method of claim 67, wherein a number of the one or more candidate positions is greater than or equal to 31.

111. The method of claim 67, wherein a spatial non-neighbouring position satisfies at least one of:
an absolute value of a horizontal offset of the spatial non-neighbouring position from a top-left corner position of the current block being equal to iDistHor + 1; or
an absolute value of a vertical offset of the spatial non-neighbouring position from the top-left corner position of the current block being equal to iDistVer + 1;
wherein iDistHor is equal to a pre-defined horizontal size, and iDistVer is equal to a pre-defined vertical size.

112. The method of claim 111, wherein the spatial non-neighbouring position satisfies: $xNb = xTL + offsetX and yNb = yTL + offsetY ;$ wherein offsetX and offsetY satisfy at least one of: $offsetX = uiWidth + iDistHor - 1 and offsetY = - iDistVer - 1 ;$ $offsetX = uiWidth ≫ 1 and offsetY = - iDistVer - 1 ;$ $offsetX = - iDistHor - 1 and offsetY = - iDistVer - 1 ;$ $offsetX = - iDistHor - 1 and offsetY = uiHeigth ≫ 1 ;$or $offsetX = - iDistHor - 1 and offsetY = uiHeigth + iDistVer - 1 ;$ wherein xNb represents a horizontal coordinate of the spatial non-neighbouring position, yNb represents a vertical coordinate of the spatial non-neighbouring position, xTL represents a horizontal coordinate of the top-left corner position of the current block, yTL represents a vertical coordinate of the top-left corner position of the current block, uiWidth represents a width of the current block, and uiHeigth represents a height of the current block.

113. The method of claim 112, wherein in response to *N* = 1, offsetX and offsetY satisfy at least one of: $offsetX = uiWidth + iDistHor - 1 and offsetY = - iDistVer - 1 ;$ $offsetX = - iDistHor - 1 and offsetY = - iDistVer - 1 ;$ or $offsetX = - iDistHor - 1 and offsetY = uiHeigth + iDistVer - 1 .$

114. The method of any one of claims 67 to 113, wherein a spatial non-neighbouring position satisfies at least one of:
being located on the top right of the current block;
being located directly above the current block;
being located on the top left of the current block;
being located directly on the left of the current block; or
being located on the bottom left of the current block.

115. The method of claim 67, wherein the prediction value is determined based on direction parameters of *K* candidate blocks, and the *K* candidate blocks are determined based on the one or more candidate positions, wherein *K* is a positive integer greater than 3.

116. The method of claim 115, wherein a value of *K* is greater than or equal to 5.

117. The method of claim 67, wherein the prediction value is determined based on a set of candidate blocks, the set of candidate blocks is determined based on the one or more candidate positions, and the set of candidate blocks does not comprise duplicate candidate blocks.

118. The method of claim 67, wherein the prediction value is determined based on a target direction parameter, the target direction parameter is determined based on arithmetic averaging or weighted averaging of the direction parameter to be merged, and the direction parameter to be merged is determined based on the one or more candidate positions.

119. The method of claim 118, wherein the direction parameter to be merged is a direction parameter of at least one candidate block, and a weight of the direction parameter of the at least one candidate block is determined based on at least one of:
a distance between the at least one candidate block and the current block; or
a number of target samples corresponding to the at least one candidate block, wherein the target samples are required for determining the direction parameter in a DIMD mode.

120. The method of claim 119, wherein the number of target samples corresponding to the at least one candidate block is used for determining an initial weight of the direction parameter of the at least one candidate block, and the distance between the at least one candidate block and the current block is used for adjusting the initial weight to determine a target weight of the direction parameter of the at least one candidate block.

121. The method of claim 119 or 120, wherein a direction parameter of each candidate block among the at least one candidate block comprises an amplitude corresponding to an IPM, and the amplitude corresponding to the IPM is an amplitude normalized based on a size of the candidate block.

122. The method of claim 106, wherein a value range of *N* is determined based on the size of the current block.

123. The method of claim 122, wherein
in response to the size of the current block being a first size, the value range of *N* is a first value range; and
in response to the size of the current block being a second size, the value range of *N* is a second value range;
wherein the first size is less than the second size, and the first value range is less than the second value range.

124. The method of claim 67, wherein
in response to a size of the current block being less than a preset size, a spatial neighbouring position does not comprise at least one of:
a first position corresponding to 1/4 of a height of the current block;
a second position corresponding to 1/4 of a width of the current block;
a third position corresponding to 3/4 of the height of the current block;
a fourth position corresponding to 3/4 of the width of the current block;
a fifth position corresponding to 1/2 of the height of the current block; or
a sixth position corresponding to 1/2 of the width of the current block.

125. The method of claim 67, wherein a search order between the one or more candidate positions is determined based on distances between each of the one or more candidate positions and the current block.

126. The method of claim 125, wherein the distances between each of the one or more candidate positions and the current block are determined based on distances between each of the one or more candidate positions and a top-left corner position of the current block.

127. The method of claim 125 or 126, wherein the one or more candidate positions have a search order based on the distances between each of the one or more candidate positions and the current block and are ranked in an ascending order of the distances.

128. The method of claim 127, wherein
in response to two candidate positions among the one or more candidate positions having equal distances from the current block, a candidate position located on the left of the current block in the two candidate positions is searched before a candidate position located above the current block in the two candidate positions; or
in response to two candidate positions among the one or more candidate positions having equal distances from the current block, a candidate position located above the current block in the two candidate positions is searched before a candidate position located on the left of the current block in the two candidate positions.

129. The method of claim 67, wherein the prediction value is determined based on a direction parameter of at least one candidate block in a set of candidate blocks, the set of candidate blocks is determined based on the one or more candidate positions, the set of candidate blocks comprises *M* candidate blocks, and ranking of the *M* candidate blocks in the set of candidate blocks is determined based on distances between each of the *M* candidate blocks and the current block, wherein *M* is a positive integer greater than or equal to 1.

130. The method of claim 129, wherein
in response to two candidate blocks among the *M* candidate blocks having equal distances from the current block, a candidate block located on the left of the current block in the two candidate blocks is ranked higher than a candidate block located above the current block in the two candidate blocks; or
in response to two candidate blocks among the *M* candidate blocks having equal distances from the current block, a candidate block located above the current block in the two candidate blocks is ranked higher than a candidate block located on the left of the current block in the two candidate blocks.

131. The method of claim 129, wherein the *M* candidate blocks comprise a first candidate block, and a distance between the first candidate block and the current block is determined based on a difference between a first distance and a second distance, wherein the first distance represents a horizontal distance between a top-left corner position of the first candidate block and a top-left corner position of the current block, and the second distance represents a vertical distance between the top-left corner position of the first candidate block and the top-left corner position of the current block.

132. The method of claim 131, wherein the distance between the first candidate block and the current block satisfies: 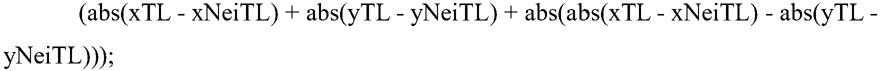 (abs(xTL - xNeiTL) + abs(yTL - yNeiTL) + abs(abs(xTL - xNeiTL) - abs(yTL - yNeiTL))); wherein xTL represents a horizontal coordinate of the top-left corner position of the current block, yTL represents a vertical coordinate of the top-left corner position of the current block, xNeiTL represents a horizontal coordinate of the top-left corner position of the first candidate block, yNeiTL represents a vertical coordinate of the top-left corner position of the first candidate block, and abs represents an operation for obtaining an absolute value.

133. The method of claim 67, wherein the direction parameter is stored in units of a coding block, or the direction parameter is stored in units of a picture block of a fixed size in a current picture.

134. The method of claim 133, wherein a size of the picture block is determined based on a resolution of the current picture.

135. The method of claim 67, wherein the prediction value is determined based on a set of candidate blocks, the set of candidate blocks is determined based on the one or more candidate positions, and whether two candidate blocks in the set of candidate blocks are duplicate is determined based on at least one of:
whether the two candidate blocks correspond to a same coding block; or
whether a difference between direction parameters of the two candidate blocks satisfies a preset condition.

136. The method of claim 135, wherein the two candidate blocks comprise a first candidate block and a second candidate block, the first candidate block corresponds to a first histogram of gradients, the second candidate block corresponds to a second histogram of gradients, *S* IPMs with highest amplitudes in the first histogram of gradients form a first set, *S* IPMs with highest amplitudes in the second histogram of gradients form a second set, and the difference between the direction parameters of the two candidate blocks is determined based on a difference between the first set and the second set, wherein *S* is a positive integer greater than or equal to 1.

137. The method of claim 136, wherein the difference between the first set and the second set is determined based on at least one of:
a number of identical IPMs in the first set and the second set; or
a difference between a first IPM in the first set and a second IPM in the second set,
wherein the first set does not comprise the second IPM, and the second set does not comprise the first IPM.

138. The method of claim 137, wherein
in response to the number of identical IPMs in the first set and the second set being greater than or equal to a second threshold, the two candidate blocks are duplicate; and/or
in response to the difference between the first IPM and the second IPM being less than or equal to a third threshold, the two candidate blocks are duplicate; and/or
in response to a ratio of an intersection of the first set and the second set to a union of the first set and the second set being greater than or equal to a fourth threshold, the two candidate blocks are duplicate.

139. The method of claim 67, wherein at least one of the following is determined based on a size of the current block:
a number of the direction parameter to be merged, wherein the direction parameter to be merged is determined based on the one or more candidate positions; or
a number of IPMs for determining the prediction value.

140. The method of claim 67, wherein
a spatial non-neighbouring position is determined based on a first mapping relationship pre-established, wherein the first mapping relationship is a mapping relationship between an index of the spatial non-neighbouring position and a coordinate of the spatial non-neighbouring position; or
a spatial non-neighbouring position is determined based on a first mapping relationship and a second mapping relationship pre-established, wherein the first mapping relationship is a mapping relationship between an index of the spatial non-neighbouring position and a search distance, and the second mapping relationship is a mapping relationship between the index of the spatial non-neighbouring position and a search direction.

141. The method of claim 140, wherein
the search distance is a distance between the spatial non-neighbouring position and a top-left corner position of the current block; and/or
the search direction is a direction of the spatial non-neighbouring position relative to the current block.

142. The method of claim 67, wherein the direction parameter comprises:
a set of IPMs and amplitudes corresponding to the set of IPMs; or
information of a histogram of gradients.

143. The method of claim 67, wherein determining the prediction value of the current block according to the direction parameter to be merged comprises:
determining a prediction direction corresponding to the current block according to the direction parameter to be merged; and
determining the prediction value of the current block according to the prediction direction corresponding to the current block.

144. A decoder, comprising:
a first determining unit configured to determine a prediction parameter of a current block, wherein the prediction parameter of the current block comprises a first indication parameter;
a second determining unit configured to determine, according to one or more candidate positions, a direction parameter to be merged, in response to the first indication parameter indicating that a decoder-side intra mode derivation (DIMD) merge mode is to be used for decoding the current block, wherein the one or more candidate positions are located in a reconstructed region of a picture where the current block is located; and
a third determining unit configured to determine a prediction value of the current block according to the direction parameter to be merged.

145. A decoder, comprising:
a memory configured to store a computer program; and
a processor configured to perform the method of any one of claims 1 to 66 when executing the computer program.

146. An encoder, comprising:
a first determining unit configured to determine whether a decoder-side intra mode derivation (DIMD) merge mode is to be used for encoding a current block;
a second determining unit configured to determine, according to one or more candidate positions, a direction parameter to be merged, in response to the DIMD merge mode being to be used for encoding the current block, wherein the one or more candidate positions are located in a reconstructed region of a picture where the current block is located; and
a third determining unit configured to determine a prediction value of the current block according to the direction parameter to be merged.

147. An encoder, comprising:
a memory configured to store a computer program; and
a processor configured to perform the method of any one of claims 67 to 143 when executing the computer program.

148. A computer-readable storage medium storing a computer program which, when executed, is operable to implement the method of any one of claims 1 to 66 or the method of any one of claims 67 to 143.

149. A non-volatile computer-readable storage medium storing a bitstream which is generated according to an encoding method for an encoder or decoded according to a decoding method for a decoder, wherein the decoding method is the method of any one of claims 1 to 66, and the encoding method is the method of any one of claims 67 to 143.
